# EUROPEAN PATENT APPLICATION

(11) **EP 1 318 379 A1**
(43) Date of publication of application: **11.06.2003**
(21) Application number: 01963565.5
(22) Date of filing: 10.09.2001
(51) Int. Cl.: G01C 21/00, G08G 1/005

(54) **PATH GUIDE SYSTEM**

(30) Priority: 11.09.2000 JP 2000274613
(71) Applicant: MATSUSHITA ELECTRIC INDUSTRIAL CO., LTD., Kadoma-shi, Osaka 571-8501 (JP)
(72) Inventor: SHIMADA, Takanori, Shinagawa-ku, Tokyo 140-0004 (JP); FURUKAWA, Yoshiyuki c/o YOSHIZAWA, Kita-ku, Tokyo 114-0001 (JP)
(74) Representative: Betten & Resch
(86) International application number: JP0107845
(87) International publication number: WO02023128

(57) **Abstract**

Provided is a route guidance system that provides a route in premises in order to perform service of route guidance in the premises, whic h includes: a rout e guidance apparatus, which is comprised of visible region calculation means that calculates a rang e where a user can see, signpost extraction means that extra cts a signpost to be guided from a visible region, route search means that searches the route from a starting point to a destination, route information generation means that comprises guidance map generation means tha t generates a map for guidance and guidance sentence generation means that generat es the guidance sentence, route lead ing means that obtains current positional information to sen d appropriate guidance information to a portable terminal, and position determination means that performs coordinate conversion to inf ormation from a position detection apparatus of the user; a po rtable terminal a pparatus including a user interface, which displays an image or a route guidance sentence; a position detection apparatus that obtains current positional information of the user; a map DB that stores data/signpost information regarding the route; a guidance sentence DB that stores basic data for generating the guidance sentence; and route information data that stares guidance data output from the route information generation means.

## Description

### BACKGROUND OF THE INVENTON

### Field of the Invention

The present invention relates to an apparatus and a system for provid ing a person, who is not good at reading a map, with guidance including land mark information and route information regarding a direction where the moving person needs to proceed when moving in an archi tectural structure such as a building with a method using an image or the like such that the user does not become lost in an open space. Further, the present invention also relates to a calculation apparatus of a visible region and a program thereof, which are necessary in extracting a land mark to support the movement of the moving person.

### Description of the Prior Art

In the prior art, there has existe d the following known references regarding a system that performs route guidance in premises or in a building.

The invention disclosed in Japanese Patent Laid-Open No. 8-190688 is one that provides a pede strian in the prem ises, who is a pedestrian having difficulty to obtain whereabouts of himself/hersetf or guidance information to a destination, of appropriate guidance information. A user reads information of radio wave reaction apparatuses embedded in the premises using an information reader, and the information to be output changes according to user's information set in a user in formation setting section although its contents are fixed. Further, a pedestrian guidance apparatus can be provided inexpensively.

Furthermore, in the invention disclosed in Japanese Patent Laid-Open No. 11-276516, it is one that provides a vision-impaired person in a train station with information such as a route to a destination and a landmark through a portable terminal by audio input/output, detects the position of the handicapped person by a tag, and leads/guides the vision-impaired person safely and accurately.

However, the following problems have not been solved in the prior art. There have been the problems:
(1) In the prior art, a movement instruction at an int ersection such as 'Turn right at the intersection of...' is shown based on route data. But, in the premises in the case of di agonally crossing an open space such as an atr ium, a vault and a concourse although giving route guidance based on landmark s is more simple, the prior art gives a guidance so as to go around the sides of the open space, for example, along the route data on the map;
(2) In the route guidance using the portable terminal of a low resolution and a small screen, a color image is hard to watch when it is directl y sent to the termi nal. In addition, the color image requires a long transfer time due to a large data quantity. Further, in an ima ge of low compress ion effect even by a binary image, many route guidance points cannot be displaye d when the route becomes long;
(3) In the case of guiding a route with a map divided in frames, there are individu al variations as to where to display the route to be more unders tandable, some users feel that the route is hard to read if it is always displayed in the center because of lack of contin uity between fram es and other user s feel it is better to displ ay the route alway s in the center, therefore, display must be changed for each user;
(4) In the case of performing route leading, since current positional information of the user from position detection means includes an error, the current position goes off from a position where the user actually is when the current position is guided based on the positional information from the position detection means. Further, when a traveling direction of the route is guided based on the positional information from the position detection means, it is different from the actual traveling direction of the user; and
(5) In the case of performing position detection using the tag, there is a case where a reader cann ot detect the tag , and thus appropriate route leading cannot be made.

Furthermore, as shown in Japanese Patent Laid-Open No. 9-167297 'Intersection guidance apparatus', in a system that performs route gu idance taking in consideration things that come into view, there is a case where an intersection guided cannot be seen from the current position in guiding information regarding the intersection such as "Turn right at the next intersection' in a car navigation system. In this case , whether or not a range of vision from the current position to the intersection guided is blocked is calculated, and the guidance is announced at the point when a veh icle has traveled to a point where vision is not blocked.

However, in Japa nese Patent Laid -Open No. 9-1672 97, whether or not a straight line from the current posit ion to the intersection crosses a polygon, which constitutes landmarks near the intersec tion is only deter mined, and since this is not a processing to determine what is in the range of vision, it is impossible to extract the landm ark in the range of vision and guide the route utilizing the landmark.

Further, as a visible region calculation algorithm in the case of a plurality of polygons as shown in 'Computational geometry and geographical information processing' (the second edition) (4.6.2. problem of visibility), when a set of n pieces of line segments, which do not cross with each other except for an end point, and a viewpoint are given, there exists a method that calculates by a task of O(n log n) assuming that the sum of sides of all polygons by a plan e scaning method is n, in which a half line from the viewpoint is made rotate once. A processing outline is shown as follows. In the processing, the visible region is calculated while finding the sets of line segments (S₀, S₁, S₂,...).

(Pre-processing) The end points that constitute each line segment are arranged in an argument order. Herein, the argument is an ang le formed by a hal f line 1 from the viewpoint, which shows a reference direction, and a half line drawn from the viewpoint to the end point of the line segment. A result where the end poi nts of the line segments are arran ged in the argument order is shown as L, and the number of L elements is shown as N. An o rder is put to th e end points of e ach line segment in an anti-clockwise order around the viewpoint, which is defined as an origin and an ending point. Further, the L elements can be brought out in the order where they have been arranged from the natural number of 0.
(1) The set S₀ of the first line segments that cross the half line 1 from the viewpoint, which, shows a reference direction, is obta ined. Among line segments that cross the half line 1, an inters ecting point with a line segment nearest the viewpoint is stored as an origin Ps of a visible polygon.
(2) It is assumed that i=0.
(3) The i-th element of L is broug ht out. If the line segment having the i-th element as the end point is included in S₁, the line segment is pulled out from Sᵢ, and the line segment is added if it is not incl uded in Sᵢ. The result is set as Sᵢ₊₁.
   There exists the foregoing method. Assuming from the foregoing, the processing is considered to proceed as follows. Specifically, the line segments of Sᵢ₊₁ are sorted from the one nearest the viewpoint, that is, from the one having the intersecting point with the half line drawn from the viewpoint to an end point of the i-th element, which is nearest the viewpoint.
   i) The followings are performed when the number of the L elements is two or more.
      When the top element is pulled out regarding S₁, the line segment from the origin Ps of the visible polygon to a point Pc of the element is drawn because the element is the ending point. Further, a point Pₓ where the half line from the viewpoint, which passes the element Pc, crosses the line segment being the second element from the top of S₁ is obtained, the line segment from Pc to Pₓ is drawn, and Pₓ is set as Ps.
      When the top element is added regarding S₁, a point Px where the half line from the viewpoint, which passes the element Pc, cross es the line segment being the top element of Sᵢ is obtained because the element is the origin , the line segment from Ps to Pₓ is drawn and the line segment from Pₓ to PC is drawn. Pc is set as Ps.
   ii) The following is performed, because when the number of the L elements is less than two , it is the outer most line segment.

   When the top element is pulled out regarding S₁, the line segment from Ps to the poin t P_{c} of the element is drawn because the element is the ending point of the line segment. P_{c} is set as Ps.
   When the top element is added regarding Sᵢ, the line segment from Ps to Pc is drawn because the element is the origin of the segment. Pc is set as Ps.
(4) i=i+1. That is, i is incremented by one. The processing stops when i=N. (If not, it proceeds to iii).

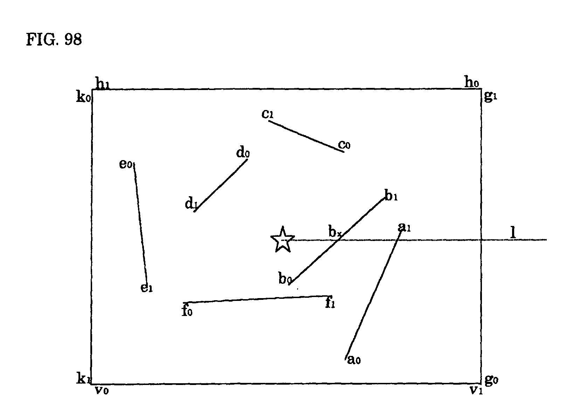

A specific example of the foregoin g processing will be described: assuming the viewpoint shown by 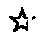 , the half line 1 showing the ref erence direction, and the line segment are given as in Fig. 98 (a line segment having the end points z₀ and z₁ shall be expressed in z), the processing proceeds as follows.

The case of i=0: Since a is includ ed in S₀={b,a,g}, it is pulled out and sorted, and S₁={b,g} is set. Drawing is not performed because a is not the top of a list.

The case of i=1: Since b is includ ed in S₁={b, g}, it is pulled out and sorted, and S₂={g} is set. The line segment bₓb₁gₓ is drawn from bₓ that is Ps, and gₓ is stored as Ps.

The case of i=2: Since g is incl uded in S₂={g}, it is pulled out and so rted, and S₃={} is set. The line se gment gₓg₁ is drawn from gₓ, that is Ps, and g₁ is stored as Ps.

The case of i=3: Since h is not included in S₃={ }, it is added and sorted, and S₄={h} is set . The line segme nt g₁h₀ is drawn from g₁ that is Ps, and h₀ is stored as Ps.

The case of i=4: Since c is not included in S₄={h}, it is added and sorted, and S₅={c,h} is set. The line segment h₀hₓc₀ is drawn from h₀ that is Ps, and c₀ is stored as Ps.

The case of i=5 : Since c is includ ed in S₅={c,h}, it is pulled out and sorted, and S₆={h} is set. The line segment c₀c₁hₖ is drawn from c₀ that is Ps, and hₓ is stored as Ps.

However, in the method by the plane scanning method in which the half li ne from the viewp oint is made rota te once, although n log n is certainly enoug h for the processi ng of (3), S₀ needs to be obtained after an optimal line segment 1 is decided in the processing of (1), and there has existed a problem that a calculation amount in deciding the half line 1 was large and it was not necessarily performed by a small task considering the processing of (1).

The present inve ntion solves the problem, forms the visible region fa ster than before, and provides the visible landmark when the user moves on the route based on the visible region formed even in the case where the open space has an obstacle that blocks the range of vision, and its object is to provide a route guidance system that includes the following a to k:
a. visible region calculation means that calculates a region where the moving person can look over in the open space even in the case where the obstacle exists;
b. route search means that searc hes the route from a starting point to the destination;
c. guidance sente nce generation means that generate s a route guidance sentence;
d. guidance map generation means that generates a map used in the route guidance;
e. signpost extra ction means that extracts a signpos t to be guided out of the foregoing visible region;
f. route information generation means;
g. position determination means that converts the positional information obtained from position detec tion means into a coordinate on the map;
h. route leading means;
i. position detection means that identifies a place where the moving person is;
j. a portable terminal by which the moving person receives the route guidance information; and
k. a route map database where route data is stored.

### Summary of the Invention

The present invention is characterized in that it comprises: the position determination means that detects the current position of the user; the visible region calculation means that cacul ates the range where the user can see from the current position detected; the route search means that searches the route from the starting point to the destination; traveling direction calculation means tha t calculates a traveling direction from the visible region and the route; the signpost extraction means that extracts the signpost to be guided out of the visible region; and route guidance sentence generation means that generates the route guidance sentence of the route found, and the invention is furthe r characterized in that it comprises : image data retrieval me ans that retrieve s binary image data or illustration image data, which are specified to guide a point passing the route; and guidance sentence synthesis means to synthesize guid ance sentences to guide the point to pass, and the invention is further charact erized in that it compris es: a position detection appa ratus that identifies the place where the movi ng person is; rout e leading means 1 that perfo rms route guidanc e every time when a position is detected by a tag; route leading means 2 that perfo rms route guidance by a key operation of the us er; and position estimation means that estim ates the positio n of the user when the tag cannot be read.

With the foregoing, the region where the user can look over is calculated by the positional information of the user, the route guidance that guides the signpost regardless of how the route data is formed on the dat abase is enabled, and it is enabled that the route guidanc e is performed without interruption either by estimatin g the position or the key operation of the user even in the case where the position detection means fails to detect the tag.

Furthermore, the present invention comprises: the visible range calc ulation means that calculates the range where the user can see; target extraction means that extracts a target to be guided out of the visible region; the route search means that searches the route from the starting point to the destination; route information gen eration means inc luding the guidance map generation means that generates the map for guidance and the guidance sentence generation means that generates the guidance sentence; the route guidance apparatus comprises the route leading means that obtain s current positional information to send appropriate guidance information to the portable terminal and the position determination means that converts the information fro m a user's position detection apparatus into a coordinate; a terminal having a user int erface, which dis plays an image or the route guidance sentence; the position detection apparatus that obtains user's current positional information; a map database that stores data regarding the route and landmark information; a guidance sentence database that stores basic data to generate the guidance sentence; and a route information database that stores the guidance data output from the route information generation means.

With the foregoing, the route information easy for the user to understand can be provided.

Further, in the present invention, a visible region calculator is pro vided, in which it calculates a visible range regarding the outermost visible region first and then calculates the visible region in the order where the line segments constituting the obstacles are rearranged based on the argument.

Accordingly, the visible region can be calculated more efficiently than a conventional plan e operation method , and the route guidance processing thus can be efficiently performed.

### Brief Description of the Drawings

Fig. 1 is a configuration view of a route guidance system of the present invention.
Fig. 2 is a sys tem configuration view of the route guidance means 1.
Fig. 3 is a conf iguration view of a portable terminal apparatus.
Fig. 4 is an enti re view of premis es used in embodi ment 2.
Fig. 5 is a flowchart of the route guidance means 1.
Fig. 6 is a view of a visible polygon used in embodiment 1.
Fig. 7 is a view where the visible polygon and a route are superposed near a destination, which is used in embodiment 1.
Fig. 8 is a system configuration view of the route guidance means 2.
Fig. 9 a flowchart of the route guidance means 2.
Fig. 10 is a view used in embodimen t 2, where the vis ible polygon is calculated from E in a premises view.
Fig. 11 is a view of a binary imag e at point U in Fig. 4.
Fig. 12 is a view of a binary imag e at point Q in Fig. 4.
Fig. 13 is a view of a binary imag e at point R in Fig. 4.
Fig. 14 is a view of a binary imag e at point S in Fig. 4.
Fig. 15 is a view of a binary imag e at point T in Fig. 4.
Fig. 16 is a syste m configuration view of a route guid ance means 3.
Fig. 17 is a flowchart of the route guidance means 3.
Fig. 18 is a flow chart of frame map generation mean s 1.
Fig. 19 is a view showing an example of a display screen size of the portable terminal used in embodiment 3.
Fig. 20 is an entire premises view used in embodiment 3.

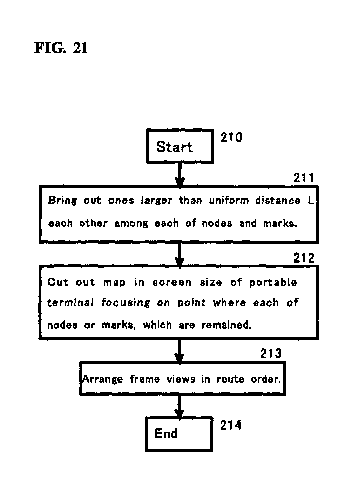

Fig. 21 is a flow chart of frame map generation mean s 2.
Fig. 22 is a view in which the entire premises view used in embodiment 3 is cut into the display screen size of the portable terminal.
Fig. 23 is a view of an illustration image at point U in Fig. 4.
Fig. 24 is a view of an illustratio n image at point Q in Fig. 4.
Fig. 25 is a view of an illustratio n image at point R in Fig. 4.
Fig. 26 is a view of an illustration image at point S in Fig. 4.
Fig. 27 is a view of an illustratio n image at point T in Fig. 4.
Fig. 28 is a flowchart of the route leading means 1.
Fig. 29 is a view showing an example of a route and frame views divided along the route, which are used in emb odiment 6.
Fig. 30 is a flowchart of the route leading means 2.
Fig. 31 is an exemplary view of a table in which tags, coordinate data, and tag ID's are correlated and accumulated.

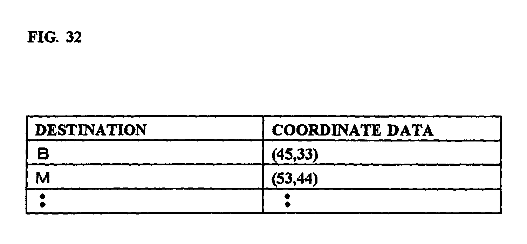

Fig. 32 is an exemplary view of a table in which destinations and coordinate data are correl ated and accumulated.
Fig. 33 is a view showing the guidance sentence.
Fig. 34 is a view showing examples of the route guid ance sentence.
Fig. 35 is an exemplary view of guidance mark data.
Fig. 36 is an exemplary view of the guidance made data.
Fig. 37 is an exemplary view of a table in which passage orders of nodes, the binary image data, and the illustration image data are correlated and accumulated.
Fig. 38 is an exemplary view of a table in which the passage orders of nodes and guidance sentence data are correlated and accumulated.
Fig. 39 is an exemplary view of a frame-route elements row correspondence table.
Fig. 40 is an exemplary view of a tag-node/facilities correspondence table.
Fig. 41 is an exem plary view of the frame-mute elements row correspondence table.
Fig. 42 is an view showing the guidance sentences.
Fig. 43 is an exemplary view of a table where a terminal ID, a terminal status, an ID of the frame view displayed, an ID of the guidance sentence, an ID of the tag picked up immediately previously, an element row of the routes , a raw of the frame view ID's, and a row of the guidance sentence ID's are stored.
Fig. 44 is an exemplary view of a table where the terminal ID, the terminal status, a tag row, the ID of the guidance sentence, and the row of the guidanc e sentence ID's are stored.
Fig. 45 is a vie w showing an exa mple of the guid ance sentence data.
Fig. 46 is a funct ion block diagram of the route guida nce apparatus in embodiment 7.
Fig. 47 is an exemplary view of a table where start ing points and destinations are correlated and accumulated.
Fig. 48 is an exemplary view of a table where posit ions and coordinates thereof are correlated and accumulated.
Fig. 49 is an exemplary view of a table where marks and coordinates thereof are correlated and accumulated.
Fig. 50 is a funct ion block diagram of the route guida nce apparatus in embodiment 8.
Fig. 51 is an exemplary view of a table where point s to pass and image data are correlated and accumulated.
Fig. 52 is an exemplary view of a table where the points to pass and guidance sentence data are corr elated and accumulated.
Fig. 53 is a func tion block view of the route guida nce apparatus in embodiments 9 and 10.
Fig. 54 is a flow chart explaining the processing of the route guidance apparatus in embodiment 9.
Fig. 55 is a flowchart explaining the generation processing of guidance sentence by the guidance sentence generation means in embodiment 13.
Fig. 56 is a flow chart explaining the processing of the route guidance apparatus in embodiment 14.
Fig. 57 is a view showing a part of a function block diagram of the route guidance apparatus in embodiment 15.
Fig. 58 is a flowchart explaining the processing of the route guidance apparatus in embodiment 15.
Fig. 59 is a flow chart explaining the operations of the position determination means, user request obtaining means, and the route leading means.
Fig. 60 is a function block diagram of the route guidance apparatus in embodiment 17.
Fig. 61 is a flo wchart explaining the operation of a visible region calculation apparatus in embodiment 18.
Fig. 62 is a funct ion block diagram of the visible region calculator in embodiment 19.
Fig. 63 is a flowchart explaining the operation of a visible region calculator in embodiment 18.
Fig. 64 is a flow chart explaining an operation when the visible region calculator in embodiment 19 calculates a temporary visible region.
Fig. 65 is an exemplary view showing the relation between the temporary vis ible region and a half line drawn from the viewpoint.
Fig. 66 is an exemplary view showing the relation between the visible regio n and the half line drawn from the viewpoint.
Fig. 67 is a flowchard explaining the operation of the visible region calculator in embodiment 19.
Fig. 68 is an exemplary view showing the relation between a visible polygonal line and a temporary visible polygon.
Fig. 69 is an exemplary view showing the relation between the visible polyg onal line and the temporary visible polygon.
Fig. 70 is a funct ion block diagram of a route information generator in embodiment 20.
Fig. 71 is a flow chart explaining the processing of the route information generator in embodiment 20.
Fig. 72 is a funct ion block diagram of the route guidance system in embodiment 21.
Fig. 73 is a flowchart explaining the operation of the route guidance system in embodiment 21.
Fig. 74 is a flowchart explaining the processing of a route leader in embodiment 22.
Fig. 75 is a function block diagram of the route guidance system in embodiment 23.
Fig. 76 is an exemplary view explaining a state where the starting points and the destinations are correlated and accumulated in the route information database.
Fig. 77 is an exemplary view of a table where the rout es, the maps, and the guidance sentences are correl ated and accumulated.
Fig. 78 is a funct ion block diagram of the route guida nce system in embodiment 24.
Fig. 79 is a view explaining the argument at the end point of the line segment.
Fig. 80 is a block diagram showing a configurat ion example of the route guidance system in embodiment 25.
Fig. 81 is a block configuration view of the route information generation means in embodiment 25.
Fig. 82 is a block configuration view of the route lea ding means in embodiment 25.
Fig. 83 is a flow chart explaining the processing of the route information generation means in embodiment 25.
Fig. 84 is a flow chart explaining the processing of the route leading means in embodiment 26.

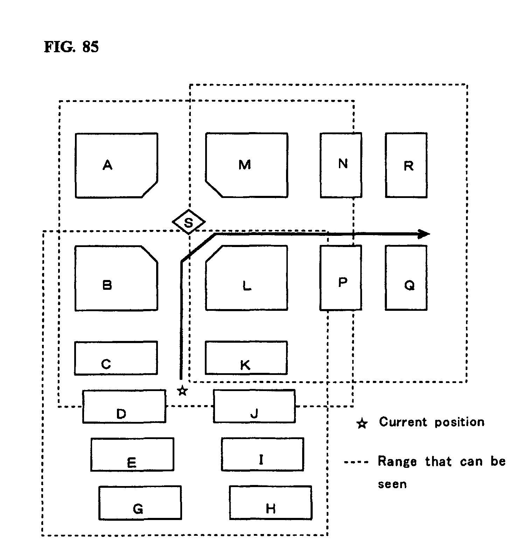

Fig. 85 is an exemplary view of the map that shows the current position of the user and the route to go.

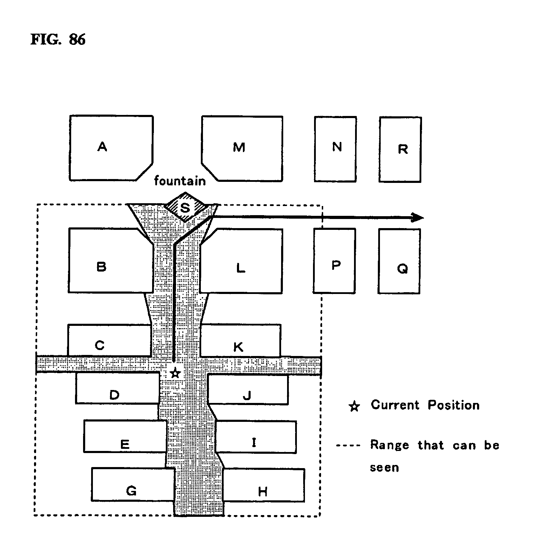

Fig. 86 is an exemplary view of the map that shows the visible region of the user at the starting point.

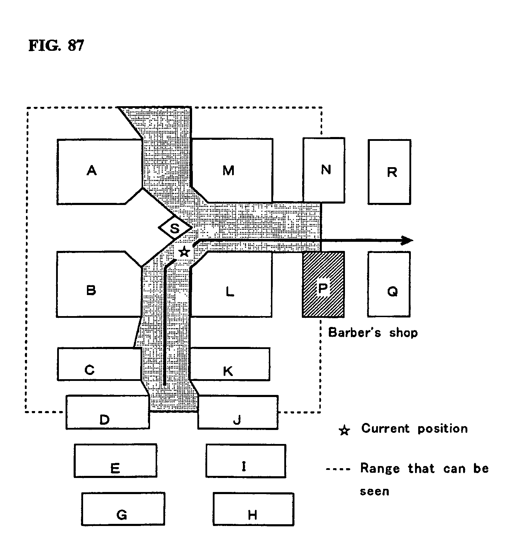

Fig. 87 is an exemplary view of the map that shows the visible region when the user has moved to reach a corner.

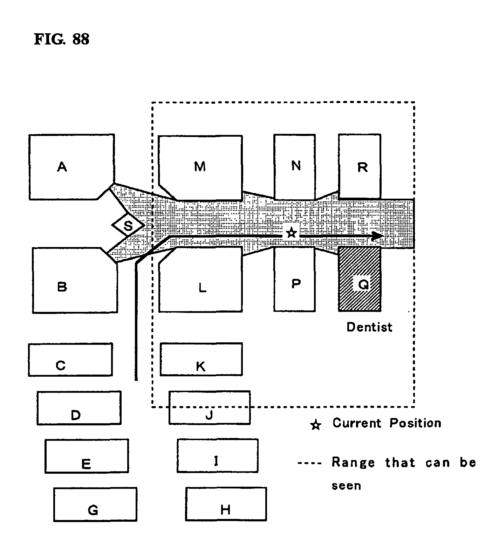

Fig. 88 is an exemplary view of the map that shows the visible region after the user has moved.
Fig. 89 is an example of the premises view used in embodiment 25.
Fig. 90 is a view of the visible region calculate d at point a, which is used in embodiment 25.
Fig. 91 is a view of the visible region calculated at point b, which is used in embodiment 25.
Fig. 92 is a view of the visible region calculate d at point c, which is used in embodiment 25.
Fig. 93 is a map for guidance, which is used in embodiment 25 and embodiment 26 and generated in embodiment 25.
Fig. 94 is a map for guidance, which is used in embodiment 25 and embodiment 26 and generated in embodiment 25.
Fig. 95 is a map for leading, whic h is displayed on the terminal used in embodiment 26.
Fig. 96 is a map for leading, whic h is displayed on the terminal used in embodiment 26.
Fig. 97 is a map for leading, whic h is displayed on the terminal used in embodiment 26.
Fig. 98 is an exem plary view of the viewpoint and the line segment to expla in an example of the convention al plane scanning method.

### Preferred Embodiment of the Invention

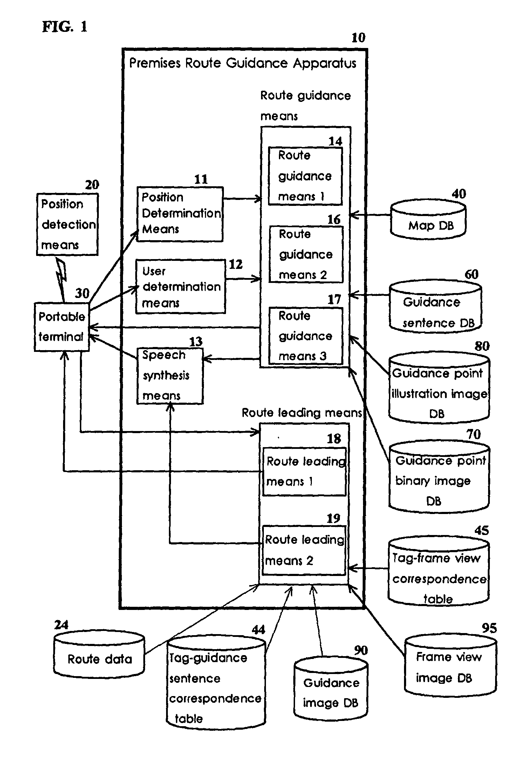

Fig. 1 is the block diagram showing the configuration example of the premises route guidance system accord ing to the present invention, which is comprised of: a position detection apparatus 20 that informs the user's position; a portable terminal apparatus 30 that transmits position detection information fromthe position detection apparatus 20 and user information to a premises route guidance apparatus 10 to display a photographed image of the route or the made; the map database (hereinafter, referred to as DB40) in whic h data of the map is accumulated; a guidance sentence DB60 where the guidance sentences, in which route guidance is performed using the direction of railway in a train station as a reference, of the route is accum ulated; an illust ration image DB80 where the illustration photographed images regarding guidance points are accumulated; a binary image DB70 where binary images regarding the guidance poin ts are accumulate d; route data 24 where the route search results are stored; a correspondence table 44 between tags and each guidance sent ence; a frame view image 95; a guidance image DB90; a correspon dence table 44 between the tags and each guidance sentence; and the premi ses route guidance apparatu s 10 that pro cess es the position detectio n (tag) information and photographed image informatio n to guide route.

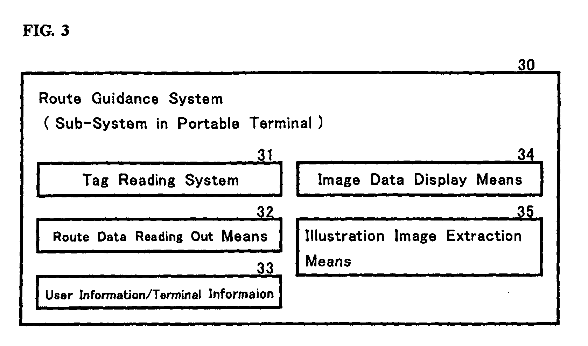

Among than, the position detecton apparatus 20 transmits positional coordinate to the user. The portable terminal shown in Fig. 3 is equippe d with user information 33, position detection (tag) reading means 31, route data reading-out means 32, image data display means 34, and illustration image data extraction means 35, and it displays or reads out the image or text data processed by the route guidance apparatus on the portable terminal.

The premises rou te guidance appa ratus 10 compris es: position determination means 11 that determines where the user is in the premises by the positional information; user determination means 12 that receive s the characterist ics of the user such as a vision-impaired person, a hearing-impaired person, and an able-bodied person to determine a para meter for route search, or decides output means such that it outputs the binary image or the illustration image when a terminal type used is a monochrome terminal and outpu ts a color image when it is a color terminal; speech synthesis means 13 that pron ounces the route guidance sentence output; route guidance mean s 1(14); route guidance means 2(16); route guidance means 3( 17); and route leading means 1(18) and route leading means 2(19), which leads the route.

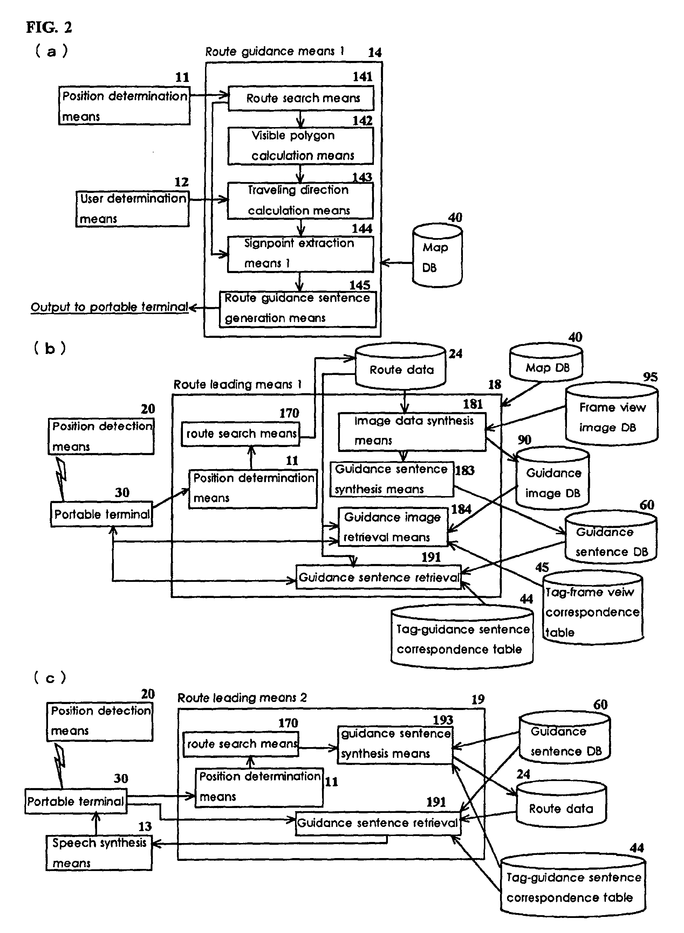

Fig. 2(a) is the block configuration view regarding the route guidance means 1 in the route guidance apparatus, which is comprised of: visible polygon calculation means 142 as an example of visibl e region calculat ion means that calculates a range that can be seen from a current position; rou te search means 141 that searches the route to the destination; traveling direction calculation means 143 that calculate s which direction the traveling direction of the route is from the current position; signpost extract ion means 144 tha t extracts a mark showing the traveling direction; and route guidance sentence generation means 145 that generates the route guidance sentence.

Fig. 2(b) is the block configuration diagram regard ing the route leading means 1(18) in the route guidance apparatus, which is comprised of: the position detection apparatus (20) that detects tag information; the portable terminal apparatus (30) that receives the positional information to provide the route information to the user; the position determination means 11 that determines the current pos ition from the ta g; route search means (170) that performs route search; the route data 24 that stores the route search results; image data synthesis means 181 that synthesizes the image data of frame view used in the route guidance; guidance sentence synthesis means 183 that synthesizes the guidance sentence that correspond s to each frame view; guidance image retriev al means 184 that retrieves a guidance image provided to the u ser every time th e tag is detected; guidance sentence retrieval means 191 that retrieves the guidance sent ence provided to the user every time the tag is detected; the map DB40; a frame view image DB95 that stomas images of frame views, which are a source for synthe sizing the guidance images; the guidance image DB90 that stores the guidance images synthesized; the guidance sentence DB60 that stores the guidance sentences and guidance sentence generation rules that generate the guidance sentence; the tag- frame view correspondence table 45; and the tag-guidance sentenc e correspondence table 44.

Fig. 2(c) is the block configuration diagram regarding the mute leadin g means 2(19), which is comprise d of: the position detection apparatus (20) that detects the tag information; the portable termi nal apparatus (30) that receives the positional information to provide the route information to the user; the position determination means 11 that determines the position of the tag; the route search means (170) that performs route search; the guidance sentenc e retrieval means 191 that retrieves the guidance sen tence that corresponds to the tag; guidance sentence synthesis means 193 that synthesizes the route guidance sentence near the tag; the guidance sentence DB60 that stores the guidance sent ences and the guidance sentence generation rules that gen erate the guidance sentence; the route data 24 that stores the route search, results; and the tag-guidan ce sentence correspondence table 44.

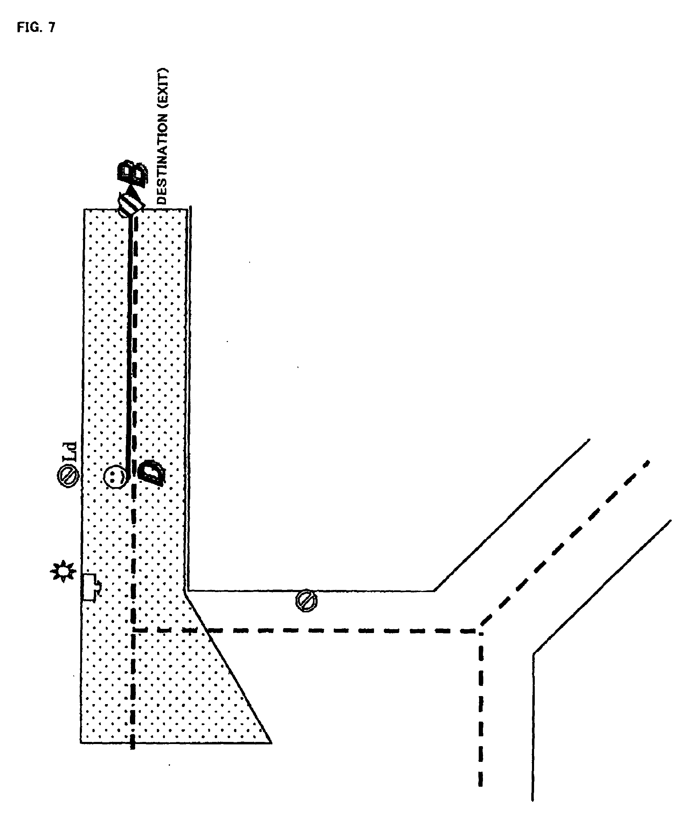

Fig. 7 is the block configuration view regarding the route leading means 1(18), which is comprised of: the portable terminal apparatus (30) that detec ts the tag inform ation; the position determination means 11 that determines the position from the tag; imag e data retrieval means 181 that retr ieves data of frame view that corresponds to the current positio n; and the guidance sentence synthesis means 183 that synthesizes the guidance, sentence that corresponds to each frame view.

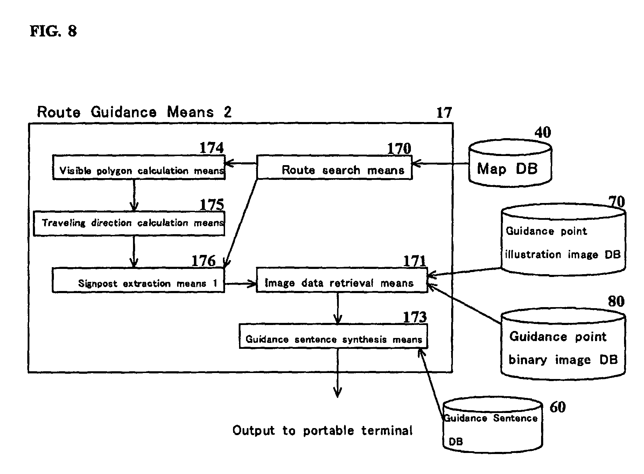

Fig. 8 is the block configuration view regarding the route leading means 2(19), which is comprised of: the portable terminal apparatus (30) that detec ts the tag inform ation; the position determination means 11 that determines the position of the tag; the guidance sentence retrieval means 191 that retrieves the guidance sentence that corresponds to the tag; and the guidance sentence synthesis means 193 that synthesizes the route guidance sentence near the tag.

### (Embodiment 1)

The route guidanc e means 1 will be described based on an example. Herein, consideration will be given to the case of passing in the premises from A to B as shown by the solid line arrow. The route data is drawn in the premises in dot ted lines on the map DB40. The user loses his/her way at point A, and calls a system using the portable terminal 30 first. The user enters a destina tion B through, the user interfac e of the portable terminal 30. A portable terminal Pa reads an ID in Ta from the posit ion detection Ta, and transmits data: a tag ID; the terminal being a PDA type terminal; and the destination being B to the route guidance apparatus 10.

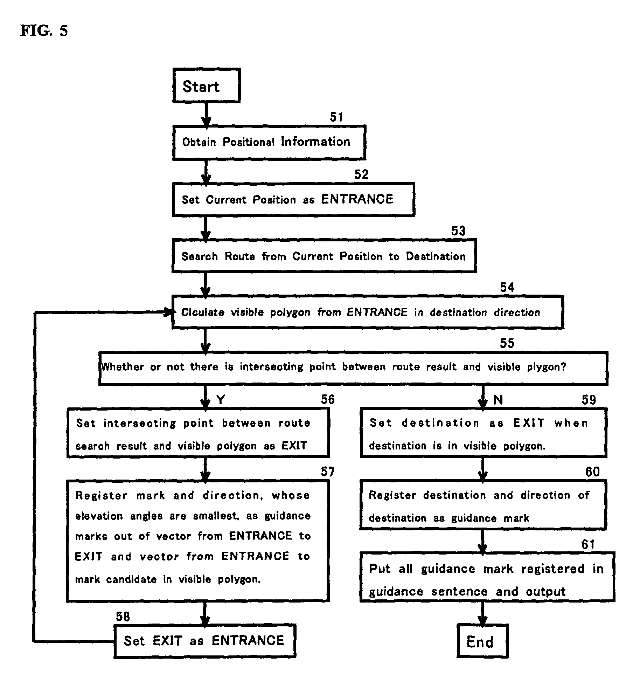

The processing will be described along the flowchart of the route guidance means 1 shown in Fig. 5.

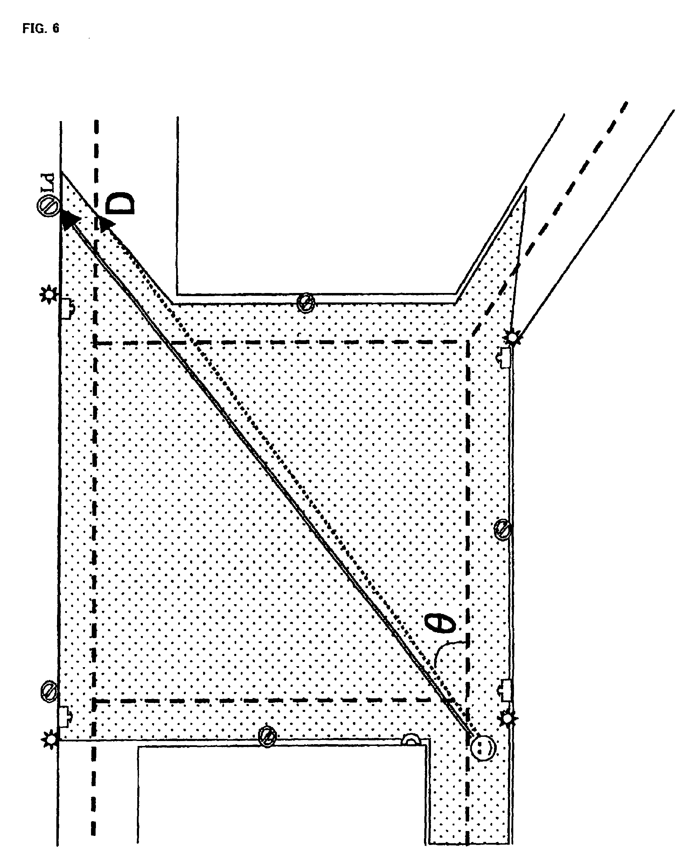

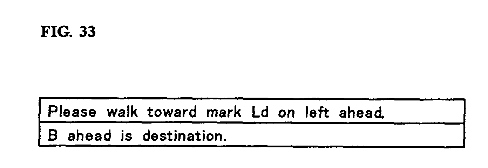

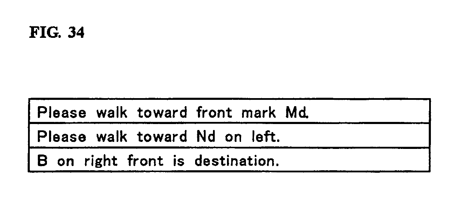

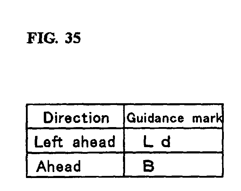

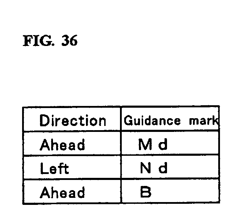

In the route guidance means 1, the position determination means 11 outputs a user's position A(15,23) in the premises (step 51), the route search means 141 set the curre nt position A as a variable (Entrance) (step 52), and performs route search from the current position A and the destination B to output the route where the u ser should proceed (step 53). The visible polygon calculation means 142 calculates the region in the premises that can be seen from A, which is shown in a dot-meshed region in Fig. 6, using the inform ation of the curr ent point A (step 54). In the traveling direc tion calculation means 143, the visible polygon and the route are superposed to calculate the intersecting point between them and obtains an intersecting point D of the destination (step 55), and D is bound to a variable (Exit) when there is an intersecting point (step 56). A vector AD shown by a broken line arrow in Fig. 6 is set as a direction where the user should proceed. In the signpost calculation means 144, a vector having the smallest angle is extracted from the traveling direction vector of the user and a vector connecti ng the tag and a target (double-line arrow in Fig. 6) in the visible polygon as the signpost and sets an Ld in Fig. 6 as a guidance mark, and an angle θ made by an immediately preceding traveling direction and the double-line arrow vector is compartmentalized in a 45-degree step to register a corresponding sentence 'Left ahead' (step 57). An entity of the variable (Exit) is set as an entit y of a new Entrance (step 58), and the processing returns to step 54. When the user arrives D in Fig. 7, the visible polygon is as shown in dot-mesh in Fig . 7, and the desti nation B is set as Exit since the mark B is at the place of destination (step 59). The destination B and the direction of the destination that is 'Ahead' are registered as the guidance marks (step 60 ). In the route guidance sentence generation means 145, arriving all guidance marks registered, the direction and the guidance mark in the guidance mark data shown in Fig. 35 and Fig. 36 are respectively applied to X and Y of a template, which is 'Y of X is the destination.' in the case of destination a nd 'Walk toward Y of X.' otherwise, and the guidance sentenc e shown in Fig. 33 is genera ted (step 61). In the case of this example, the route guidance sentences that depend on the route network are shown in Fig. 34.

The foregoing embodiment 1 calculates the region where the user can look over by the user' s positional information in the open space in the premises, an d the route guidance that guides the signpost regardless of how the route data is formed on a database is enabled.

### (Embodiment 2)

Fig. 8 is the block diagram showing the configuration example of the route guidance means 2 in the present invention, and it comprises : the map DB40 where the route data for searching the rou te in the premises ; the route search means 170 that searches the route in the pre mises; the guidan ce point illustration image DB70 where the illustration images of the guidance points are accumulated; the guidance point binary image DB80 where the binary images of the guidance points are accumulated; image data retrieval means 171 that retrieves the image of the guidance point based on a route search result; the guidance sentence DB60 where the guidance sentences are accumulated; guidance sentence generation means 173 that generates the guidance sentence from the guidance sentence DB based on the rout e search result; visible polygon calculation means 174 as an example of the visible region calculation means that calculates a range that can be seen from the current position; traveling direction calculation means 175 that calculates which direction the traveling direction of the route is from the current position; and si gnpost extraction means 176 that extracts a mark showing the traveling direction.

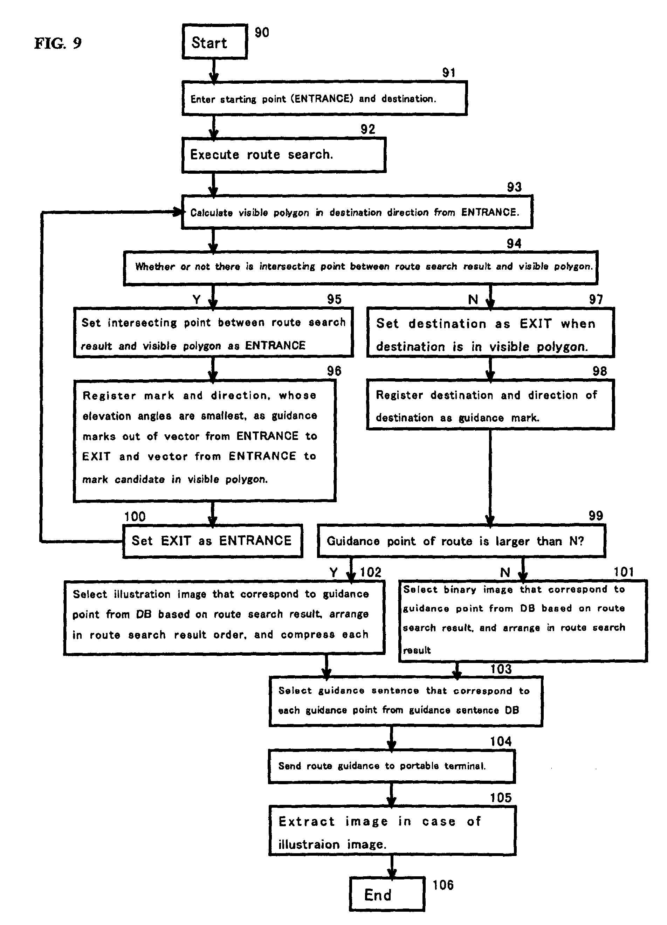

The processing of the embodiment of the route guidance means 2 will be described along the flowchart of the route guidance means 2 shown in Fig. 9. Herein, consideration will be given to the case of passing in the premises from E to F as shown by the broken line arrow. In the route guidance means 2, when the route search means 170 is activated (step 90), the starting point E, the destination F and the paramet er of an output image are entered (step 91). The route search is executed to outpu t a node row of E, U, Q, R, S, T and F is output as the route se arch result (ste p 92). Similar ly to the processing (step 53 to step 60) of the flowchart of the route guidance means 1 in embodiment 1, the visible polygon is calculated in the route order to find guidance points of u, q, r, s and t.

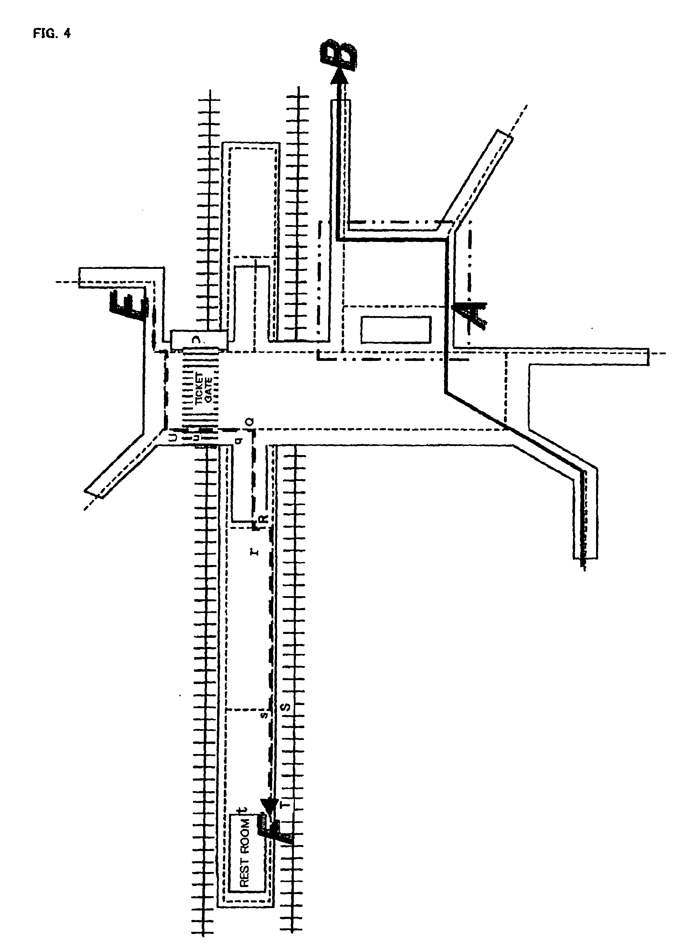

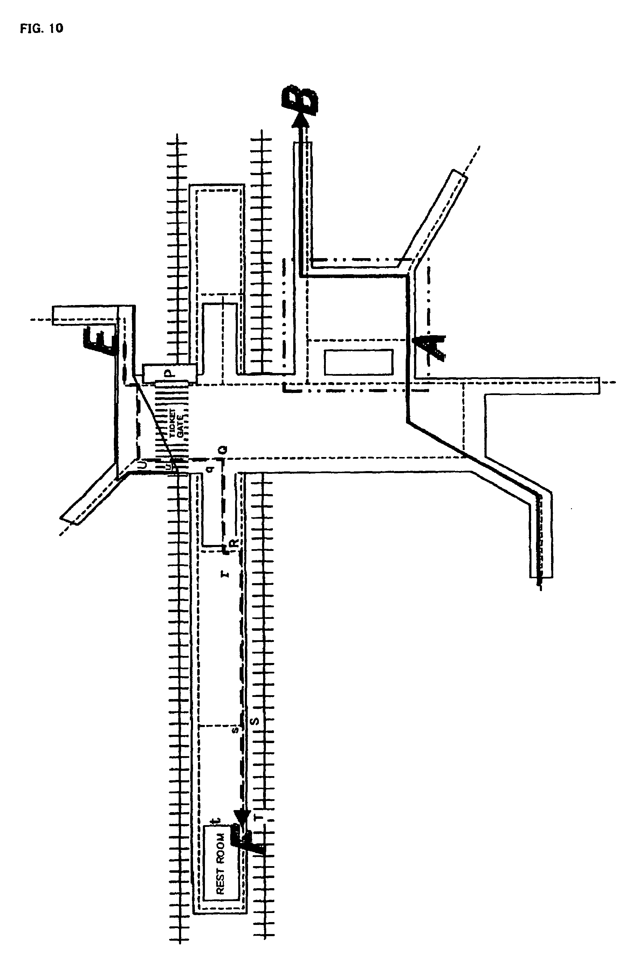

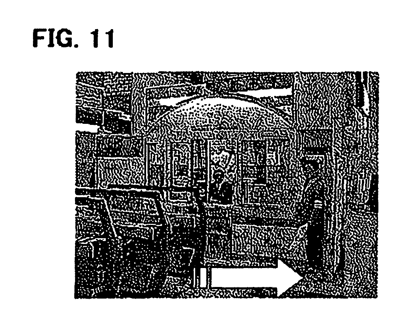

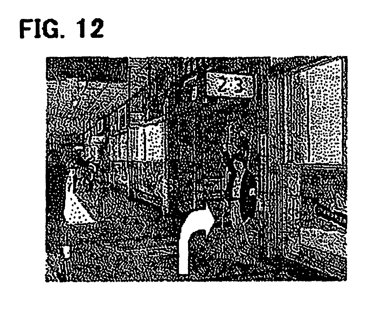

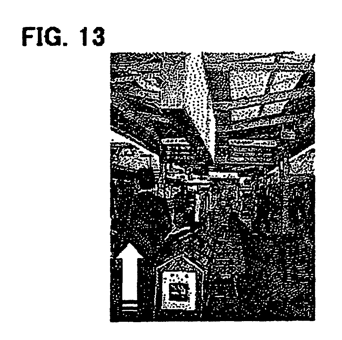

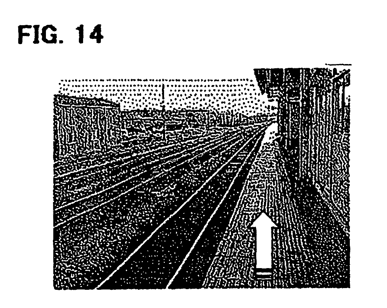

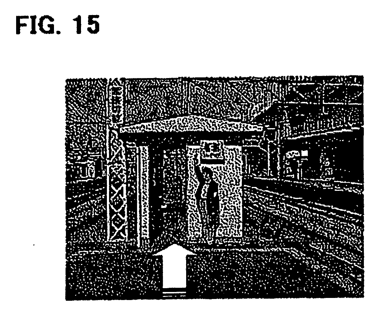

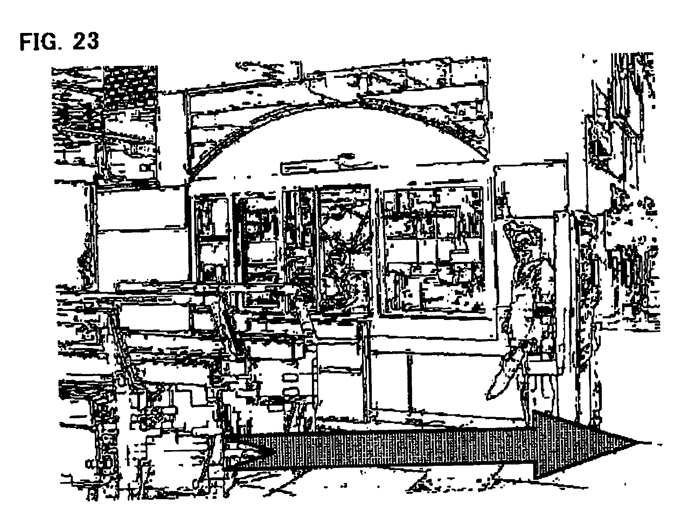

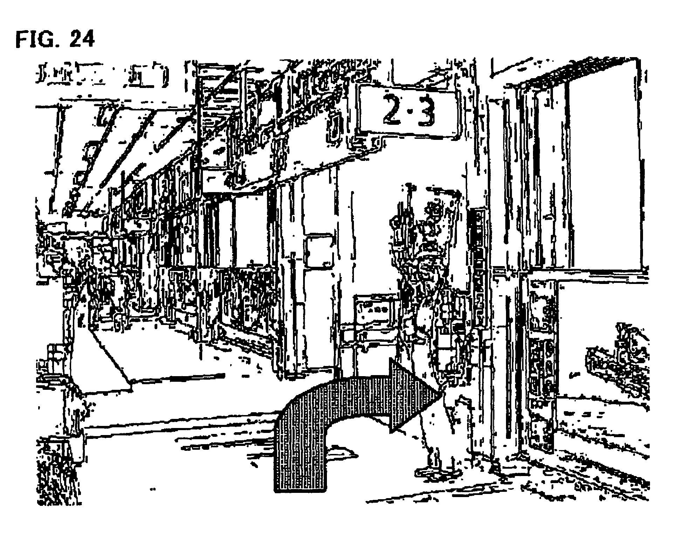

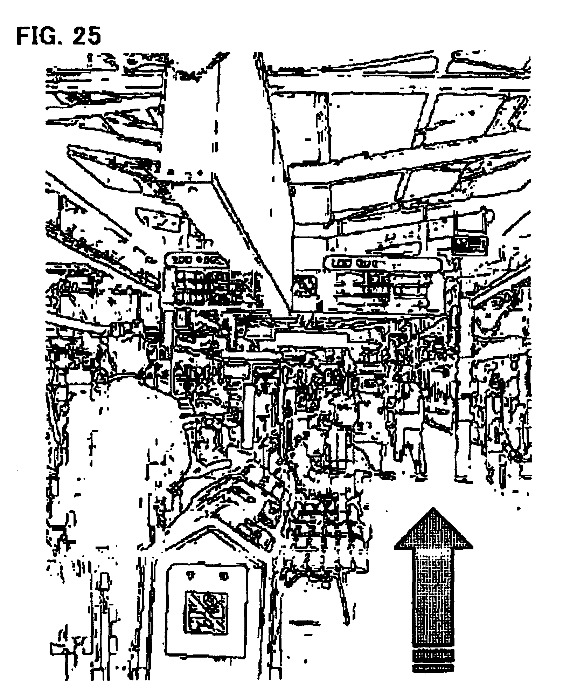

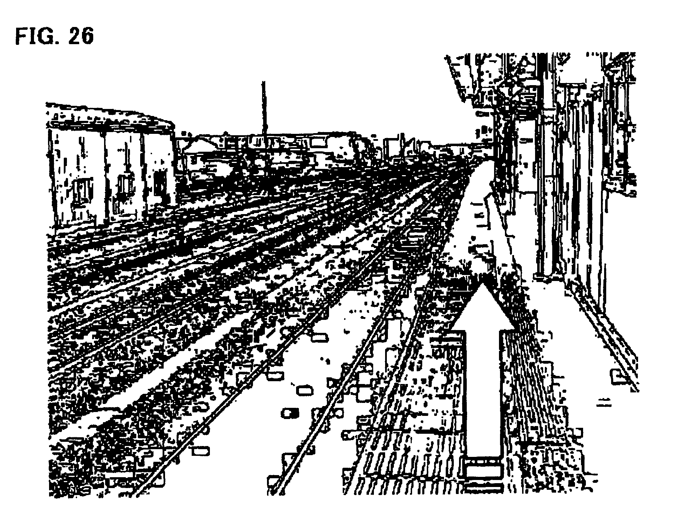

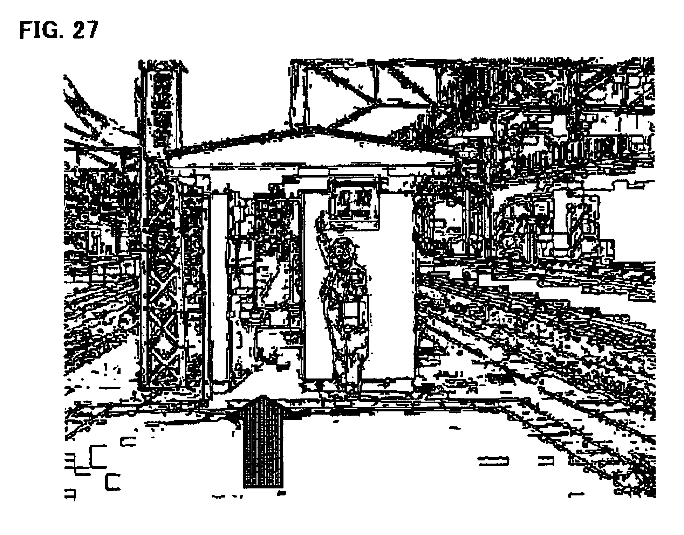

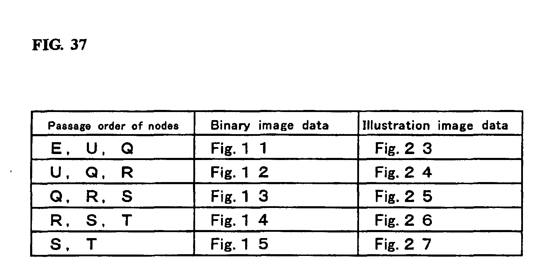

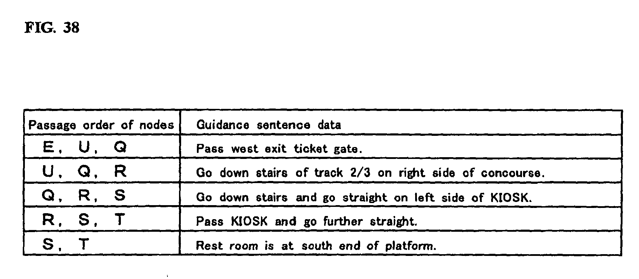

Fig. 10 shows the view in which the visible polygon from E was calculated to find the guida nce point u (step 93 to step 98). Herein, when a threshold value n of the route guidance point is set to 10, the route guidance point is smaller than n since the route guidance point of the node row EU QRSTF is 7 (step 99). Referring to the correspondence table between the passage orders of nodes and the bina ry image data show n in Fig. 37, the binary im ages to which par ameters are speci fied are retrieved from the binary image data DB, and they are arranged in the order of the route search result (step 101). When the route guidance point is larger than n, the correspondence table between the passage orders of nodes and the illustration image data shown in Fig. 37 is referred to and the illustration images to which parameters are specified are retrieved from the illustration image data DB, and they are arranged in the order of the route search result (step 102). Referring to the correspondence table between the passage orders of nodes and the guidance sentence data shown in Fig. 38, the guidance sentence is added to the image (step 103). The images shown in Fig. 11 to Fig. 15 and the guidance sentence are sequentially output to the port able terminal 30 (step 104), the illustration image data extrac tion means (35) shown in Fig. 4 extracts the illustration image data Fig. 23 to Fig. 27 in the case of the illustration image (step 105), and the processing ends (step 106).

The invention described in embodiment 2 can perform the route guidance easier to underst and for the user who has difficulty in rea ding the route on the map by perfo rming the route guidance that uses the image data, in which an arrow is added to the binary image or the illustration image for the guidance point in the traveling direction of the user, in the route guidance in the premises.

### (Embodiment 3)

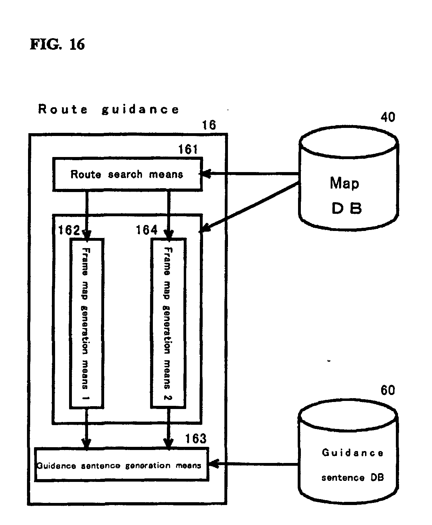

Fig. 16 is the block diagram showing a configura tion example of the rou te guidance means 2 in the present invention, and it comprises : the map DB40 where the route data for searching the route in the premi ses is accumulat ed; route search means 161 that searches the route in the premis es; frame map generation means 1 that matche s connection poin ts of the route in each fram e map to generate the frame map; the guidance sentence DB60 where the guidance sentences are accumulated; and guidance sentence generation means 163 that gene rates the guidance sentence from the guidance sentence DB based on the route search result.

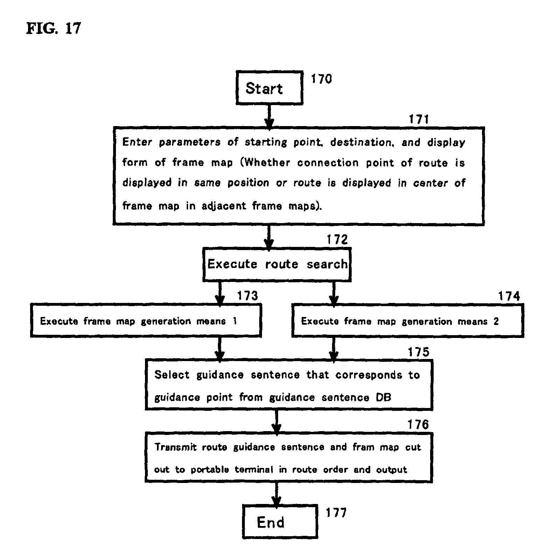

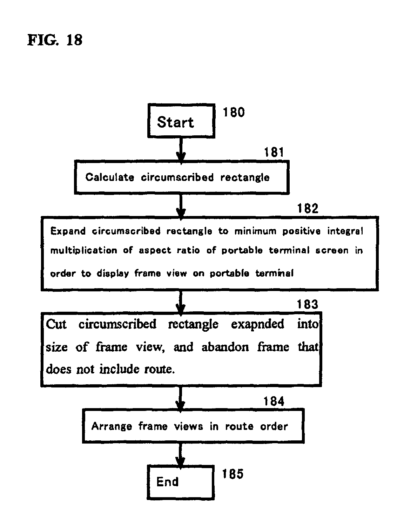

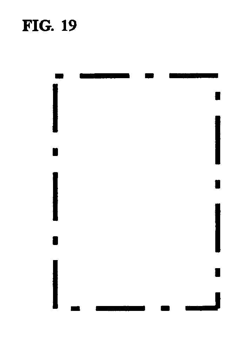

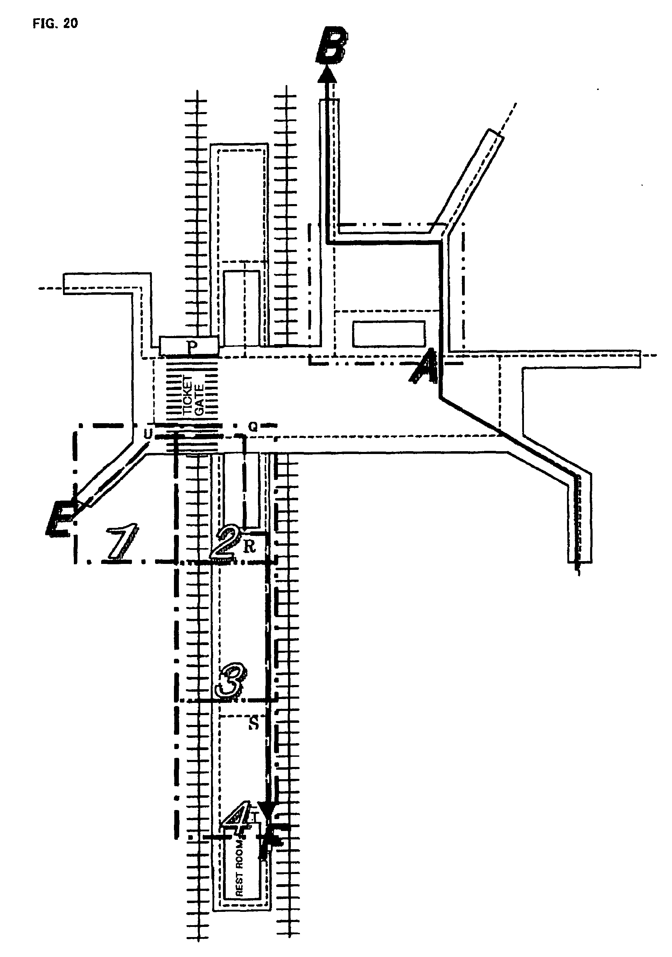

The processing of the embodiment of the route guidance means 2 will be described along the flowchart of the route guidance means 2 shown in Fig. 17 and the flowchart of the frame map generation means 162 shown in Fig. 18. Herein, consideration will be given to the case of passi ng in the premises from E to F as shown by the broken line arrow. In the route guidance means 3, when the route search means 3 is activated (3000), the starting point E, the destination F and the parameter of the output image are entered (step 171). The route search is executed to output the node row of E, U, Q, R, S, T and F is output as the route se arch result (step 172). The frame map generat ion means 162 is activated according to the parameter of the output image enter ed (step 173). In the frame map generation means 162, a circumscribed rectangle of the route is calculated first (step 174). The circumscribed rectangle is expanded to an integral multiplication of the aspect ratio of the portable terminal screen (step 175). The circumscribed rectangle is cut into frames and the frame that does not include the route is abando ned (step 183). The frames are arranged in the route order and are output (refer to Fig. 20). At this point, the premises entire view shown in Fig. 20 is made such that the frame maps do not overlap with each other along the route to fit the screen of the display screen size of the portable terminal shown in Fig. 19, the routes at the boundaries between each of the frame map match, and thus, the frame views of 1 to 4 are formed, that is, as shown in the one-dot chain line. Refe rring to the corre spondence table between the passage orders of nodes and the guidance sentence data shown in Fig. 38, the guidance sentence is added to the image (step 175). The image and the guidance sentence are sequ entially output to the port able terminal 30 in the order of rou te search to end the processing (steps 176, 177).

The invention described in embodiment 3 can provide the route guidance, i n which a pedestr ian does not lose his/her direction by matching the display direction of the frame view in the route guid ance and the dire ction of a railwa y and by displaying the frame maps while matching the connection points between each of the maps, in the route guidance in the premises, particularly in the station.

### (Embodiment 4)

Fig. 16 is the block diagram showing a configura tion example of the route guidance mean s 2, and it compr ises: the map DB40 where the route data for searching the route in the premises is accumulated; the route search means 161 that searches the rout e in the premises ; the frame map generation means 162 that ma tches connection points of the rou te in each frame map to gener ate the frame map; frame map generat ion means 164 that displays the route in each frame map in the center of each frame; the guidance sentence DB60 where the guidance sentences are accumulated; and the guidance sentence generation means 163 that generates the guidance sentence from the guidance sentence DB based on the route search result.

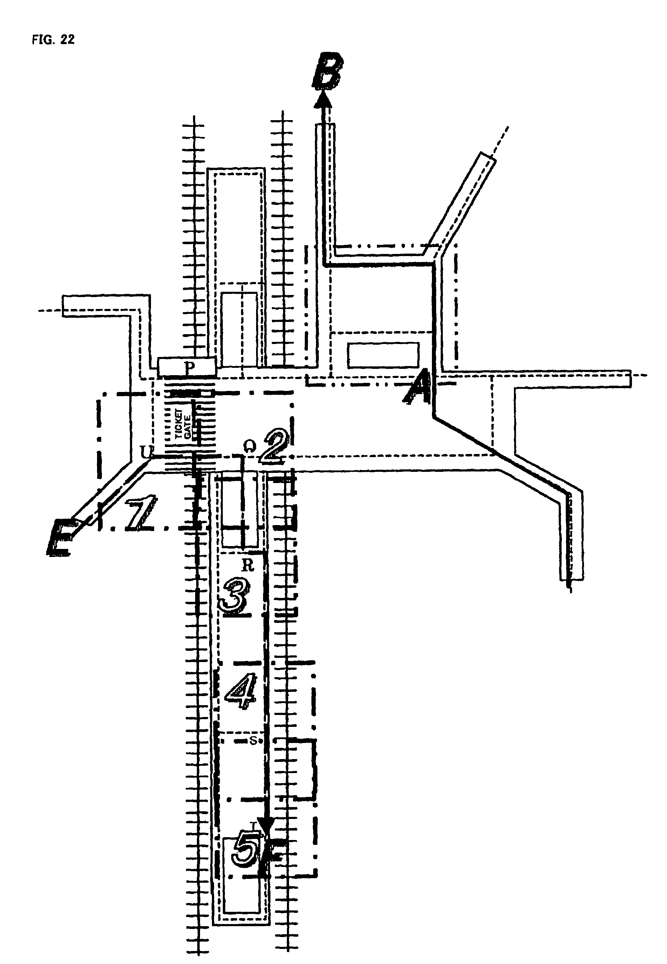

The processing of the embodiment of the route guida nce means 3 will be described along the flowchart of the route guidance means 3 shown in Fig. 17 and the flowchart of the frame map generation means 2 shown in Fig . 21. Herein, consideration will be given to the case of passi ng in the premise s from E to F as shown by the broken line arrow. In the route guidance means 3, when the route search means 3 is activated (step 170), the starting point E, the destination F and the paramet er of the output image are entered (step 171). The route search is executed to outpu t the node row of E, U, Q, R, S, T and F is output as the route search result (step 172). The frame map generation means 164 is activated according to the parameter of the output image entered (step 174). The nodes having a distance L (10 me ters, for example ) or more are sele cted among each of the nodes E, U, Q, R, S, T and F on the route (step 211). The premises enti re view shown in Fig. 22 is cut out such that each of the nodes E, U, Q, R, S, T and F is positio ned in the center of the frame map as shown in the one-dot chain line along the route, that is, into the frame views of 1 to 5 (step 212). The frame views are arranged in the order of each node E, U, Q, R, S, T and F (step 213). Refer ring to the correspondence table between the passage orders of nodes and the guidance sentence data shown in Fig. 38, the guidance sentenc e is added to the image (ste p 175). The imag e and the guidanc e sentence are sequentially output to the porta ble terminal 30 in the order of route search to end the processing (steps 177).

The invention described in embodiment 4 can perform the route guidance with the frame map easier to watch by matching the display direc tion of the frame view in the rout e guidance and the direction of the railway and by displaying the route guidance points such as the mark and the route node in each frame maps in the center of the frame view.

### (Embodiment 5)

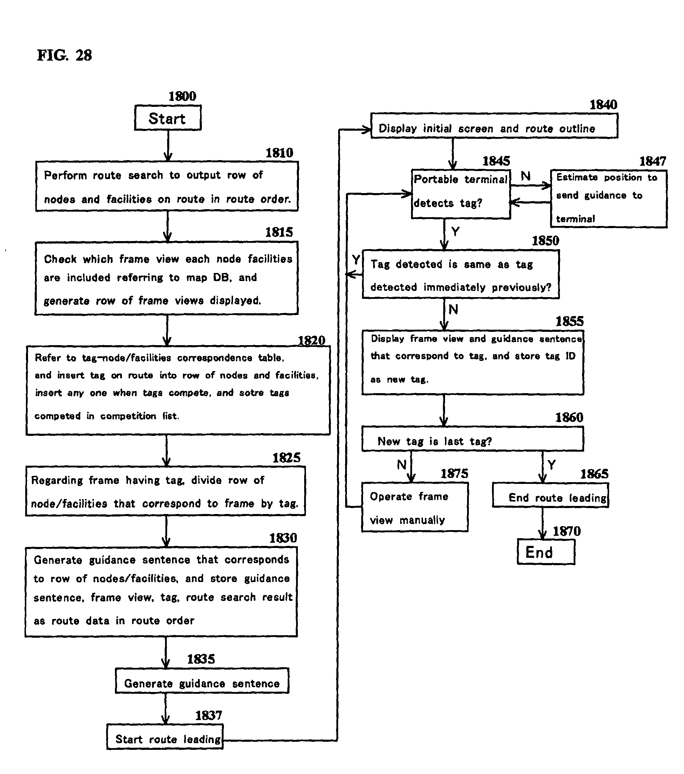

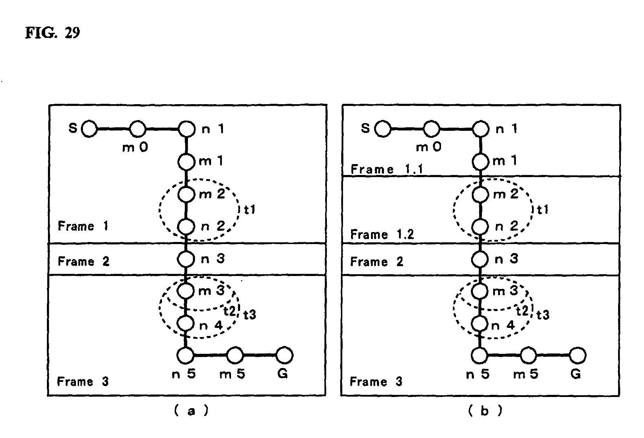

The embodiment of the route leading means 1 will be described based on the flowchart of the route leadi ng means 1 shown in Fig. 28 and the block diagra m of the route lead ing means 1 shown in Fig. 7. Herein, descri ption will be made for the case of passing the route as shown in Fig. 29. In the route leading means 1, when the user activ ates the route leading means 1(18) (1800), the position determination means 11 converts the starting point automatically detected by the position detection apparatus 20 into the coo rdinate on the map data, and the map determinat ion means 11 furth er converts the destination entered by the user into the coord inate on the map data. The converted coordinates of the starti ng point and the destination are input to the route search means 170 to perform route search, and the row of facilities and node s on the route is output in the route order (1810). The row of the nodes/facilities output in the example of Fig. 2(b) is shown as follows. m: mark; t: tag; and n: node. [m0, n1, m1 m2, n2, n3, m3, n4, n5, m5]...(an example of output of route search result)

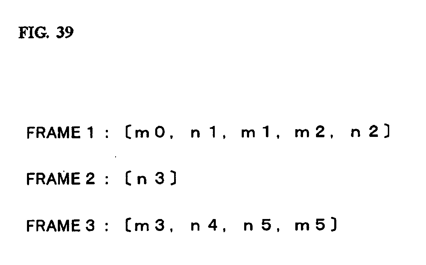

The image data synthesis means 181 checks with the element-frame view correspondence table shown on table 16 in the map DB40 to find which frame view the node and the facilities belong to, a corr esponding row of the frame views is retrieved from the frame view image 95 to draw the coordinate row of the route search results as the route on the correspond ing frame view, it is sto red in the fram e view image DB90, and a frame-route element row correspondence table is generated as shown in Fig. 39 (1815).

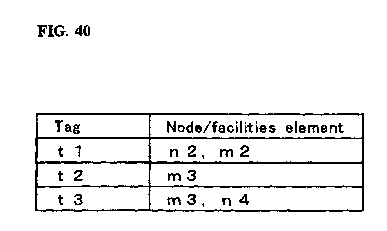

Referring to the tag-node/facilities correspondence table of Fig. 40 in the map DB40, the tags on route are inserted in the row of the nodes and the facilities (1820).

The result where they have been inserted is as follows. [m0, n1, m1, t1, m2, n2, n3, t2, m3, n4, n5, m5]...(a: an example of an element row when the tag information is inserted)

The foregoing is the example where t2 and t3 compete and t2 has been selected. The nodes t2 and t3 competed are previously stored in the map DB40 as a competition list such as in (t2, t3). This enables it to deal with the case where t3 is received instead of t2 while the route leading is performed. Regarding the frame with the tag, the row of the nodes/facilities that corresponds to the frame is divided by the tag (1825).

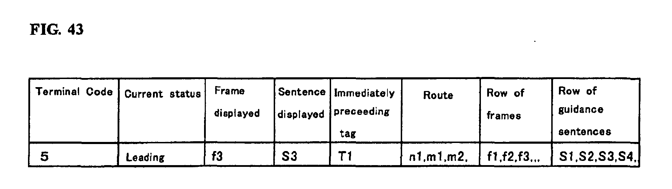

Information of the mark and the node and corresponding guidance sentence are generated in each frame view, and they are respectively stored in the image DB90 and the guidance sentence DB60. ID's of the guidance sentence and the guidance image are stored in the route data 24 in the from of Fig. 43 (1830). In Fig. 43, an ID of each terminal, a stat us of the terminal specified by a terminal code, an ID of the frame view currently displayed, and ID of the guidance sentence currently displayed, an ID of the tag picked up immediately previously, an element row of the routes, and ID of the frame view displayed, and an ID of the guidance sentence corresponding to each frame are respectively stored in a terminal code, a current status, a field of a fr ame displayed, a sentence for display, an immediately previous tag, a route, a row of frames, and a row of guidance sentences, the current status is updated when the status changes, the frame for display and the sentence for display are updated when the frame and the guidance sentence displayed on the terminal change, and the immediately previous tag is updated every time the tag is detected.

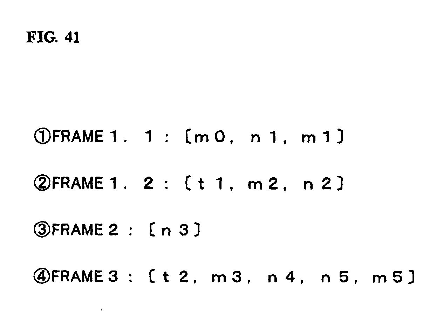

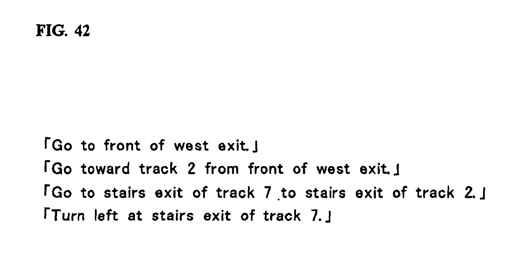

Next, the route leading begins (18 35). At the starting point, the frame of 1.1 in Fig. 29(b), which corresponds to ① of Fig. 41, is tran smitted and displayed (1840). The positional information sent from the position detection apparatus 20 is checked by the position determination means 11 (1845), it checks whether or not the tag detected is the same as the immediately previous tag of Fig. 43 (1850) if a tag has been detected, and ignores the tag detec ted if they are the same and return to (1845). If they are different, the frame of 1.2 in Fig. 29(b), which corresponds to ② and ③ of Fig. 41, is transmitted, ② is displayed first , and the tag t1 detected is stored as a new tag (1855). Whet her or not the new tag t1 is the last tag t2 or the competing t3 in the row of the route fields of Fig. 43 (1860) is checked, and the frame of 2 in Fig. 29(b), which corresponds to ③, is display ed by a button operation if it is not the last tag. If it is the last tag, the rout e leading ends (1865). If a tag is not detect ed in (1845), the position determination means estimates the user's posit ion, it generates the guidance sentence such as 'You are between track no.7 and no. 2 now.' and sends it to the terminal (1847), and returns to (1845) . The terminal displays the guidan ce sentence. Now, in step (1855 ), when t3 is rece ived instead of the tag t2, a correspondence relation between t2 and t3 is foun d out by referring to the competition list, and the frame 3 is displayed. In generating the guidance sentence that shows a direction to proceed next at the node n1 and the node, which are the first direction turning points, when the node n1 is withi n a range of error of the position detection by radio wave of the tag from the starting point S, a relative directional indication such as 'Right turn' that cannot be shown unless the starting point is assured is inappropriate and should be avoided, and the positional information of the node n1 and the guidanc e sentence of the mark showin g the next traveling direction are generated as in the top line of Fig. 42. Fig. 42 is the example of the guidance sentences of embodiment 5.

Regarding the frame view, the map on which the illustration image, the binary image, and a town block shape are described may be used correspo nding to each frame of Fig. 29.

The invention des cribed in embodim ent 5 synchronize s a guidance frame view of the rou te with tag detection in performing the route guidance, and assures the user of receiving information regarding the traveling direc tion near the tag before detecting the tag without fail even when there is an error in the range where the radio wave reach in the tag, and furthermore, the first traveling direction turning point and the mark that can be seen from the first traveling direction turning point are guided even when the positional information of the first traveling direction turning point includes an error, and thus information provision where the route information is not complex can be performed.

### (Embodiment 6)

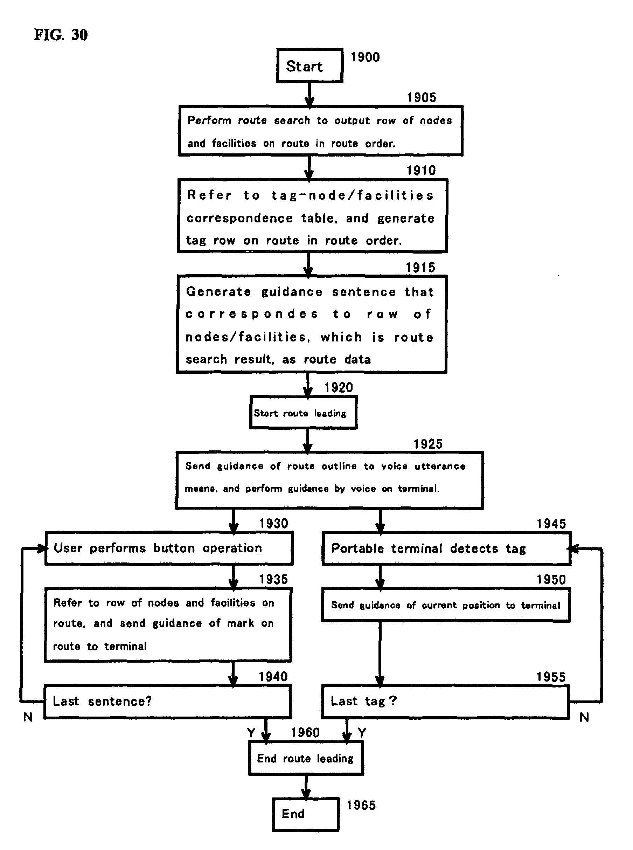

The embodiment of the route leading means 2 will be described based on the flowchart of the route leading means 2 shown in Fig. 30 and the block diagram of the route lead ing means 2 shown in Fig. 8. Herein, description will be made for the case of passing the route as shown in Fig. 29. In the route leading means 2, when the user activates the route lea ding means 2(16) (1900) from the terminal 30, the start ing point automatically detected by the position detection means 20 and the destination that the user enters by the portable terminal 30 are input to the route search means 170 to perform the route search, and the row of nodes and f acilities on the route is output in the route order (1905). The row of the nodes/facilities output in the example of Fig. 29(a) is shown as follows. m: mark; t: tag; and n: node. [m0, n1, m1, m2, n2, n3, m3, n4, n5, m5]...(example of output of route search result)

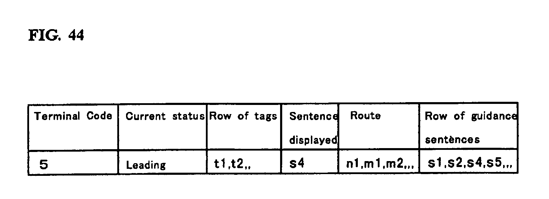

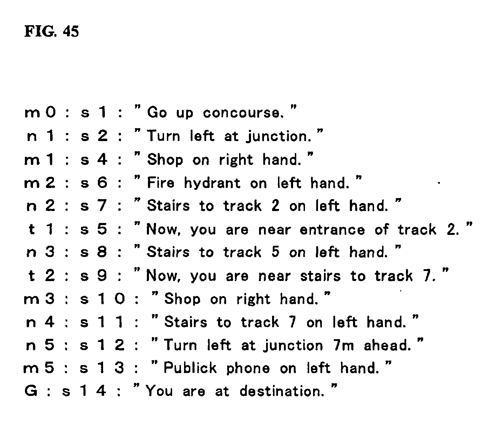

Referring to the row of the node s/facilities and the tag-node/facilities correspondence table of Fig. 40, the row of the tags on th e route is genera ted in the route order is generated (1915). The guidance sentence synthesis means 193 generates the guidance sentences shown in Fig. 45, which correspond to the row of the nodes and the facilities , from the guidance sentence DB60 and the gene ration rule in the guidance sentence DB, and the guidance sentences and the row of the nodes and the facilities , which is the rout e search result, are stored in the route data 24 in the form shown in Fig. 44 in the route order (1915). At the same time, the route leading begins (1920). Firstly, guidance of a route out line is sent to the speech synthesis means 13, and the guidanc e by voice is perf ormed from the terminal (192 5). When the posi tion detection apparatus 20 detects the tag (1945), the guidance sentence from the tag t1 detected to befor e the tag t2 out of the guidance sentence data of Fig. 45 is sent to the terminal (1950). Whether or not t1 is the last tag on the route is check ed by referring to the rout e field of Fig. 44 (1955). Command waiting from the portable terminal is performed if it is not the last tag, and the route leading ends if it is the last tag (1960). When the user performs the button operation on the portable terminal (1930), the fields of the rows of the sentence for display and the guidance sentence of Fig. 44 are referred to, the guidance sentence before or after the sentence for display is sent to the terminal in accordance with the button operation, and the field of the sent ence for display is updated (1935) . Whether or not the sentence for display updated is the last guidance sentence is check ed by referring t o the row of the guidance sentences, the command waiting of the portable terminal is performed if it is not the last one, the route leading ends if it is the last one (1960), and the processing ends (1965).
An example of the guidance sentence:
Fig. 45 is the example in the case where the tag t1 is detected after the mark m2.

The invention described in embodiment 6 provides the vision-impaired person of a provision method of the route information and an information provision method of the current position separately, the current position is provided when the tag is detected and the information of the traveling direction is provided by the button operation of the user, and thus information provision where the route information is not intricate can be performed.

### (Embodiment 7)

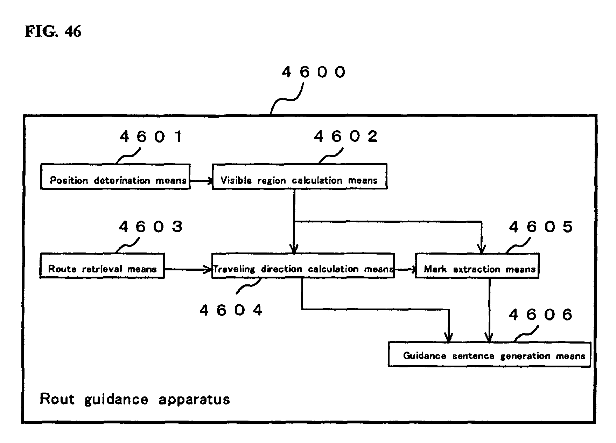

Fig. 46 exemplifies the function block diagram of the route guidance apparatus in embo diment 7 of the present invention. In Fig. 46, a route guidance apparatus 4600 comprises: position determination means 4601; visible region calculation means 4602; route search means 4603; traveling direction calculation means 4604; mark extraction means 4605; and guidance sentence generation means 4606.

The position determination means 4601 detects the current position of the user. For example, a tag that emits the radio wave including its own number is embedded in a wall or a floor in the prises, the portable terminal that the user has is designed to receive the radio wave from the tag , and the position determination means 4601 receives the number of the tag, which the po rtable terminal t ransmits, and det ects the current position of the user from the number of the tag. Alternatively, the portable terminal that the user has emits the radio wave, a receiving apparatus installed on the wall or the floor receive s the radio wave, and the current position may be detected depending on which receiving apparatus has received the radio wave of the portable terminal.

The visible region calculation means 4602 calculates the visible region that is the range where the user can see from the current position detected. Specifically, it calculates the range where the user can see from the current posit ion of the user detected by the position determination means 4601. When obstacles that block the range of vision of the user are approximated by polygons and their positions are stored, the range where the u ser can see can b e calculated by a visible region calculation method by the conventional plane scanning method. Or other methods may be used.

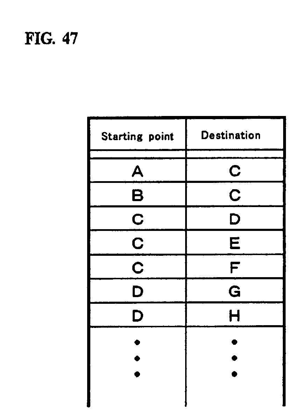

The route search means 4603 search es the route from the starting point to the destination. Fig. 47 exemplifies an example of the table used in the route search, and Fig. 47 expresses that from which point to which point one can directly reach. For example, the first line of the table of Fig. 47 means that one can dire ctly reach from point A to point C. By using such a table, to obtain the route from any starting point given to any destinatio n, a line where the first starting point given appears in the row of the starting points is retrieve d, a value of the row of a final destinations on the line is obtained, a line that has the value obtained as the starting point is retrieved, and a value of the row of the final destinations on the line is obtai ned, which are repeated and contin ued until the destination is obtained as the value of the row of the final destinations. For example, when A is set as the star ting point and G is set as the destination, the line that has A as the valu e of the row of the starting points is retrieved, the first line of Fig. 47 is obtained, and C is obtained as the final destination. Next, the line where C appears as the value of the row of the starting points, the third line, the fourth line, and the fifth line are obtained and D, Band F are obtained as the final destinat ion, the lines whe re each of the thre e appears in the row of the starting points are retrieved, the sixth line is obtained as the line where D appears in the row of the starting points when the row of the final destin ations is obtained, the processing ends because its final destination is G, and finally, a route A→ C→D→G is obtained.

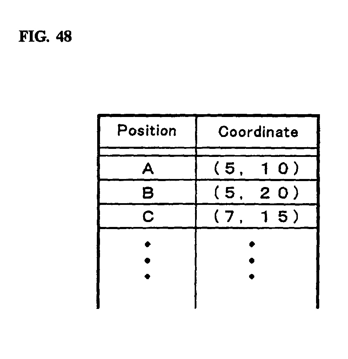

The traveling direction calculation means calculates the traveling direction from the visible region and the route. Specifically, it calculates the traveling direction where the user should proce ed from the range ,where the user can see, calculated by the visible region calculation means 4602 and the route searched by the route search means 4603. As a calculation method, in which direction the direction of a posit ion to be proceeded next from the starting point is within the visible region is calcul ated if the curr ent position of the user detected by the position determination means 4601 is the starting point of the route search ed by the route search means 4603. For example, the starting point is A and when the route search means 4603 has searched that the position to be proceeded next is C, in which direction the direction from A to C is within the visible regio n is calculated. For this calcula tion, the coordinate position of each poin t is stored in the route guidance apparatus 4600 as shown in Fig. 48, and the direction may be calculated from the coordinate positions. Alte rnatively, the route searche d by the route sea rch means 4603 is expressed in the row of the line segments that has the positi on on the route as the end point, the intersecting point between the row of the line segments and the visible region calculated by the visible region calculation means 4602 is obtained, and the direction that directs from the current positio n to the intersecting point may be the traveling direction.

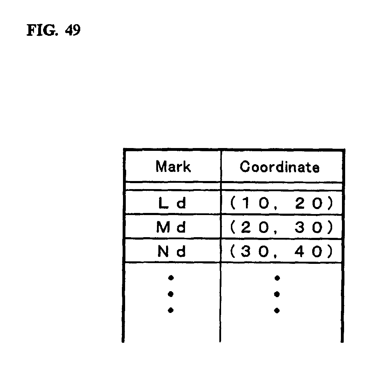

The mark extraction means 4605 extracts the mark to be guided from the visible region. Specifically, it extracts the mark to be guided out of the marks within the visible region calculated by the visible region calculation means 4602. In this processing of extraction, the mark near the traveling direction calculated by the travel ing direction calculation means 4604 is extracted. The mark that exists within the visible region ca lculated by the visible region cal culation means 4602 can be extracted by correlating the marks and their coordinate positions as shown in Fig. 49, and furthe r the mark near the traveling direction calculated by the traveling direction calculation means 4604 can be extracted. If it does not exist in the mark near the traveling direction calculated by the traveling direction calculation means 4604, the mark in the direction opposite to the traveling direction may be calculated or the mark in the direction 90 degrees in the left or 90 degrees in the right may be extracted.

The guidance sen tence generation means 4606 gene rates the route guidance sentence of the route found. Spec ifically, it generates the guidance sentence that guides the route in the case of proceedin g the route search ed by the route search means 4603 while relyin g on the traveling direction calcul ated by the traveling direction calculation means 4604 or the mark extracted by the mark extraction means 4605. To generate this guidance sentence, a template of the guidance sente nce that includes variables as 'Please proce ed while looking at A on B.' is prepared, the name of the mark is inserted in 'A', the direction where the mark can be seen is inserted in 'B', and thus the guidance sentence may be generated. For example, by the mark extraction means 4605, when a mark called Ld has been extracted by the mark extraction means and calculati on has been made that the mark was on the left side of the traveling direction. Ld is substituted for 'A' and 'Left ahead' is substituted for 'B' to generate the sentence as 'Plea se proceed while looking at Ld on left ahead' . Alternatively, complete sentences as show n in Fig. 33 are prepared from the beginning, searching is perf ormed depending on the mark and the direction where it can be seen, and the guidance sentence on the first line of the table may be obtained. Further, when it is found out that the dest ination is within the visible regi on and it is ahead of the user, the second line of the lines of Fig. 33 is obtained.

In this embodomen t, the visible reg ion calculation means 4602 may calculat e not only the ran ge that can be see n from the current position of the user, whic h has been detect ed by the position determination means 4601, but also the range that can be seen from the point on the route, which has been searched by the route sear ch means 4603. Fig. 5 is the flow chart that explains the oper ation of the route guidance apparat us 4600 in such a case.

Firstly the posit ional information , that is, the cur rent position of the us er is detected by the position dete rmination means (51), and the current posi tion is set as Entrance. Specifically, the coordinate of the current position is substituted for a variable called Entrance (52). N ext, the route from the current position to the destination is searched by the route search means 4603 (53). The visible polygon from Entrance to the direction of the des tination is calulated (54). Specifically, the visible polygon, which is the visi ble range seen from the point substituted for the variable called Entrance, is calcuted using the visible region calculation means 4602. Next , determination is made whether or not there is the intersecting point between the route search result and the visible polygon (55). Specifically, whether or not there is the intersecti ng point between the route searche d by the route search means 4603 and the visible region calculation means 4602 is checked, and the intersecting point between the route search resu lt and the visibl e polygon is set as Exit if there is the int ersecting point (56). In other words, the intersecting point is substituted for the variable called Exit. The direction from the point subst ituted for Entrance to the point substituted for Exit is found by the traveling direction calculationmeans 4604, the mark having the mininun direction difference is extracted by the mark extraction means 4605, and the direction and the mark found are registered (57). Next, the point substituted for Exit is substituted for Entrance to return to step 54.

If there is no intersecting point at step 55, the destination is substituted for Exi t when the destina tion is in the visible polyg on that is the visible region (59). Then, the destination and the direction of the destination are registered (60), and all the marks and the direc tions registered are output by inserting them in the guidance, sentence (61).

With this embodi ment, the route that can reach the destination faster can be guided even if the route search means has searched a circuitous route.

Further, the posi tion determination means may obtain the current position of the terminal at a regular time interval, and the guidance sentence generation means may gene rate the guidance sentence of the route reg arding the next mark to the terminal when det ermination is mad e that it has approached the mark that exists in the route searched by the route search means. Specifically, one in which the guidance sentence of the route regarding the next mark is generated is transmitted to the terminal. As described, the direction or the like when the user has approached the next mark can be previously infor med to the user by generatin g the guidance se ntence regarding the next mark to the termi nal for the user, and smooth route guidance is thus made possible.

### (Embodiment 8)

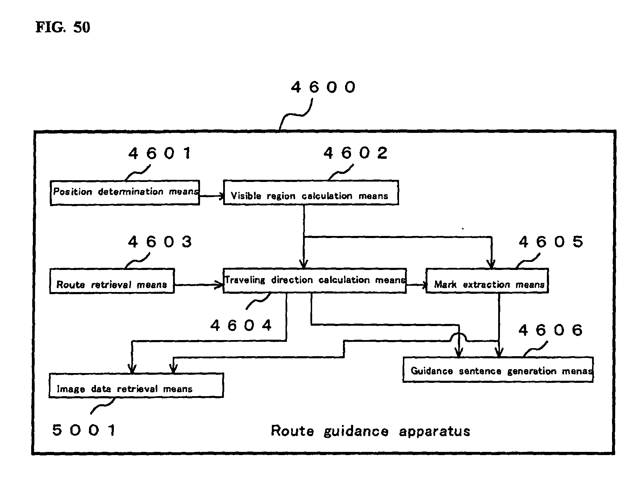

Fig. 50 exemplifies the function block diagram of the route guidance apparatus in embodiment 8 of the present invention. In Fig. 50, the route guidance apparatus is one in which an image data retrieval means 5001 is added to the route guidance apparatus 4600 of embodiment 7.

The image data retrieval means 500 1 searches viewpo int image data speci fled to guide points to pass on the route. Specifically, it retrieves the image data to guide the route in the case of proceeding the route searched by the route search means 4603 while relying on the traveling direction calculated by the traveling direction calculation means 4604 or the mark extracted by the mark extraction means 4605. The image data in this case is the viewpoint image data. The viewpoint image data is data of an image when a landscape is seen from a particular viewpoint, and is image data where the lan dscape is expressed three-dimensionally. For example, the imag e expressed by pers pective or the image in which the landscape is viewed in bird's-eye is cited.

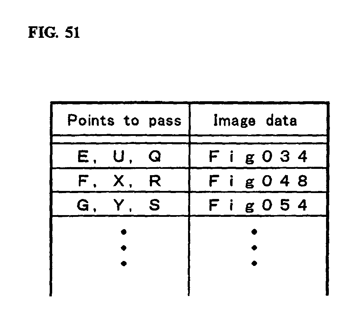

The image data retrieval means 500 1 performs retrie val of the image data from the user's position and the direction calculated by the traveling direction calculation means 4604 or in accordance with the user's pos ition and the mark extracted by the mark extrac tion means 4605, for example. Fig. 51 is the table where 'points to pass' and 'image data' are correlated, in which the 'poin ts to pass' compri ses three elements , in which the first element , the second elem ent, and the thir d element respectively express the starting point, a point to pass through in hatfwa y, and a point to be reached after passing through, or the first element is the position, the second element and the third element respectively express the direction and the mark, and it expresses that the image data stored in the row of 'image data' is retrieved for the three elements.

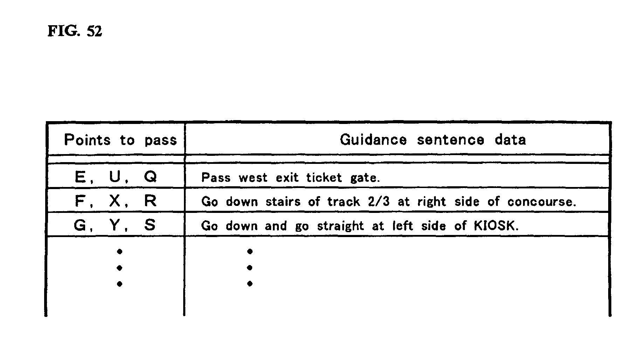

Fig. 52 exemplifi es the table in which the data used for generating the guidance sentence by the guidance sentence generation means 4606 in this embo diment is stored. In Fig. 52, although the same row as the row of 'points to pass' in the table of Fig. 51 exists in Fig. 52 in order to gene rate the guidance sentence while syndhron izing with the image data retrieved by the image data retrie val means 5001, i t is not limited to the point where the guidance sentence is generated while synchronizing with the image data retrieved by the image data retrieval me ans 5001, and it may generate the guidance sentence of the contents to complement the image data or the contents more detail than the image data.

According to the route guidance apparatus by this embodiment, provision of the guidance sentence with the viewpoint image data expressed three-dimensionally to the use r guided is made possible, and guidance service easier to understand can be provided to the user.

### (Embodiment 9)

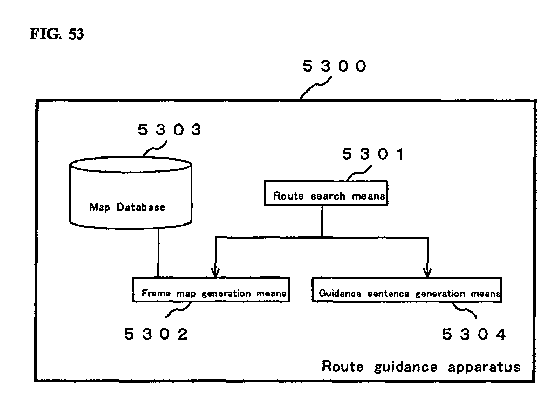

Fig. 53 exemplifies the function block diagram of the route guidance apparatus according to embodiment 9 of the present invention, and a route guidance apparatus 5300 includes: route search means 5301; frame map generation means 5302; a map database 5303; and guidance sentence generation means 5304.

The route search means 5301 searches the route from the starting point to the destination as described in embodiment 7 and embodiment 8.

Frame map generation means 5302 cuts out maps around the points to pass as the frame map fr om the map databa se 5303 in order to guide the points to pass, and it cuts out each frame such that a part of the route in eac h frame overlaps in cutting out than. The 'poi nt to pass' is the point to be passed in moving on the route sear ched by the route search means 5301 . The map database 5301 hol ds the maps around the point to be passed when moving on the route, and it is one in which the map around a coordinate is retrieved when the coordinate of the point is given, for exampl e. 'A part of the route in each frame overlaps in cutting out them.' means that when a map is cut out as a frame and the frame of the map cut out next is compared with it, the routes displayed on the both frames have common areas.

The guidance sentence generation means 5304 gene rates the guidance sentence to guide the point to pass . As in embodiment 8, the guidance sentence may be generated while synchronizing with the frame generated in the frame map generation means 5302, or the guida nce sentence of the contents to complement the contents of the frame or the cont ents more detail than the frame be generated.

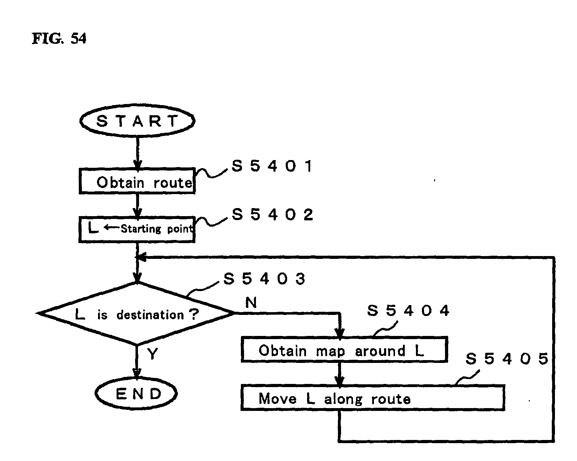

Fig. 54 is the flowchart that explains the processing of the route guidanc e apparatus 5300, mainly the proces sing of the frame map generat ion means. Firstly, the route is searched by the route search means 5301 to obtai n the route (S5401 ). Next, the starting poin t is substituted for a variable L (S5402). Substituting the starting point means to subst itute the coordinate of the starting point. Then, determination is made whether or not L is the destination (S5403). Specifically, determination is made whether or not the coordinate of L is the coordinate of the destination, the processing ends when it is the destination, and the map around L is obtained when it is not (S5404). In other words, the map around the coordinate substituted for L is obtained as the frame from the map database 5303. When the frame is obtained, it is displayed for the user or it is correlated with the coordinate position substituted for L and accumulated, and the frame is displayed when detection is made that the user has reached the position of the coordinate. When the map of the vicinity is obt ained, L is moved along the route (S5405). Specifically, the coordinate position substituted for L is updated to the coordinate afte r it has moved along the route. At this point, by setting the coordinate position substituted for L to the position on the route, which is displayed on the map of the frame, 'A part of the route in each frame overla ps in cutting out them.' is done. After L is moved, the processing returns to step S5403.

As described, by overlapping a part of the route in each frame in cutting out the frames, the current positi on of the user, which is displayed on the frame, does not change largely on the screen When the next frame is displayed for the user, and displaying easy to see for the user is made possible.

### (Embodiment 10)

In embodiment 9 of the present invention, when the frame map generation means 5302 cuts out the frames in embodiment 8, they are cut out so that the route in each frame is displayed in the center of the screen instea d of overlapping the route in each frame.

For example, in the case where the route search means 5301 has searched the one that passes the points E, U, Q, R, S, T and F as shown in Fig. 22, the points that are remote by a predetermined distance L (10m for example) or more are selected among than, each of the points E, U, Q, R, S, T and F is cut into the frame views of 1 to 5 as shown in the one- dot chain line of Fig. 22, and arranging the frame views in the order of E, U, Q, R, S, T and F is performed.

As described, by cutting out such that route is displayed in the center of the screen, the poi nts to be passed on the route are displayed on the center of the frame views, and performing the route guidance by the frame view easier to see is made possible.

### (Embodiment 11)

In embodiment 7 to embodiment 10, the guidance sentence generation means may generate the guidance sentence based on the user's moving direction to guide the point to pass. The user's moving direction is the direction where the user moves when the user travels on the route, where the route has been searched by the route search means. By generating the guidance sentence in this manner, when the route is bent at a certain point, the guidan ce sentence regar ding which way to turn for the moving direc tion until the user reaches the point is generated. For example, assuring that the route from S to G shown in Fig. 29(a) has been searched by the route search means, although the rout e is bent at the point of n1, the guidance sentence that says 'Please turn right at n1.' is generated because the user who moves from the point of m0 to n1 turns right when the guidance sentence to turn at n1 is generated.

As described, by generating the guidance sentence based on the user's moving direction, guiding of the user by the guidance sentence easier to understand than the guidance sentence such as 'At n1, please turn to the direction where m1 exists.' for example, is made possible.

### (Embodiment 12)

In embodiment 7 to embodiment 11, in the case where the route guidance apparatus guides the route that passes the points in a platfo rm of the train sta tion premises, the guidance sentence generation means may generate the guidance sentence using the direction of the railway for the user in the station platform as a ref erence in order to guide the point s to pass.

Since the railway usually extends in a straight line and it is a noticeable structure, the guidance easy for the user to understand is made possible when the guidance sent ence such as 'Please turn right for the rail way.' or 'Please to straight directly along the railway.' are generated using the direction of the railway as a reference.

### (Embodiment 13)

In embodiment 7 to embodiment 12, the guidance sentence generation means does not give guida nce of turning right or left at the first dire ction turning poi nt when the start ing point is near the point where a direction turn is made for the first time, but may generate the guidance sentence of the mark that shows a direction turning direction from the direction turning point. For example, assume that the route search means has searched the route shown in Fig. 29(a) as the route having S as the starting p oint and G as the destination and that the starting point S and the first direction turning point n1 are near.

If the starting point S is the posit ion detected by using the radio wave of the tag or the like, it is possibl e that the user is not actually at S but at the opposite side of S when seen from n1 in Fig. 29(a) because the position is detected with an error. If the user is actually at the opposite side of S when seen from n1, the user moves to the opposite direction to m1 at n1 when the guidance sentenc e generation mean s assumes that the user is at S to generat e the guidance sentence as 'Please turn righ t at n1. Theref ore, when the star ting point and the first direction turning point are near, the guidance of turning right or left is not performed but the guidance sentence of the mark that shows the direction turning direction from the direction turning point is generated.

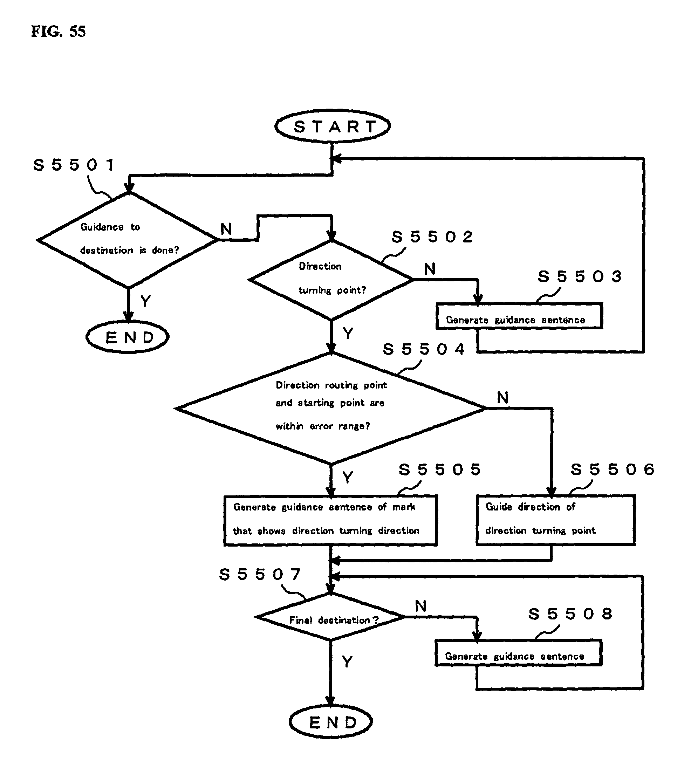

Fig. 55 is the flowchart that explains the processing of the guidance sentence generation by the guidance sentence generation means in this embodiment. Firstly, whether or not the guidance to the destination has been per formed is determined at step S5501. Specifically, whether or not the guidance sentence to the destination has been generated is determined, the processing ends if the guidance sentence to the destination has been generated, the processing moves to the step S5502 if not and whether or not the point to be guided is the direction turning point is determined. If it is not the direction turning point, the processing moves to step S5503 to generate the guidance sentence, and returns to step S5501. If it is the direction turning point, the processing returns to step S5504, whether or not the direction turning poi nt is near the starting point, that is, whether or not they are within an error range since this direction turning point is t he first direction turning point, and the processing moves to step S5505 if they are within the error range and the guidance sentence of the mark that shows the direction turning direction is generated. For example, in the case of Fig. 29(a), the guidance sentence as 'Please turn to the direction where m1 can be seen.' is generated at n1. If the first direction turning point and the starting point are not within the error range at step S5504, the processing moves to step S5506 and the guidance sentence that guides the direction of the direction turn is generated. Hereinafter, in step S5507 and step S5508, generation of the guidance sentence in a regular manner is repeated until the guidance sentence to the destination is generated.

As described, when the first direction turning point is near the starting point, the movement of the user to a totally different direction can be prevented by generating the guidance sentence of the mark that shows the direction turning direction.

### (Embodiment 14)

In embodiment 7 to embodiment 13, the route guid ance apparatus may inc lude the tag detec tion means, and the guidance sentence generation means may generate the guidance sentence that guides the positional information near the tag detected by the tag detecti on means. As the positional information near the tag, informat ion such as where the tag is or what is around the tag is cited as an example.

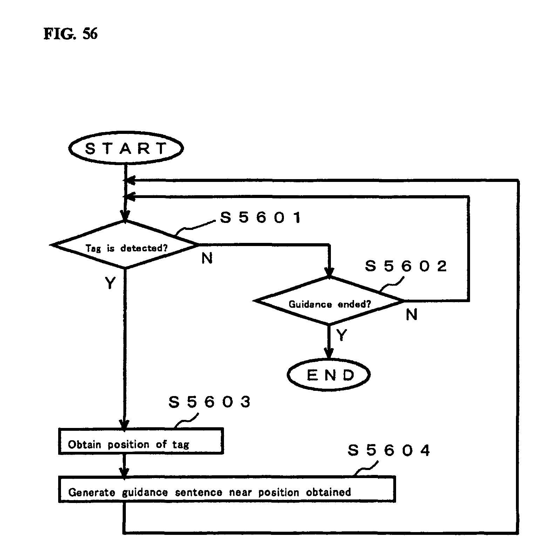

Fig. 56 is the flo wchart that explains the processing of the route guidance apparatus in this embodiment. In step S5601, whether or not the tag has been detected by the tag detection means is determined. If the tag is not detected, the processing moves to step S56 02 and whether or not the guidance has ended is determined. As the case where the guidance ends, a case where the user has pushed a button for guidance end or the like is cited. The processing ends if the guidance has ended, and returns to step S5601 if not.

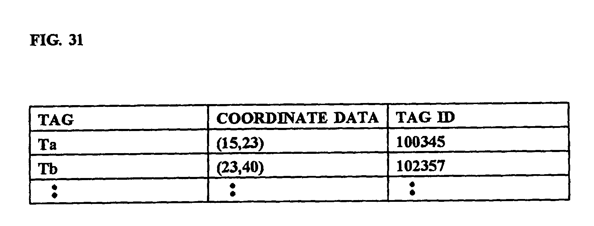

When the tag has been detected in step S5601, the processing moves to step S5603 to obtain the position of the tag. To obtain the position of the tag, it may be obtained from the contents where the ID's of tag s and coordinate positions are correlated and stored, as shown in Fig. 31. In step S5604, the guidance sentence that guides the positional information near the position obtained is generated, and the processing returns to step S5601.

As described, when the tag is detected, the guidance sentence that guides the positional information near the position thereof is generated, and thus the user guide d can know whether or not he/ she is moving to a right direction. Further, in a museum or the like, the user can be informed of the guidance sentence regarding an art object when he/she moves in front of the art object.

Furthermore, in this embodiment, the guidance sentences for each of mark information along the route are arranged in the route order and each guidance sentence may be read out synchronously with the detection of a tag by the tag detection means. Specifica lly, to give guida nce such that the user moves on the route, the information regarding the marks is arranged in the order of the marks that app ear as the user travels on the route, and each of information may be read out every time the tag is detected.

### (Embodiment 15)

In embodiment 7 to embodiment 14, the guidance sentence generation means may have a guidance sentence request acceptance function, and the gui dance sentence generation means may arrange the guidance sentences for each of the mark information along the route in the route order and may read out each guidance sentence when it accepts a guidance sentence request based on the guidance sentence request acceptance function.

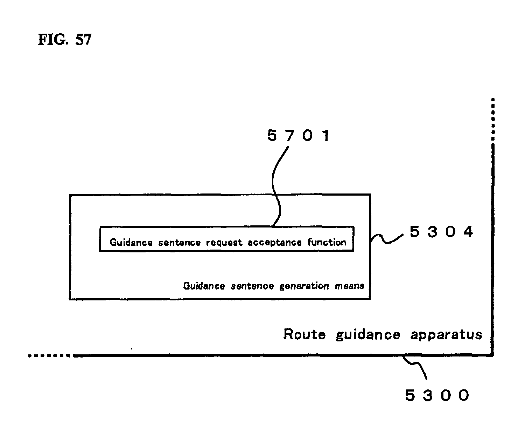

Fig. 57 shows a part of the function block diagram of the route guidance apparatus in this embodiment, in which the guidance sentence generation means 5304 has a guidance sentence request acceptance function 5701, and the guidance sentenc e request acceptance function 5701 accepts the guidance sentence request that is a request for reading out the guidance sentence. The guidance sentence request acceptance function 5701 includes input means such as a button, voice recognition, and a touch panel. When the guidance sentence request acceptance function 5701 accepts the guidance sentence request, the guidance sentence generation means arranges the guidance sentences for each of the mark information, which is the information rearding the to guide the user along the route in the rout e order, and read s out each guidan ce sentence sequentially. In other words, the guidance sentence generation means arranges and accumulates the guidance sentences for each of the mark inform ation in the route order, and perform s reading out of each guidance sentence when the guidance sentence request is accepted.

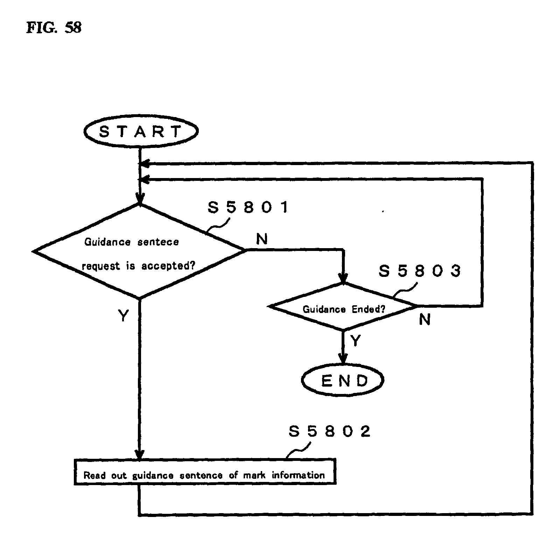

Fig. 58 is the flowchart that explains the processing of the guidance sente nce generation mea ns 5304 in this embodiment. In step S5801, whether or not the guidance sentence request has been accepted by the guidance sentence request acceptance function 5701 is determined, the processing moves to step S5802 if it has been accepted, and the guidance sentence of the mark information is read out. For example, reading out of the guidance sentence regarding the mark seen from the current position is performed such that in which direction it can be seen and such as which way to proceed for the direct ion. When reading out is finished, the processing returns to step S5801.

In the case where the guidance sentence request has not been accepted in step S5801, the processing moves to step S5803 to determine whether or not the guidance has ended, the processing ends if it has ended, and returns to ste p S5801 if not. Whether or not the guidance has ended is determined, for example, by detec ting the operatio n of the button or the like by the user or detecting that the user has reached the destination with the position determination means.

As described, the route guidance apparatus accepts the guidance sentence request with the guidance sentence request acceptance function 5701 and reads out the guidance sentence, and thus provision of the guidance sentence when the user wants the guidance sentence is made possible.

Further, the guidance sentence generation means 530 4 may have a user characteristic information acceptance function, and the guidance sentence generation means 5304 may provide the route information in accordance with user characteristic information that is information regarding a user's characteristic accepted based on the user characteristic information acceptance function. The user characteristic information acceptance function is a function to accept the user characteristic information that is the information regarding the user's characteristic, and it accepts a characteristic to be considered in performing the route guidance such as the user's age, whether or not the user is a foreigner, which language his/her mother tongue is if he/she is not a Japanese, whether or not the user is a vision -impaired person, a hearing -impaired person, a walking-impair ed person or an able-bodied person, for example. The guidance sentence generation means provides the route information in accordance with the user characteristic information accepted by the user characteristic information acceptance function. For example, reading out of th e guidance sentence is performed s lowly or characters included in a map are made large in the case of displaying the map when the user is a child or an age d person, and Chinese characters are used as little as possib le in the case of a child. When the user is a foreigner, read ing out of the guidance sentence and displaying of the map in his/her mother tongue is performed. Particularly, reading out of the route information is not performed but the route information is provided by displaying characters when the user is a hearing-impaired person, and the route information is not displayed but reading out is performed in the case of a vision-impaired person. Further, if there is an obstacle such as stairs is on the route, the guidance sentence that informs of it in advance may be generated and read out. More over, the guidance sentence regarding the marks meaningful particularly to the vision-impaired person, such as where textured paving blocks are, which direction to proceed for a direction from which, a specific sound is heard, what kind of a fee ling and a sound are made when poking a road surface with a stick, or how they change, and where a large object, a noticeable light source, and a guidance display in braille are, may be generated and read out. Further, when the user characteristic information that the user feels it difficult to move on the same passa ge as the able-bodied person or the user char acterisic information that he/she walks slower than the able-bodied pers on, the information such as in which direc tion a slope and an elevator are instead of st airs and how far they are may be provided, or an existence of a route where people's movement is slow may be provided.

### (Embodiment 16)

In embodiment 16 of the present invention, the route guidance apparatus in embodiment 7 or 8 further includes the tag detection means and route leading means. The tag detection means detects tags placed in the premises, the posit ion of the tag is obtained and the position where the apparatus is now is detected by detecting the tag by the tag detection means. The route leading mea ns performs displaying of the frame view or the viewpoint ima ge, which correspond to the tag position, and the route guidance sentence or reading out of the guidance sentence synchronously with detecting the tag by the tag detection means.

As described, since an appropriate frame view or viewpoint image and the route guid ance sentence are displayed and the guidance sentence is read out as the user moves on the route by performing detection of the position with the tag detection and performing displaying of the frame vi ew or the viewpoint image and the route guida nce sentence or reading out of the guidance sentence, service of the route guid ance easy to understand for the user can be provided.

### (Embodiment 17)

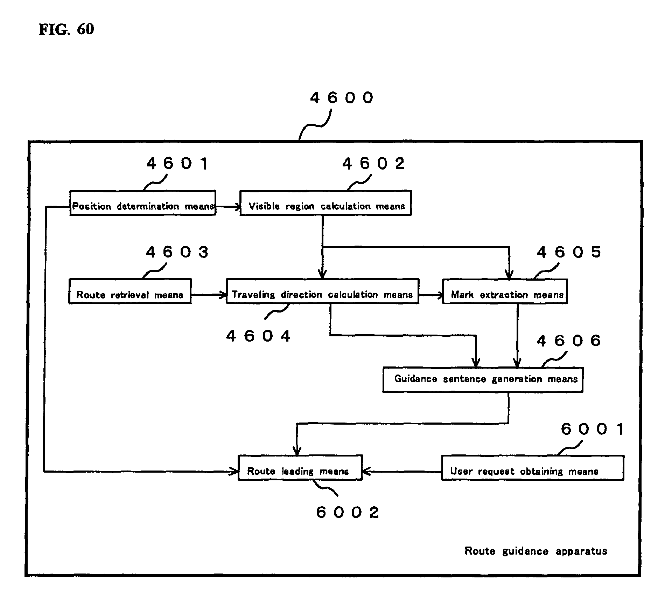

In this embodiment of the present invention, the position determination means 4601 in embo diment 7 or 8 detects the current position of the user, and user request obtai ning means and route leading means are furthe r included. Fig. 60 shows the function block diagram of the route guidance apparatus in this embodiment, and user request obtaining means 6001 and route leading means 6002 are added to Fig. 46.

The user request obtaining means 60 01 obtains the use r's request. Specific ally. it obtains a request that the user wants to receive provis ion of the route information, and it includes input means such as the button, the voice recogniti on, and the touch panel, for example.

The route leading means 6002 performs displaying of the frame view or the viewpoint image, which correspond to the tag, and the route gui dance sentence on the terminal or reading out of the guidance sentence in the route order in acco rdance with the user's request that the user request obtaining means 6001 obtains. Specifically, it stores which tag has detected with the movement of t he user to recogn ize the current p ositlon, displays the frame view or the viewpoint ima ge, which correspond to the current position recognized, and the route guidance sentence on the terminal or reads out the guidance sentence, and performs leading suc h that the user moves on the route when the user's request is made.

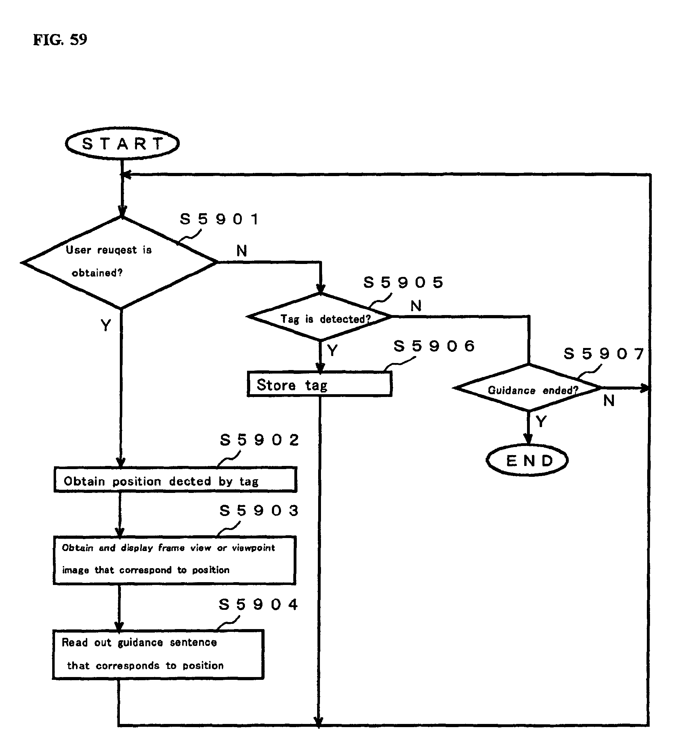

Fig. 59 is the flowchart that expl ains the operatio n of the position determination means 4601, the user request obtaining means 6001, and the route leading means 6002 in this embodiment. Firs tly, on step S590 1, whether or not the user request has been obtained is deter mined on the user request obtaining means 6001. If it has been obtained, the processing moves to step S590 2 to obtain the position detected by the tag. The position dete cted by the tag is detecting an ide ntifier of the tag by receiving the radio wave from the tag and detecting the position by information where the identifier of the tag and the position are corresponded with each other. In step S5903, obtaining and dis playing of the fr ame view or the viewpoint image, which correspond to the pos ition, is perform ed (step S5903 is not exec uted if the image data search means does not exist.). In step S5904, reading out of the guidanc e sentence that corresponds to the position is performed, and the processing returns to step S5901.

In the case where it is determined that the user request has not been obta ined in step S590 1, the processing moves to step S5905 to determine whether or not the tag has been detected by the position determination means 4601, and the processing moves to step S590 6 to store the tag if the tag has bee n detected. Specifically, the identifier of the tag is stored to make it possible to dete ct the position in step S5902. Then, the processing returns to step S5901.

In step S5905, whether or not the guidance has ende d is determined if the tag is not detec ted, the whole process ends if it has ended, and the processing returns to step S5901 if not. Whether or not the guidance has ended is perf ormed by detecting whether or not the tag detected in the position determination means 4601 is the one of the destinat ion or by detecting that the user performed a button operation of a guidance end.

### (Embodiment 18)

This embodiment relates to the visible region caculator. In this embodiment, the visible region calculator, when the viewpoint and one or a plurality of polygons are in one polygon, the visible region from the viewpoint regarding an outermost polygon is computed first. Next, a part seen fromthe viewpoint only for each poly gon is computed as in a row of continuous line segments regarding the polygons other than the outermost polygon, the row of the line segments computed is arranged in the argument order, the row of the line segments, a part of the line segment seen from the viewpoint is computed in the order of arrangement taking in consideration a positional relation between the row of the line segm ents and a visible region generated at the point where the processing of a previous row of line segments ends, and the range seen from the viewpoint is calculated wit h the processing to find a new visi ble region by connecting the area computed and the visible region.

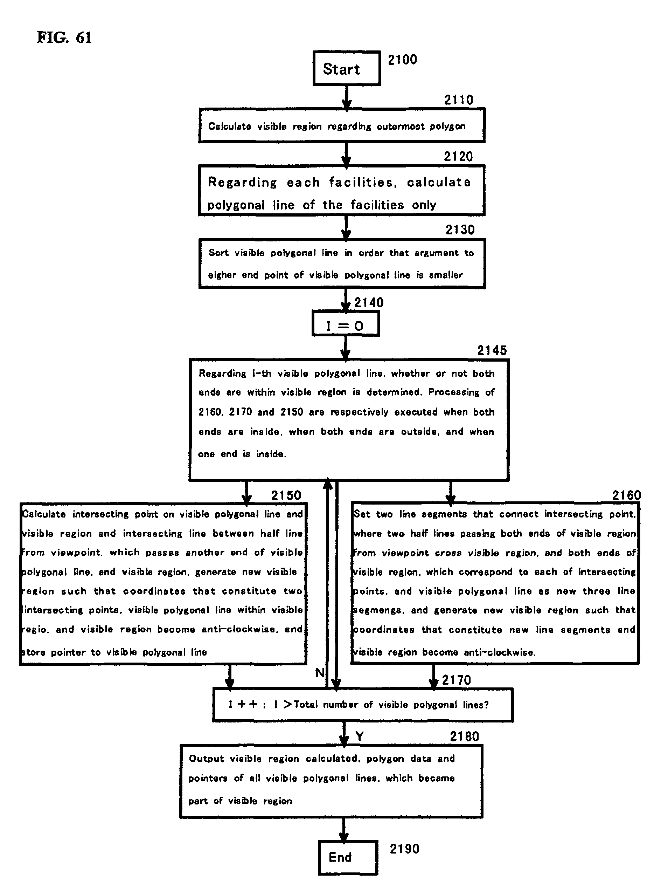

Fig. 61 is the flowchart that explains the operation of the visible region calculator in this embodiment.

In step 2110, the visible region regarding the outer most polygon is comput ed. The visible region calculator in this embodiment is one to calculate the visible region when the viewpoint and one or a plurality of polygons are in one polygon, and the 'one polygon' that incudes the 'viewpoint and one or a plurality of polygons' inside thereof is the outermost polygon. In this step, the visible region that is a visible range seen from the viewpoint rega rding the outermo st polygon is calculated. When the outermost polygon is a conv ex figure, the outermost pol ygon becomes the visible region as it is, but when the outermost polygon is a concave figure, the range narrower than the outermost poly gon sometimes becomes the visible region.

In step 2120, the visible polygo nal line of only each facilities is calculated regarding the facilities. The 'each facilities' means the polygon inside the outermost polygon, and the 'visible polygonal line' is the continuous line segments of the part seen from the viewpoint of the polygon.

In step 2130, regarding the row of line segments called the visible polygonal lines calculated in step 2120, the visible polygonal line is sorted in the order that the argument for either end point of the visibl e polygonal line is small. The 'argument' is an angle in which a predetermined direction is specified and the direction is set as a reference.

In step 2140, 0 is substituted for a variable I in order to bring out sequentially the visible polygonal line sorted.

Steps 2145, 2150 and 2160 are steps that correspond to the foregoing 'a part of the line segment seen from the viewpoint is calculated taking in consideration a positional relation between the new of the line segments and a visible region generated at the point where the processing of a previous row of line segments ends, and the range seen from the viewpoint is calculated wit h the processing to find a new visi ble region by connecting the area calculated and the visible region'.

Firstly, step 214 5 determines whet her or not both ends are inside or outside the visible region regarding an I-th visible polygonal line. The proce ssing of step 216 0, 2170 or 2150 is executed respectively if the both ends are inside, the both ends are outside, or either one is inside.

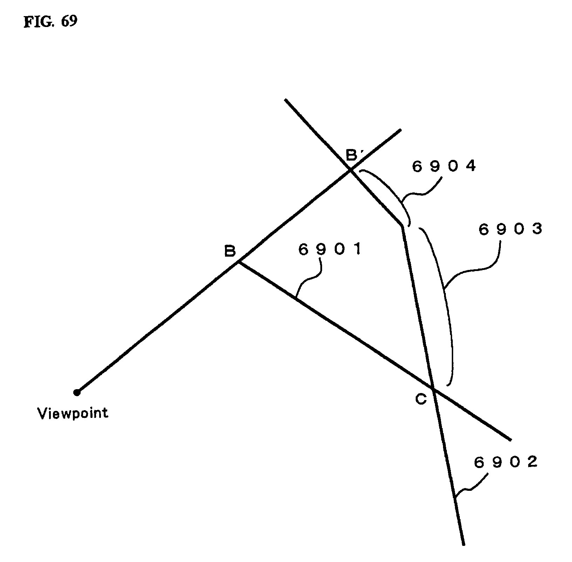

Step 2150 is the processing when either one of the end points of the visible polygonal line is inside the visible region, in which the intersecting point between the visible polygonal line and the visible region and the intersecting point between the half line from the viewpoint, which passes another end of the visible polygonal line, and the visible region are calculated, a new visible region is generated such that the coordinates that constitute the two intersecting points, the visible polygonal line within the visible region, and the visible region become counter-clockwise, and a pointer to the visible polygonal line is sto red. Specifically, in Fig. 69, a line segmen t 6901 is the I-t h visible polygon al line, point B is inside the visible regio n, and the end poi nt of the line segment 6901 , which is not poi nt B, is outside the visible region. A polygo nal line 6902 is a side of the polyg onal line that constitutes the visible region. In thi s case, intersecting point C between the line segment 6901 that is the visible polygonal line and the visible region is calculated. Further, intersecting point B' between the half line from the viewpoint, which passes point B tha t is another end of the line segment 6901 as t he visible polygo nal line, and the visible region is compute d. The new visib le region is gene rated such that the coordinates between the two intersecting points C and B' and the visibl e polygonal line BC within the visible region become counter-clockwise. In other words, a new visi ble region having a polygona l line called CBB' as a boundary is generated. The pointer of CB B' that is the bo undary of the new visible region is stored. The 'pointer' is one that indicates a thing by its position, and the pointer of CBB' is the one that indicates the position of the polygonal line called CBB'. For example, when dat a of sides called CB and BB' is ac cumulated in a memory of a computer, a memor y address where the data of sides is accumula ted is stored. When this processin g ends, it moves to step 2170.

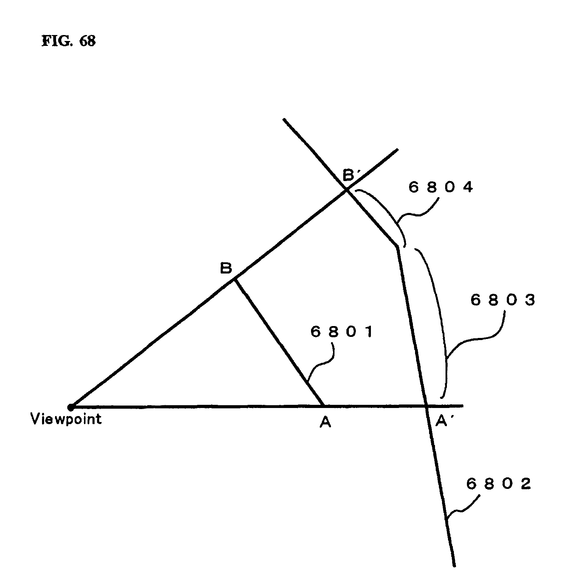

Step 2160 is the processing when both of the end points of the visible polygonal line are inside the visibl e region, in which two line segments that con nect the intersec ting point, where two half lines passing the both ends of the visible region from the viewpoint cross the visible region, and the both ends of the visible region, which correspond to each of the intersecting points, and the visible polygonal line are set as new three line segments, a new visible region is generated such that the coordinates that constitute the new line segments and the visible region become counter-clockwise, and the pointer to the visible polygonal line is stored. Fig. 68 exemplifies the case where the both of the end points of the visible polygonal line are inside the visible region, where a side 6801 having end points as A and B is the visible polygonal line and the boundary of the visible region is a line segment 6802. In this case, a half line passing A is drawn from the viewpoint, and a point that crosses the line segment 6802 is computed, which is set as A'. Further, a half line passing B is drawn from the viewpoint and a point that crosses the lin e segment 6802 is computed, which is set as B' . Accordingly, AA' and BB' are obtained as the two line segments that connect to the both ends of the visible region, and A'AB B' are connected to generate a new visible region such that the coordinates that constitute the line segments and the visible polygonal line 6801 become counter -clockwise. The pointer of A'ABB' that is the boundary of the new visibl e region is store d. Specifically, when the data of the sides called A'A, AB, and BB' is accumulat ed in the memory, the memor y address accumul ated is stored. When this processing ends, it moves to step 2170.

Step 2170 is the processing executed after the processing of step 2160 ends after the process ing of step 2150 ends in the case where the both ends of the I-th visible polygonal line are outside the visib le region, the value of I is incre ased only by 1, the process ing moves to step 2180 since the processing of all the visible polygonal lines has ended if I beco mes equal to the number of the polygonal line s, it moves to ste p 2145 if not, and the proc essing of the nex t visible polygon al line is performed.

In step 2180, since the processing of all the visible polygonal lines has ended and the visible region has been computed, outputt ing of the vi sibl e region computed polygon data and the poin ters of all the visible polygonal lines that has become a part of the visib le region is performed. Specifically, to output the visibl e region as the polygon data, the pointer of all the visible polyg onal lines that constitute the visible region are output.

In such an embodiment, since the direction that becomes a reference to decide the argument is arbitrarily spe cified and the visible regio n can be calculat ed, the range see n from the viewpoint can be calculated faster than using a conventionally known method when the viewpoint and the polygons exist inside the outermost polygon.

### (Embodiment 19)

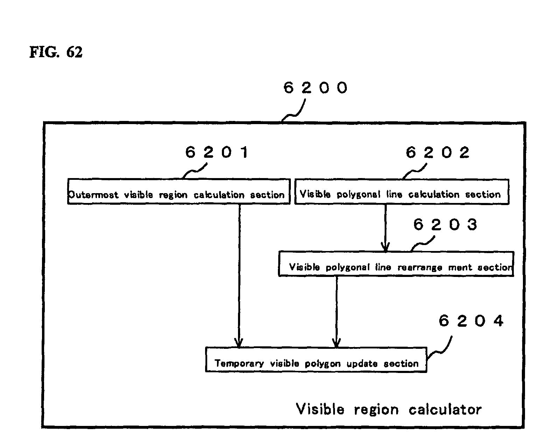

The visible region calculator in this embodiment is one that calculates the range seen from the viewpoint in the case where the viewpoint and one or a plurality of polygons are inside one polygon (hereinafter, referred to as the outermost polygon'). Fig. 62 shows the function block diagram of the visible region calculator in this embodiment, and a visible region calculator 6200 includes: an outermost visible region calculation section 6201; a visible polygonal line calculation section 6202; a visible polygonal line rearrangement section 6203; and a temporary visible polygon update section 6204.

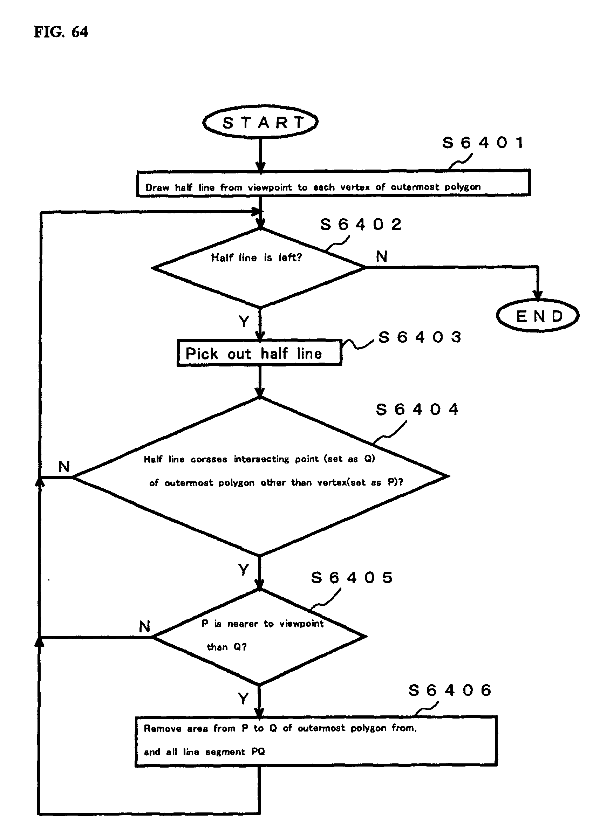

The outermost polygon visible region calculation section 6201 finds the visible polygon that is the range seen from the viewpoint of the outermost polygon, and calculates the first temporary visible polygon. The outermost polygon and the temporary visible polygon match when the outermost polygon is the convex figure, and the flowchart that explains the calculation processing of the temporary polygon in a general shape is exemplified in Fig. 64. Firstly, in step 56401, the half lines are drawn from the view point to each ver tex of the outermost polygon. Steps from step S6402 are the processing performed, where each one of the half lines drawn are brought out, and whether or not a half line is left is determined in step S6402. The processing ends i f it is not left, and the polygon at this point is the temporary visible polygon. The processing moves to step S6403 if a half line is left to brought out. In step S64 04, whether or not the half line crosses at an intersecting point other than the vertex of the outermost polygon is determined, the process ing returns to ste p S6402 if not, the vertex of the outermost polygon is set as P and another intersecting point is set as Q if the half line crosses at the intersecting point other than the vertex of the outermost polygon, and the processing moves to step S6405.

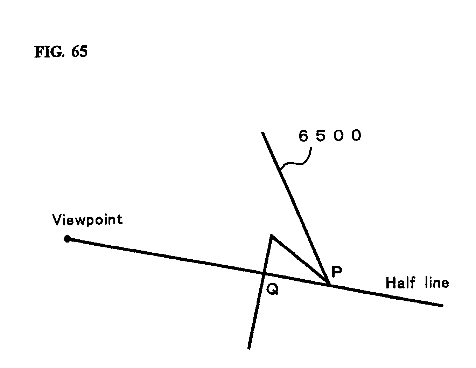

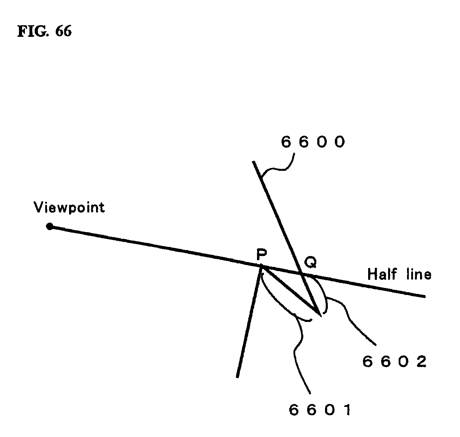

In step S6405, whether or not P is nearer the vieswp oint than Q. If P is not nearer the viewp oint than Q, it is the state as shown in Fig. 65 and at least the vicinity of Q can be seen from the viewpoint, and thus the processing returns to step S6402 without perf orming anything. If P is nearer the viewpoint than Q, it is in the situation as shown in Fig. 66, the processing thus moves to step S640 6, and the area from P to Q of the outermost polygon is remove d to add a line segment PQ. In other words, in Fig. 66, since the region surrounded by a line segment 6601 and a line segme nt 6602 cannot be seen from the viewpoint, the area from P to Q of the outermos t polygon. that is, the line segment 6601 and the line segment 6602 are removed from a side 6600 of the outermost polygon to add the line segment PQ, and thus the temporary visible polygon is formed. Then, the processing retu rns to step S6402 to perform the processing of the next half line.

The visible poly gonal line calcu lation section 6202 computes the visi ble polygonal lin e that is a part seen from the viewpoint for each polygon ins ide the outermost polygon ignoring the existence of other polygons. Specifically, regarding each polygon in the outer most polygon, it is assumed that only the poly gon exists and selecting of visible sides out of the ones of the polygon is performed. In this processing, the half line is drawn from the viewpoint to a point on each side of the polygon and if the half line crosses another side of the polygon before it crosses the side, the side cannot be seen from the viewpoint, and thus it does not become the visible polygonal line, and on the contrary, if the half line does not cross another side before it crosses the side, the side can be seen from the viewpoint, and it becomes the visible polygonal line. Note that the visible polygo nal line calculat ion section 6202 may compute individual line segment that const itutes the visible polygonal line that is a polygonal line, inst ead of the polygonal line where the line segments called the visible polygonal lines are connected at the end points. Her einafter, the individual line segment that constitutes the visible polygonal line is simply called the 'visible polygonal line' to simplify description.

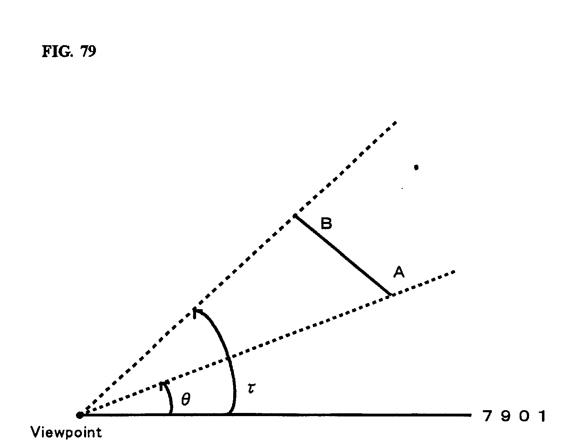

The visible poly gonal line rearr angement section 6203 arranges the visi ble polygonal lin e computed in the visible polygonal line calculation section 6202 in the argum ent order of a visible limit point, which ha s a smaller argument to a reference line that is the half line drawn from the viewpoint and the end points of the visible polygonal line. For example, in the case whe re there are the viewpoint and a visible polygonal line AB as exemplified in Fig. 79, when the reference line that is the half line drawn from the viewpoint is a half line 7901, the argument of end point A is θ that is an angle formed by the hal f line drawn from the viewpoint to A and the reference line, the argument of end point B is τ simi larly, and thus the end poin t A is the visible limit point of the visible polygonal line AB because θ is smaller than τ. The visible polygonal rearrangement section 6203 arranges the visible polygonal line in the argument order of the visible lim it point. In the following desciption, it is assumed that the visible polygonal line is arranged in the order of the smaller argument of the visible limit point.

The temporary visible polygon update section 6204 performs the foll owing first proce ssing and second processing regarding the vis ible polygonal li ne in the order where the visible polygonal line has been arranged in the visible polygonal line rearrangement section. Firstly, the first processing is the processing in the case where A and B are inside the temporary vis ible polygon when the both ends of the visible polygonal line are set as A and B (A is set as the vis ible limit point), in which visible lines that are the half lines severally passing A and B are drawn from the viewpoint to the temporary polygon, A' and B' that are the inte rsecting points between the visible lines and the temporary polygon are computed, an area of the side from A' to B' of the temporary visible polygon is removed, and A' to A, A to B, and B to B' are sequentially connected to form a new temporary visible polygon. Specifically, the case where the first processing is performed is the case where the visible polygonal line 6801 having A and B as the end points is inside the temporary visible polygon 6802, which is a side where the viewpoint exists, as shown in Fig. 68. In this case, the visible line that is the half line passing A is drawn from the viewpoint to find the intersect ing point with the temporary visible polygon 6802, and it is set as A'. Similarly regarding B, the visible line that is the half line passing B is draw n from the viewpo int to find the in tersecting point with the temporary polygon 6802, and it is set as B'. In finding a new temp orary visible pol ygon, 6803 and 680 4 that are an area of the side from A' to B' of the tempera ry visible polygon are remov ed, and adding of a side A'A, a side AB and aside BB' is performed.

The second is the processing in the case where A is outside the tempo rary visible poly gon and B is insid e where the both ends of the visible polygonal line are set as A and B (A is set as the visible limit point), and it is the processing in which an inters ecting point C bet ween the visible polygonal line and the tempo rary visible poly gon is computed, the visible line that is the half line passing B is drawn, B' that is the intersecting point with the temporary visible polygon is computed, an area of the side from C to B' of the t emporary visible polygon is removed, and C to B, and B to B' are sequentially connected to form a new temporary visible polygon. Specifically, the case where the sec ond processing is performed is the case where the end point B of the visible polyg onal line 6901 is inside the temporary vislb le polygon and another end point is outside the temporary visi ble polygon as sho wn in Fig. 69. In this case, the visible polygonal line 6901, the temporary visible polygon, and the intersecting poi nt C are computed. Further, the visible line that passes from the viewpoint to B is drawn to find B' tha t is the intersecting point with the temporar y visible polygon . Then, 6901 and 6902 that are an area of the side from C to B' of the temporary visible polygon are removed, and adding of a side CB and a side BB' is performed.

Note that a case can be considered where the both ends of the visible polygonal line exist outside the temporary visible polygon, but the temporary visible polygon is formed after the visible polygonal line is rearranged according to the argument of the visible limit poin t and an area see n from the viewpoint does no t exist in the vis ible polygonal li ne in this case, and thus there is no need to perform processi ng to such a visible polygonal line.

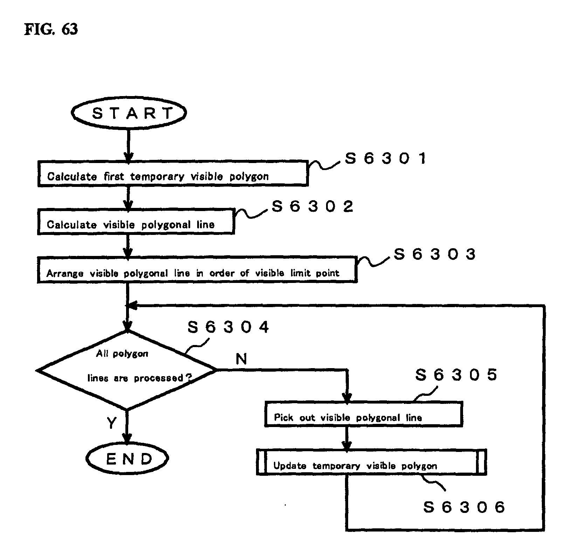

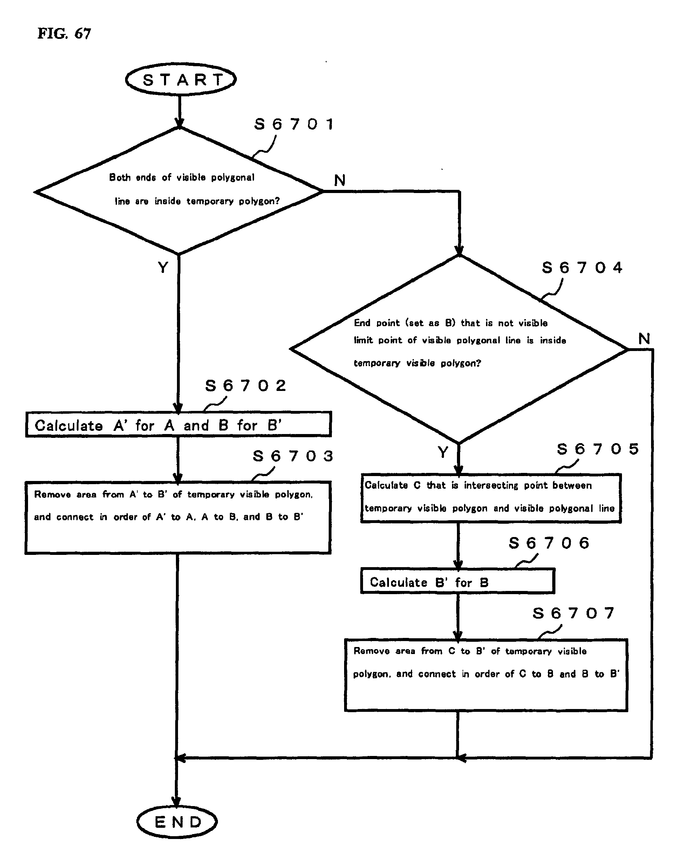

Fig. 63 and Fig. 67 are the flowch arts that explain the operation of the visible region calculator 6200, and they can be regarded as the flowcharts that explain steps executed by the computer in order to realize the visible region calculator 6200 by the compu ter. In the case of realizing the visible region calculator 6200 by the computer, the function block diagram of the visible region calculator exemplified in Fig. 62 can be regar ded as the diag ram that shows a module configuration of a program executed by the computer.

Step S6301 is an outermost visible region calculation step, and computation of the first temporary visible region is obtained in the outermost visible region calculation section 6201. Step S6302 is a visible polygonal line calculation step, and the visible polygonal line is calculated by the visible polygonal line calculation section 6202. Step S6303 is a visible polygonal line rearrangement step, and arrang ing of the visible polygonal line according to the argument of the visible limit point is performed by the visible polygonal line rearrangement section 6203.

Step S6304 to step S6306 are steps in which the visible polygonal line is brought out by one to perform processing, whether or not there is no visible polygonal line is determined in step S6304, the processing ends when there is no visible polygonal line, and the temporary visible region at this point is the visible polygon. If the visi ble polygonal line is left, the processing moves to step S6305 to bring out the visible polygonal line. Step s6306 is a temporary visible polygon update step, and the temporary vis ible polygon is updated by the temporary visible polygon update section 6204.

The processing of updating the temp orary visible pol ygon is shown by the flowchart in Fig. 67, and whether or not the both ends of the visible polygonal line are inside the temporary visible polygon is determined first in step S6701. If so, the processing moves to step S6702, and moves to step S67 04 if not.

Step S6702 is executed when the both ends of the visible polygonal line are inside the temporary visible polygon, which is the case of Fig. 68. In this case, the half lines are severally drawn from the viewpoint to the end point s A and B of the visible polygonal line, an intersecting point A' and the half line passin g A and the temporary visible polygon is computed, and B' is computed simil arly regarding B. In step S6703, an area from A' to B' of the temporary visible polygon, that is, 6803 and 6804 are removed, and A' to A, A to B, and B to B' are sequ entially connected to form a new temporary visible polygon.

Step S6704 is exe cuted is when neither both ends of the visible polygonal line are inside the temporary visibl e polygon, whether or not th e end point of th e visible polygon al line, which is not the visible limit poi nt, is inside the temporary visible polygon is determined, the processing moves to step S6705 if so, and the processing of the flowchart in Fig. 67 ends if not.

The case where the processing has moved to step 6705 is the case exemplif ied in Fig. 69, and C that is the intersecting point between the temporary visibl e polygon and the visible polygonal line is computed. In step S6706, the half line passing B is draw n from the viewpo int to find B' that is the intersecting point with the tempora ry visible polygo n. In step S6707, an area of the side from C to B' of the tempora ry visible polygon is remove d, and C to B and B to B' are sequ entially connected to form a new visible polygon.

According to the visible region calculator or the visible region calculation program by this embodiment, it is possible that the reference line is specified in any direction to start calculation of the visible region, and the visible region can be computed more efficiently than to find by the conventionally known method.

### (Embodiment 20)

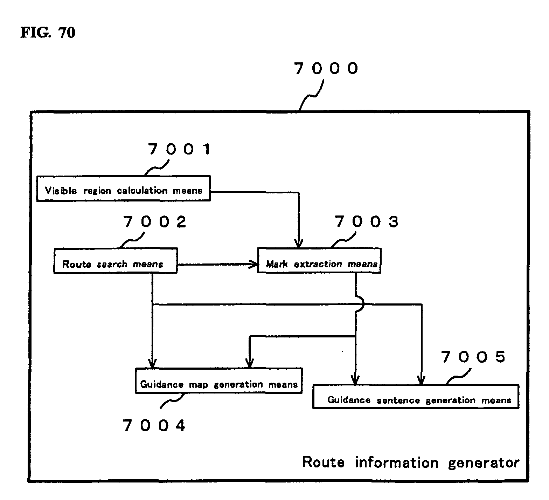

Fig. 70 shows the function block diagram of the route information generator of embodiment 20 in the present invention. In this embodiment, a route information generator 7 000 has: visible region calculation means 7001; route search means 7002; mark extraction means 7003; guidance map generation means 7004; and guidance sentence generation means 7005.

The visible regio n calculation means 7001 calculate s the range seen from the user. As the visible region calculation means 7001, calculation means using a conventionally known algorithm or the visible region cal culator in embodi ment 18 or embodiment 19 may be used.

The mute search means 7002 search es the route from the point where the user is now or the starting point that the user enters to the destination that the user enters. To obtain the point where the user is now, a GPS (global positioning system) is used or the identifier of the tag is obtained by receiving the radio wave emitted from the tag embedded in the wall surface or the floor, and the position is obtained from the identifier. Further, the point where the user is now may be found by detecting an acceleration and integrating it. Further more, the map may be displayed on the touch panel to allow the user to instruct the star ting point and the destination, the starting point and the des tination may be accepted by using an input device such as a keyboard, or the starting point and the destination may be accepted by the voice recognition. A table in which the starting points and the destina tions are correlated is prepared as Fig. 47 to search the rou te, and to obtain the rout e from the star ting point give n to any destination, a line where the starting point given appears in the row of the starting points is retrieved, a value of the row of the final destinations on the line is obtained, a line that has the value obt ained as the star ting point is ret rieved, and a value of the ro w of the final de stinations on the line is obtained, which are repeated and continued until the destination is obtained as the value of the row of the final destinations. By performing such processing, arow of two pairs that consist of a point (origin) and another point (ending point) is obtained.

The mark extraction means 7003 extracts the mark to be guided out of the visible region from the current position or the point where the guidance is given. Spectfi cally, the visible region, which is the range seen from the current position or the point where the guid ance is given, is calculated by the visible reg ion calculation means 7001 such tha t the user proceeds on the route searched by the route search means 7002, the landmark to be guided to, that is, the landmark that shows the direction where the user should proceed next is extracted out of the visible region. For this extraction, using the table where the points on the route and their coordinate positions are correlated as shown in Fig. 48 and the table where the marks and their coordin ate positions are correlated shown in Fig. 49, when the user has reached a point on the route, the direction from the point to a point where he/she should proceed is calculated, and finding of the landmark seen in the direction near the direction is performed.

The guidance map generation means 7004 generates the map for route guidanc e, on which the route, the mark extr acted, and the point to be guided are displayed. Specifically, it generates the map where the route searched by the route search means 7002, the landmark extracted by the mark extrac ting means 7003, and the poi nt to be guided, that is, the point where the user should go nex t are displayed. For this purpose, the table where the points and their coordina tes are correlate d shown in Fig. 48 and the table where the landmarks and their coordinates are correlated shown in Fig. 49 are used, and out of the coordinate of the landmark, the coordinate of the point to be guided, and the coordinate of the point to go to next, the map including these coordinates may be searched from the map database.

The guidance sen tence generation means 7005 gene rates the guidance sentence of the route. For example, the table as shown in Fig. 38 where two or three points, which con tinuously constitute the route searched by the route search means 7002, and the guidance sentence data are correlated is prep ared, and the guidance sentence is generated referring to the table, which is cited as one example.

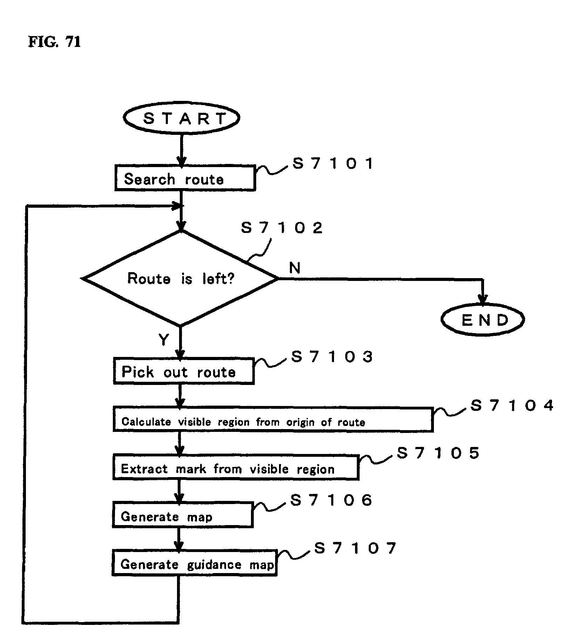

Fig. 71 is the flowchart that explains the processing of the route informa tion generator 70 00 in this embodi ment. In step S7101, the route from the point where the user is now or the starting poin t where the user enters to the des tination where the user en ters is searched by using the rout e search means 7002. A loop is formed afte r step 7102, and from step S7103 to step S7107 are repeated until it is determ ined that the route is not left in step S7102.

In step S7103, the route is brough t out. Specifica lly, a pairs of the origin and the endi ng point is broug ht out. In step S7104, the visible region from the origin is calculated by the visible region calculation means 7001. In step S7105. the mark is extra cted by the mark extraction means 7003 from the visible region calculated at step S7104. In step S7106, the map is generat ed by the guidance map generation means 7004. In step S7107, the guidance sent ence is generate d by the guidance sentence generation means.

The map and the guidance sentence generated in this manner are accumulated once by acc umulation means i nside or outside the rout e guidance information generator, and are provided to the user when necessar y, or moving of the user on the route is det ected and, for example, in the case where passing of the point to be guided is detected, the map and the guidance sentence regarding the point to be guided next may be generated and provided to the user.

### (Embodiment 21)

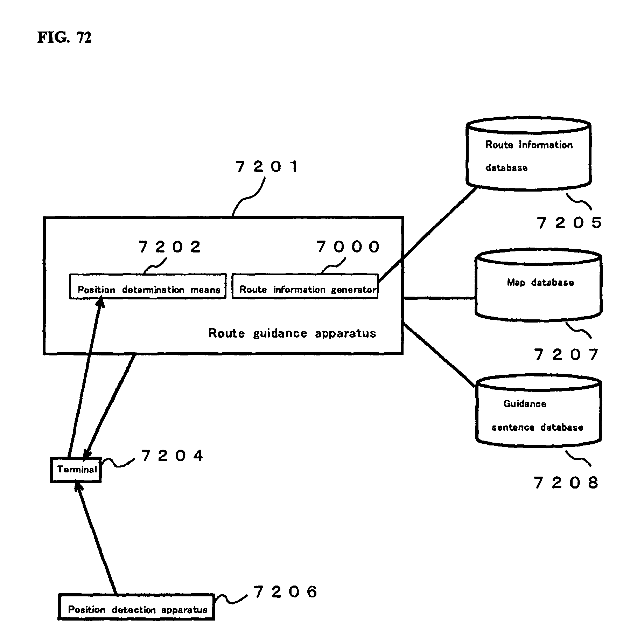

Fig. 72 exemplifies the function block, diagram of the route guidance system according to embodiment 21 of the present invention. In this embodiment, the route guidance system has: a route guidance apparatus 7201; a route informatio n database 7205; a terminal 7204; a position detection apparatus 7206; a map database 7207; and a guidance sentence database 7208.

The route guida nce apparatus 7201 has the route information generator 7000 and the position determination means 7202. The route information generator 7000 is the one described in embodiment 20.

The position determination means 7202 detects the current position of the terminal 7204, that is, a current terminal position. As a detection method, a method in which the user operates the terminal and the current positi on entered is received, or the tag is used as the position detection apparatus 7206, in which the ident ifier of the tag is obtained by receiving the radio wave emitte d from it, and the terminal 7204 may transmit it to the position determination means 7202. Conversely, the terminal emits the radio wave and the position detection apparatus 7206 receives it, and then the position determination means 7202 may obtain which position detection apparatus has received to detect the position of the terminal 7204.

The route inform ation database 7205 accumulates the information regar ding the route ob tained. The 'information regarding the route obtained' is the information regarding the route obtained by the route informa tion generator 7000, and the map for route guid ance, which has been generated by the guidance map generation means 7004 of the route information generator 7000, and the guidance sentence of the route, which has been generated by the guidance sentence generation means 7005, are accumulated. At this point, the point searched by the route search means 700 2, the map, and the guidance sentence are correlated and accumulated.

The position dete ction means 7206 is means for obtain ing the current positional information. The 'current positional information' is the position where the terminal 7204 is now, and the tag may be used as the pos ition detection means 7206 or the position detection means 7206 may be a satellite of the GPS.

The map databas e 7207 accumula tes the map data. Specifically, it is the database to obtain, from the current position of the terminal, which has been detecte d by the position determination means 7202. what is around it. In which direction it is, and in what kind of situation it is (situation of the floor or the like, situation of congestion of people, level of danger, or the like).

The guidance sentence database 720 8 accmulates the data for generating the guidance sentence. The data for generating the guidance sentence is the template for generating the guidance sentence, which is a sentence including variables X, Y and Z such as 'Y of X is Z.', for example, and it is data from which a specific guidance sentence is generated if specific values of X, Y and Z are determined.

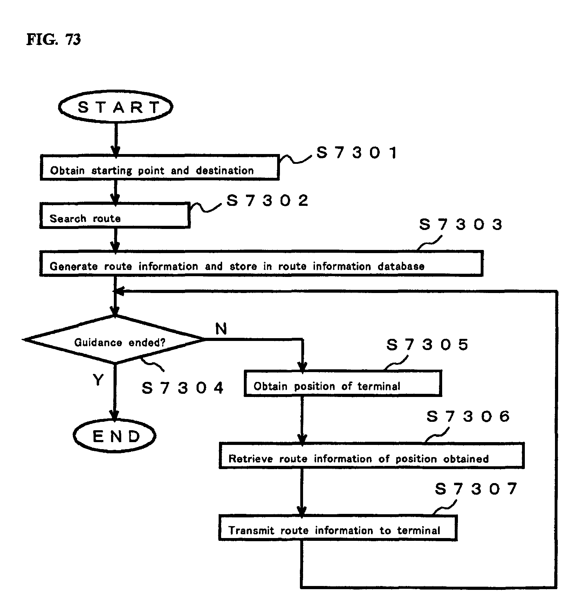

Fig. 73 is the flowchart that explains the operation of the route guidance system in this embodiment. In step S7301, the route information generator 7000 obtains the start ing point and the destinatio n. For example, it obtains the start ing point and the destination entered from the terminal 7204. Alternatively, it may obtain them from an input apparatus connected to the route guidance app aratus 7201. In step S7302, the route information generator 7000 searches the route, and it generates the route information to accumlate in the route information database at step S7303.

From step S7304 to step S7307 form the loop executed until the guidance ends , and whether or not the guidance has ended is determined at step S7304. For example, it is determined whether or not the position determination means 7202 has detected that the terminal 7204 is at the destination, or whether or not the user has informed that he/she did not desire further guidance by pressing a button on the terminal 7204. The processing ends if the end of guidance has been detected, and it moves to step S7305 if not. In step S7305, the position of the terminal 7204 is detected and obtained by the position determination means 7202. In step S7306, the route information of the position, which has been obtained in step S7305, is obtained by retri eving the route information database. At this point, the map dat abase 7207 and the guidance sentence database are retrieved simultaneously, what is around the position obtained from the map database 720 7 or the like is obtained, the template for generating the guidance sentence is obtained from the guidance sentence databas e 7208, and the retrieval result of the map database 7207 may be embedded in the variable areas of the template. For example, 'ahead' as X, 'stairs' as Y, and 'dangerous' as Z are obtained from the map database 7207, the template saying 'Y of X is Z.' is obtained, and the guidance sentence saying 'The stairs ahead are dangerous.' may be generated. In step S7307, the route information obtained in step S7306 is transmitted to the terminal 7204. And at this point, the guidance sentence, which is obtained by embedding the retrieval result of the map database 7207 in the variable areas of the template. may be transmitted.

### (Embodiment 22)

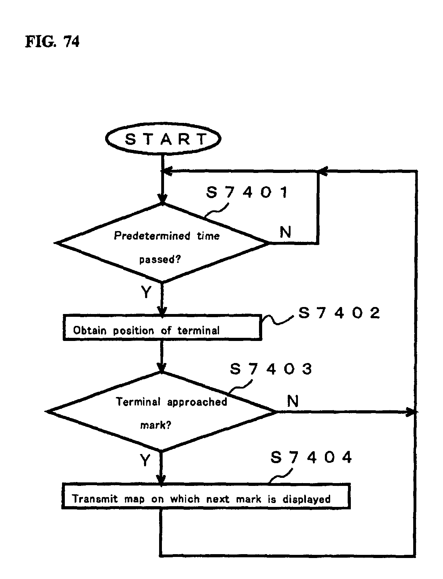

Fig. 74 is the flo wchart that explains the processing of a route leading unit in the pres ent invention. The route leading unit is an apparatus to allow the terminal to display the mark on the map to lead the user, and the route leading unit of the present invention obtains the current position of the terminal at a regular time inter val, and switche s the map displayed on the terminal to a map on which, the nex t mark in the route data is displayed when it detects approach to a mark that exists in the route data. Firs tly, the route lea ding unit waits until a predetermined time passes in step S7401 and after a predetermined time has passed, the processing moves to step S7402 to obtain the position of the terminal. For example, the terminal receives the radio wave of the tag and the position of the terminal is obtained based on the identifier of the tag that has received the radio wave, or the terminal receives the radio wave from GP S satellites and the position is obt ained form its result. In step S7403, whether or not it has approached the made is deter mined, the proces sing moves to ste p S7404 if it is determined that it has approac hed it, and return s to step S7401 if not. In step S7404, the map on which the next mar k is displayed is transmitted to the terminal in orde r to switch to the map on whic h the next mark is displayed. The foregoing description is based on the premis e that the termin al and the route leading unit are in remote positions, but the terminal may include the route leading unit.

As described, when it is detected that it has approached the lanchark, the user having the terminal can be notified beforehand of the direction to go at the next point by switching to the map an which the next mark is displayed, and rout e leading easy for the user to understand can be performed. Further, since an error is involved in obtaining the current position, display of the map on which the next landmark is displayed after the user has passed the landmark can be prevented, and the user can be prevented from being confused.

### (Embodiment 23)

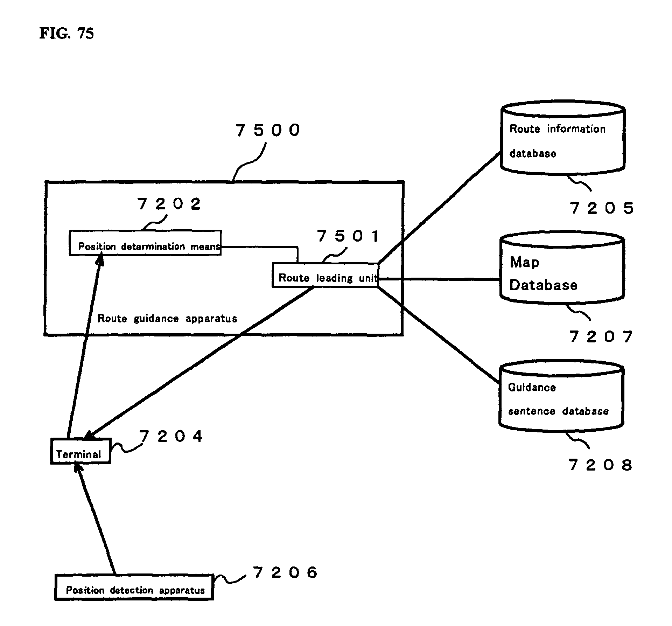

Fig. 75 is the function block diagram that explains an embodiment of the route guidance system of the present invention. In this embodiment, the route guidan ce system includes: a route guidance apparatus 7500; the route information database 7205; the terminal 7204; the position detection apparatus 7206; the map database 7207; and the guidance sentence database 7208. The route guidance apparatus 7500 includes a mute leading un it 7501 and the position determination means 7202.

The route leading unit 7501 is an apparatus to allow the terminal to displ ay the mark on the map to lead the user, and the route leadin g unit in embod iment 22 is use d in this embodiment.

The position determination means 7202 detects the current position of the terminal 7204. The result detected is sent to the route leading unit 7501 to enable the rout e leading unit 7501 to obtain the current position periodically.

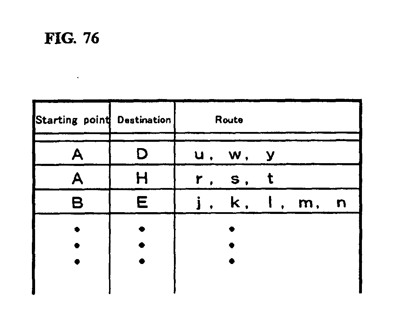

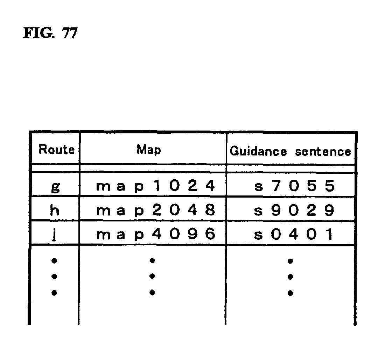

The route inform ation database 7205 acumulates the information regarding the route obtained. Although not shown in Fig. 75, the rou te guidance appara tus has a route inf ormation generator that searches the route from the starting point and the destination a nd generates the information regar ding the route, and the route information database 7205 accumulates the information regarding the route generated and obtained by this route information generator. The 'information regarding the route' includes the points to pass, the image data and the guidance sentence to guide the points to pass, and the like. Fig. 76 and Fig. 77 show one example of the contents of the route information database 7205, and the table of Fig. 76 correlates the routes formed by the points to pass with the or igins and the ending points and stores them. For example, the first line of this table means that the points to be passed are u, w and y when the starting point is A and the destination is D. Fig. 77 is the table in which the map data and the guidance sentences to be displayed on the terminal are correlated with the point to be passed and stored, which means that map 1024 is displayed on the terminal as the map and s70 55 is used as the guidance sentence as the guidance sentence when the point to be guided is g, for example . The route leading unit 7501 obtains the position of the terminal from the position determination means 7202 at a predetermined time interval, reads out the table of Fig. 76 to obtain the point to be guided next when the terminal approaches the mark that exists in the route, that is, the point to be guided, and obtains the map and the guidance sentence from Fig. 77 to transmit them to the terminal.

The terminal 7204 displays the route guidance information. The route guidance information is inf ormation such as the map and the guidance sentence transmitted from the route leading unit 7501, which guides the user so as to move on the route.

The map databas e 7207 accumula tes the map data. Specifically, it is the database to obtain what is around it, in which direction it is, and in what kind of situation it is (situation of the floor or the like, situation of congestion of people, level of danger, or the like), from the current position of the terminal, which has been detected by the position determination means 7202.

The guidance sentence database 720 8 accumulates the data for generating the guidance sentence. The data for generating the guidance sentence is the template for generating the guidance sentence, which is a sentence including var iables X, Y and Z such as 'Y of X is Z.', for example, and it is data from which a specific guidance sentence is generated if specific values of X, Y and Z are determined.

The route leading unit 7501, after having obtained the current position of the terminal, determines whether or not the terminal has appr oached the mark an d retrieves the ma p database 7207 to obtain the situation around the terminal, and generates the guidance sentence by using the data for generating the guidance sentence obtained from the guidance sentence database 7208 and transmits it to the terminal 7204.

With this kind of route guidance system, when it is detected that the user has approach ed the mark, the user having the terminal can be notified before hand of the direction to go at the next point by switching to the map on which the next mark is displayed, and route leading eas y for the user to understand can be performed. Further, sinc e an error is involved in obtaining the current position, displaying of the map on which the next mark is displayed after the user has passe d the mark can be prevented. and the user can be prevented from being confused. Furthe more, by generat ing an appropriat e guidance sentence while the map database 7207 is retrieved to obtain a surrounding situation, the guidance service easy for the user to understand can be provided.

### (Embodiment 24)

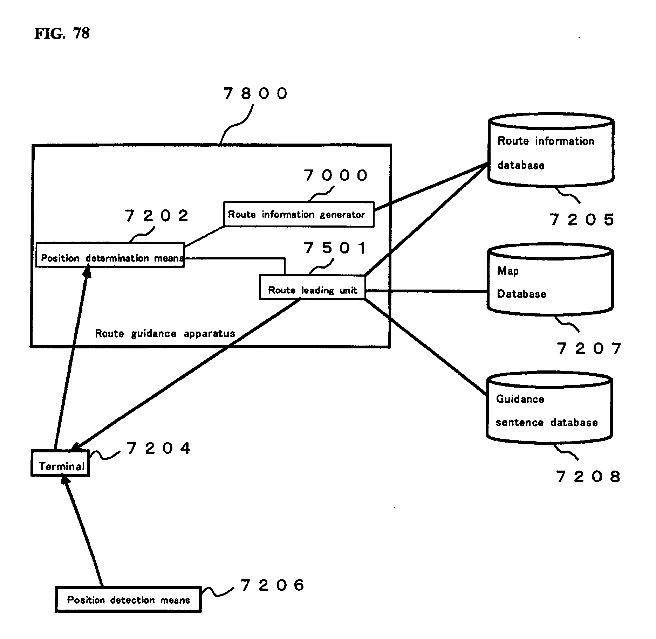

Fig. 78 shows the function block diagram of the route guidance system of embodiment 24 of the present invention. The difference from the route guidance system of embodiment 23 is that the route in formation generator 7000 is clarif ied in a route guidance apparatus 7800 and the route information generator 7000 uses the route information generator of embodiment 20.

Since the visible region of the user who moves on the route is calculated to generate the route information and the guidance is given based on it by using the route information generator of embodiment 20, the guidance service easy for the user to understand can be provided.

### (Embodiment 25)

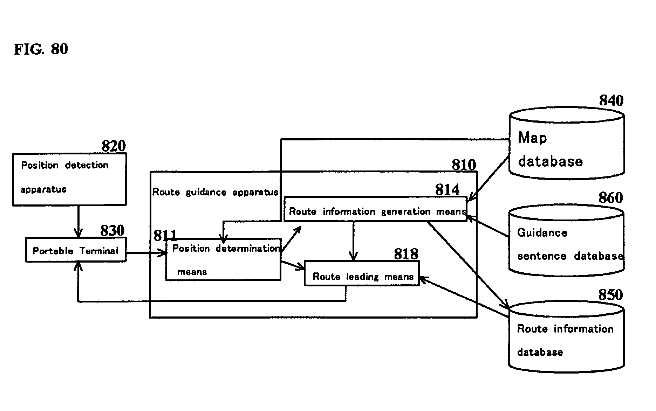

Fig. 80 is the block diagram that shows a configuration example of a route guidance system in embodiment 25 according to the present invention, and it comprises: a position detection apparatus 820 that obtains the user's current positional information; a portable terminal 830 that transfers the information from the position detection apparatus to the route guidance apparatus and displays the route guidance information from the route guidanc e apparatus; a map database 840 where the database of map is accumulated; a guidance sentence database 860 where the dat a to constitute the guidance sentence of route based on the rou te search result; a route information database 850 where the route guidance information generated by the route information generation means is stored; and a route guida nce apparatus 810 that generates t he route information and leads the route bas ed on the route information generated.

The route guidan ce apparatus 810 comprises : posi tion determination means 811 that converts the information of the position detection apparatus into coordinates; route information generation means 814 that generates the route information; and route leading means 818 that leads the route based on the route information generated.

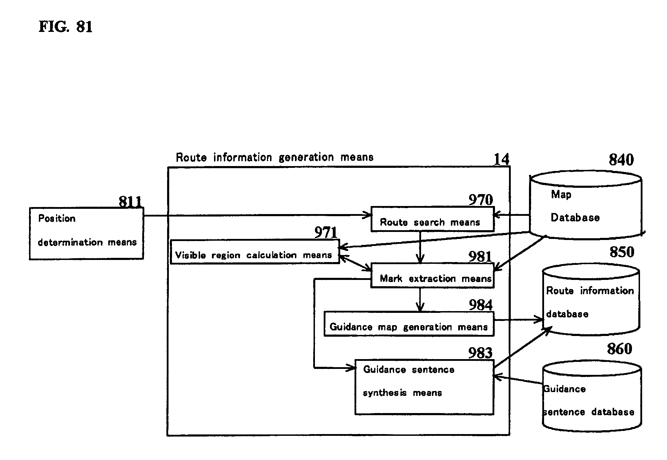

Fig. 81 is the block diagram of the route inform ation generation means, and it comprises: visible region calculation means 971 that calculates the range seen from the current position; route search means 970 that searches the route to the destination; signpost extraction means 981 that extracts the mark to be guided from the visible region; guidance map generation means that generates the map for route guidance based on the route search resul t; and guidance sentence synthesis means 983 that generates the route guidance sentence.

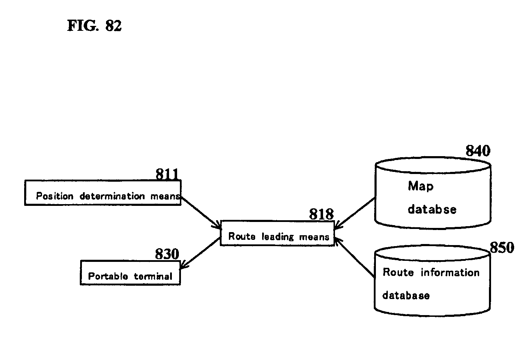

Fig. 82 is the blo ck diagram of the route leading means, the route leadin g means 818 receives the user's current position from the position det ermination means 811 and determines the guidance sentence and the map to be displayed, obtains the route information to be displayed from the route information data 850 if the rout e guidance data currently displayed needs to be converted, and send it to the portable terminal 830.

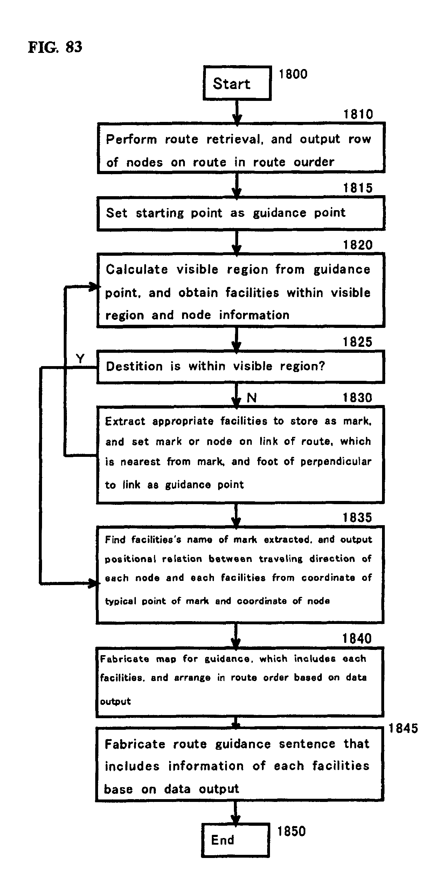

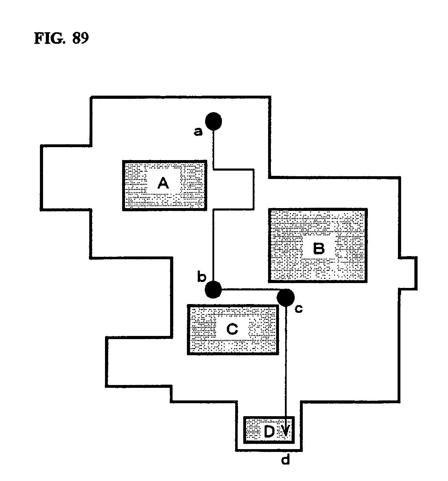

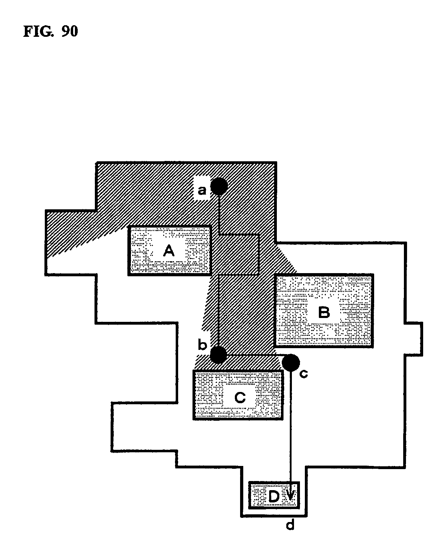

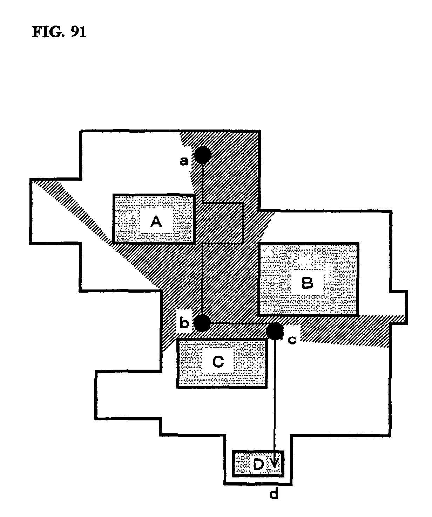

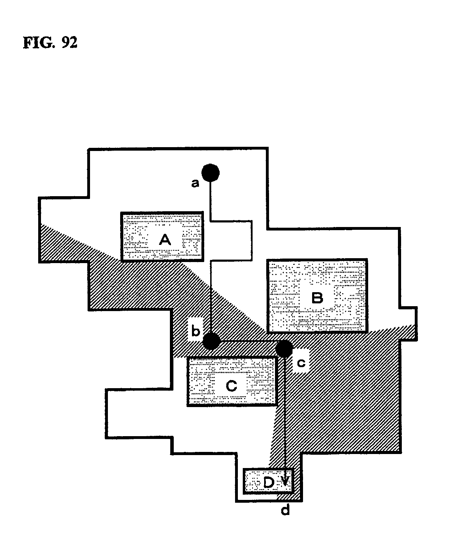

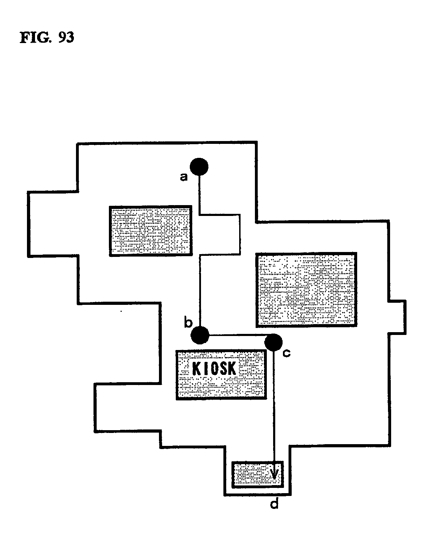

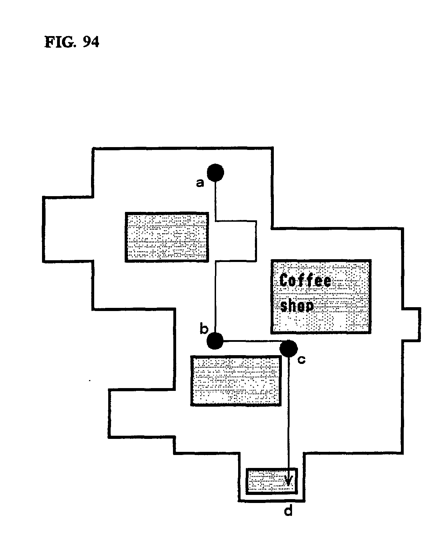

The processing in the route informa tion generation means 814 will be descri bed according to the processing shown in Fig. 83. A case is considered where the outermost polygon, the facilities A, B and C are arranged, and the route netw ork winds in front of the facilities A as in Fig. 89. When the positional information detected by the position detection apparatus 820 is passed from the portable terminal 830 of Fig. 80 to the position determination means 811 of the route guidance apparatus 810, the route information generation means 814 is activated to send the positional information if it is sent from the portable terminal to which the route leading is not performed. When it is sent from the portable terminal to which the route leading is performed, the positional information is sent to the route leading means 81 8. The route information generation means 814 is activated and the positional information of the starting point and the destination is passed from the position determination means 811, and reads the data related to the map from the map database 840 and the data to generate an amount for guidance from the guidance sentence database 860 (180 0). The positiona l information of a starting point a and a dest ination d is passe d to the route sea rch means 970, and the route search is performed to receive a node row of a, b, c and d on the route (1810). The starting point a is set as the guidance point (1815). The visible region from the guidance point a is computed by the visible region calculation means 971 as in Fig. 90, the mark extraction means 981 finds the facilities A, B and C that are within the visible region by tracing the pointers of the polygonal line, and the node b which has not been reached on the route within the visible region is obtaine d (1820). Whethe r or not the dest ination d is within the visible region is determined (1825). Since it is not within the visible region, appropriate facilities that is the facilities C, which is the facilities adjacent to the visible region and farthest from a on the route, is selected to store as the mark in this case, and the node b on the mute nearest from the mark C is set as the next guidance point (1830), for example. The visible region calculation means 971 finds the visible region from the guidanc e point b as in Fig. 91, the mark extraction means 981 finds the facilities A, B and C that are within the visible region by tracing the pointe rs of the polygonal line, and the node c which has not been reached on the route within the visible region is obtained (1820) . Whether or not the destin ation d is within the visible regi on (1825). Since it is not within the visible region, appropriate facilities that is the facilities B, which, is the facilities adjacent to the visible region and farthest from b on the route, is selected to store as the mark in this case, and the node c on the route neare st from the mark B is set as the nex t guidance point (1830), for example. The visible region calculation means 971 finds the visible region from the guidanc e point c as in Fig. 92, the mark extract ion means 981 finds the facilities A, B a nd C that are wit hin the visible r egion by tracing the pointers of the polygonal line, and the node d which has not been reached on the route within the visible region is obtained (1820). Whether or not the destination d is within the visible regio n (1825) is determ ined. Since d is within the visible region, facilities' name X of the marks C and B extracted, 'kiosk' and 'coffee shop' for example, and typical points of the fac ilities are found from the map dat abase 840 after storing D as the mark, a traveling direction Z at the nodes. that is, corners b and c are found as left turn and right turn respectively from the coordinate data of the nodes a, b, c and d. Further, a positional relation Y with the corresponding marks C and B is found as ahead and right from the coordinate data of the typica l points and the coordinate data of the nodes (1835). The guidance map generati on means 184 gene rates the maps for guidance , which, correspond to the facilities, as in Fig. 93 and Fig. 94, and they are arranged in the rou te order, that is, in this order (1840). The guidance sentence synthesis means 183 select s the guidance sentence template in the guidance sentence database in accordance with types of the variables, which are the facili ties name, the traveling direction, and the node position in this case, insert s the data of the marks and the direction found in (1835) into 'Z at Y of X' to generate the guidance sentenc es such as 'Left turn at the front of the kios k' and 'Right tur n at the right of the coffee shop' (1835), and arranges them in the route order, that is, in this order (1845). The route guidance sentence generated and the map for route guidance are output to the route information database 850.

### (Embodiment 26)

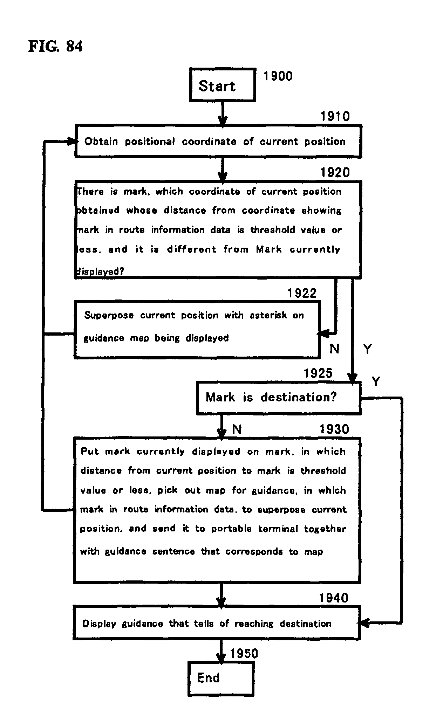

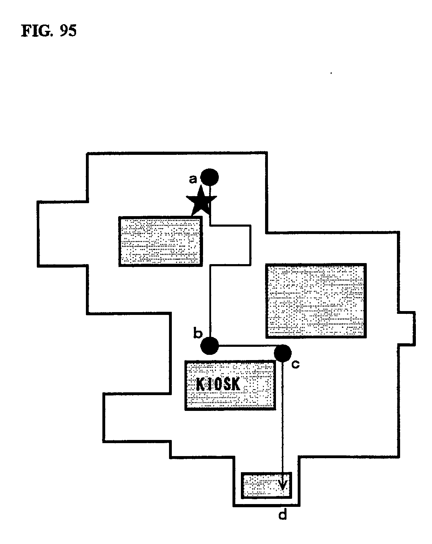

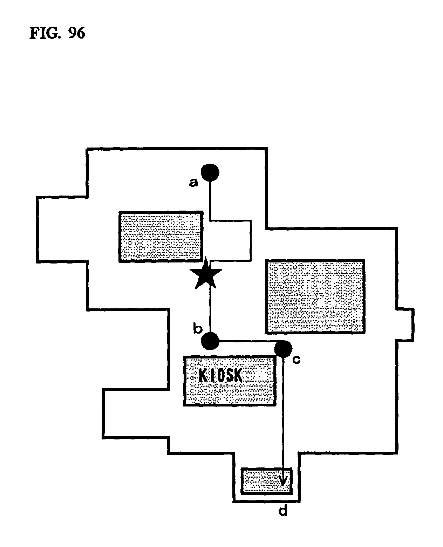

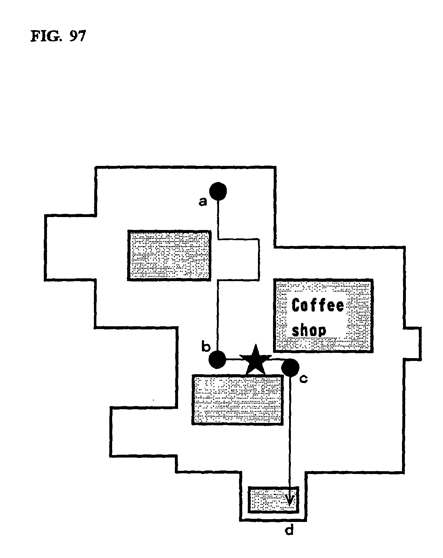

The processing in the route leading means 818 wil l be described according to the processing shown in Fig. 84. A case is considered whe re leading is perf ormed on the route generated in embodiment 25. At the point when the leading begins, Fig. 93 and a corresponding guidance sentence are display ed, a mark currently displayed is applied to the mark C. When the positional information detected by the position detection apparatus 820 is passed from the portable terminal 830 of Fig. 80 to the position determination means 811 of the route guidance apparatus 810, the positional info rmation is sent to the route leading means 818 if it is sent from the portable terminal to which the route guidance is perfor med. When the rou te leading means 818 is activated (1900), the positional coordinate shown by an asterisk of Fig. 95 is obtai ned as the positi on of the portable terminal 830 from the position determination means 811 (1910). Referrin g to the map database 840, since there is no mark in which the positional coordinate obtained has the distance from the coordinates of the nodes showing the marks in the route information data, which becomes a thresh old value (10 meters for example) or less (1920), the map Fig. 93 currently displayed is superposed by the current position with the asterisk, and it is displayed on the portable terminal 830 as in Fig. 95 (19 22). The current positional information is obtained as the position of the portable terminal 830, the positional coordinate shown by the asterisk of Fig. 96 from the position determination means 811 (1910). Referring to the map database 840, since there is no mark in which the positional coordinate obtained has the distance from the coordinates of the nodes showing the marks in the route information data, which becomes the thres hold value or less (1920), the map Fig. 93 currently displayed is superposed by the current position with the asterisk, and it is displayed as in Fig. 96 (1922). The current positional information is obtained as the position of the portable terminal 830, the positional coordinate shown by the asterisk of Fig. 97 from the position determination means 811 (1910). Refer ring to the map database 840, there is a mark c in which the pos itional coordinate obtained has the distance from the coordinates of the nodes showing the marks in the route information data, which becomes the threshold value or less, it is different from the mark C curr ently displayed (1920), and the mark B is not the destination (1925), therefore, a mark currently displayed is applied to the mark B and the map for guidance Fig. 94, in which the mark B in the route information database 850 is displayed, is brought out and the current position is super posed, and it is sent to the portable terminal 830 together with the guidance sent ence that corresponds to the map (1930). Here inafter, as it is similarly performed and the portable terminal approaches the destination, the destination D becomes the mar k (1920), therefo re, the mark is determined as the destinatio n (1925), a messag e that tells of reaching the destination is sent (1940), and the processing ends (1950).

As described, the present invent ion has effects that performing an appropriate route guidance even in the open space is made possible by guiding the si gnpost or the des tination to the user in the open space and tha t it is made possible even in the portals terminal of low resolution by the frame view, the illustration image or the binar y image, where the direction is made constant in the route guidance in the premi ses, which has been hard to understand in a conventional frame view, regardless of how the route diagram is drawn in the open space, or without re-editing the route to the point to be guided even when a large number of destinations are in the open space. Further, in performing the route 1 eading by setting the tag detection as a trigger, provision of the appropriate route information is made possible eve n in the case of causing a position detection error involved with the range where the radio wave reache s from the tag and when tag reading means fail to read the tag, or the like.

The present invention is one to provide the route information easy for a person with normal vision to understand regardless of the state of the rou te network by for ming the visible region in a high-speed and providing the mark seen by eyes when the user moves on the route based on the visib le region formed. Note that the present inven tion is applicabl e not only in the premises but also outside if the region is compartmentalized to constitute the outermost polygon.

## Claims

1. A route guidance apparatus, which is comprised of: position determination means that detects a current position of a user; visible region calculation means that calculates a range where the user can see from the current position detected; route search means that searches a route from a starting point to a destination; traveling direction calculation means that calculates a traveling direction from a visible region and the route; signpost extraction means that extracts a signpost to be guided from the visible region; and route guidance sentence generation means that generates a route guidance sentence of the route found.

2. A route guidance apparatus, which is comprised of: position determination means that detects a current position of a user; visible region calculation means that calculates a range where the user can see from the current position detected; route search means that searches a route from a starting point to a destination; traveling direction calculation means that calculates a tray direction direction from a visible region and the route; mark extraction means that extracts a mark to be guided from the visible region; image data retrieval means that retrieves binary image data or illustration image data, which are specified to guide a point to pass on said route; guidance sentence synthesis means for synthesizing a guidance sentence to guide the point to pass.

3. A route guidan ce apparatus, which is comprised o f: route search means that searches a route from a starting point to a destination; first frame map gener ation means that cuts out points to pass from map data in a size, which can be displayed on a display scre en of a portable terminal, in orde r to guide the point to pass, and cuts out such that connection points of the route in each of frames match in cutting out ; guidance sentence synthesis means that synthesizes a guidance sentence to guide the point to pass.

4. A route guidance apparatus, which is comprised o f: route search means that searches a route from a starting point to a destination; second frame map generation means that cuts out point to pass from map data in a size, which can be displayed on a display screen of a portable terminal, in order to guide the point to pass , and cuts out such that the route in each of frames is display ed in the center of the screen in cutting out; guidance sentence synthesis means that synthesizes a guidance sentence to guide the point to pass.

5. A route guida nce apparatus of claim 3 or 4, wherein the guidance sentence synthesis mean s synthesizes a guidance sentence using a moving direction of a user as a reference in order to guide point to pass.

6. A route guidance apparatus of claim 3 or 4, wherein the guidance sentence synthesis mean s synthesizes a guidance sentence using a railway direction as a reference in order to guide point to pass on a platform of a train station.

7. A route guidance apparatus of claim 3 or 4, wherein the guidance sentence synthesis means does not perform guidance to turn right/left at a first directio n turning point taking into consideration an error of position determination me ans at a starting point when the starting point is near the point where a direction turn is made for the first time, but guides a mark showing a direction turning direction from the direction turning point and performs guidance to turn right/left from a second direction turning point.

8. A route guida nce apparatus of claim 3 or 4, wherein the guidance sentence synthesis means provides informat ion of a route such that it guides positiona l information of a vicinity of a tag when it detects the tag for a vision-impaired person, in guidance regar ding the route, guidance sentences regarding made information along the route, which are severally punctuated by punctuations, are arranged in a route order and a user performs a button operation for each guidance sentence to read out the sentences sequentially.

9. A route guidanc e apparatus accor ding to claim 1, comprising: route leading mea ns that displays a frame view, a bi nary image or an illustration image, which co rresponds to a ta g, and a route guidance sentence on a termi nal or reads out a guidance sentence, synchronously with detecting a tag placed in premises.

10. A route guidance apparatus according to claim 1, comprising: route leading means that displays a frame view, a binary image or an illustration image, which corresponds to a tag, and a route guidance sentence on a terminal or reads out a guidance sentence, in accordance with input of the user.

11. A route guidan ce apparatus, whi ch is comprised of : position determination means that detects a current position of a user; visible region calculation means that calculates a visible region which is a range where the user can see from the current position detected; route search me ans that searches a route from a starting p oint to a destina tion; traveling d irection calculation means that calculates a traveling direction from the visible regio n and the route; mark extraction means that extracts a mark to be guided from the visible region; and guidance sentence generation mea ns that generate s a route guidance sentence of the route found.

12. A route guida nce apparatus according to claim 11 wherein when an intersecting point exists between the route searched by said route search means and a boundary of the visible region calculated by said visible region calculation means, the traveling direction calculation means calculates a direction of the intersectin g point as a traveling direction, and the mark extraction means extracts a mark seen from said user in a direction that ex ists within a vis ible region calcu lated by said visible region calculation means and that is near the direction calculated by said travel ing direction calculation.

13. A route guidan ce apparatus, which is comprised of : position determination means that detects a current position of a user; visible region calculation means that calculates a range where the user can see from the current position detected; route search means that searches a route from a starting point to a destination; traveling direction calculation means that calculates a trav eling direction from a visible regi on and the route; mark extra ction means that extracts a mark to be guided from the visible region; image data search means that searches viewpoint image data specified in order to guide point to pass on said route; and guidance sent ence generation means for generating a guidance sentence in order to guide the point to pass.

14. A route guida nce apparatus, which is comprised of: route search means that searches a route from a starting point to a destination; and first frame map generation means that cuts out a map around a point to pass as a frame from a map database in order to guide the point to pass, and cuts out each frame such that a part of the route in each fra me overlaps in cut ting out; and guidance sentence generation means that generates a guidance sentence to guide the point to pass.

15. A route guida nce apparatus, which is comprised of: route search means that searches a route from a starting point to a destination; second frame map generation means that cuts out a map around a point to pass as a frame from a map database in order to guide the point to pass, and cuts out such that the route in each frame is displayed in the center of a screen in cutting out; and guidance sentence generation means that generates a guidance sentence to guide the point to pass.

16. A route guidance apparatus acc ording to any one of claims from claim 11 to claim 15, where in the guidance sentence generation means generates the guidance sentence using a moving direction of the user as a reference in order to guide the point to pass.

17. A route guidance apparatus according to any one of claims from claim 11 to claim 15, wherein in the case where the route guidance apparatus guides a route passing the points in a platform of train station premises, said guidance sentence generation means generates the guidance sentence using a direction of a railway for the user in the train station platform as a reference in order to guide the point to pass.

18. A route guidance apparatus according to any one of claims from claim 11 to claim 15, where in the guidance sentence generation means does not perform guidance to turn right/left at a first direct ion turning point when the starting point is near the point whe re a direction tur n is made for the first time but generates the guidance sentence of a mark showing a direction of turning direction at the direction turning point.

19. A route guida nce apparatus according to any one of claims from claim 11 to claim 15, comprisi ng: tag detection means that detects a tag, and **characterized in that** the guidance sentence generation means generates the guidance sentence that guides positional information near the tag detected by the tag detection means.

20. A route guidance apparatus acc ording to any one of claims from claim 11 to claim 15, where in the guidance sentence generation means has a guidance sentence request acceptance function that accepts a guidance sentence reques t being a request for readi ng out the guidanc e sentence, and the guidance sentence generation means arranges the guidance sen tences for each of mark infor mation along the route in the route order and reads out each guidance sentence sequentially when it accepts a guidance sentence request based on the guidance sentence request acceptance function.

21. A route guidance apparatus according to claims 19 wherein the apparatus arr anges the guidanc e sentences for ea ch of mark information along the route in the route order and reads out each guidance sentence sequentially, synchronously with detecting the tag by the tag detection means.

22. A route guida nce apparatus according to any one of claims from claim 11 to claim 15, where in the guidance sentence generation means has a user characteristic information acceptance function that acce pts user characteristic information being information regarding a user's characteristic, and the guidance sentence genera tion means provides route information in accordance with user characteristic information accepted based on the user characteristic information acceptance function.

23. A route guida nce apparatus acc ording to any one of claims from claim 11 to claim 15, where in the guidance sentence generation means in the case wher e the user charac teristic information accepted based on the user charac teristic information acceptance function shows that the user is a vision-impaired person, said gui dance sentence generation means arranges the guidance sentence s for each mark inf ormation along the route in the route order and reads out each guidance sentence sequentially.

24. A route guida nce apparatus acc ording to any one of claim 11 and claim 13, comprising: tag detection means that detects tags placed in premises; and route leading means that displays a frame view or a viewpoint image, which correspond s to a tag position, and the guidance sentence or reads out the guidance sentence, synchronously with detecting the tag by the tag detection means.

25. A route guidance apparatus according to claim 11 or claim 13, wherein the position detection means detects the current position of the user by a tag, whi ch comprises: user request obtaining means that obtains a user's request; and route leading means tha t displays a fram e view or a viewpo int image, which corresponds to the tag, and the guidance sent ence on a terminal or reads out the guidance sentence in a route order in accordance wit h the user's requ est obtained by s aid user request obtaining means.

26. A visible region calculator, wherein, in the case where a viewpoint and one or a plurality of polygons are in one polygon, a visible region from the viewpoint regarding an outermost polygon is comput ed first, an area seen from the view point only for each polygon is computed next as in a row of contin uous line segments regarding the polygons other than the outermost polygon, the row of the line segments computed is arranged in an argument order, an area of the line segment seen from the viewpoint is computed in an arrangement order taking in consideration a positional relation of the row of the line segments with a visible region gene rated at the point where the processing of the row of the line segments and a previous row of line segments ends, and the range seen from the viewpoint is calculated by the processing to find a new visib le region by connecting the area computed and the visible region.

27. A visible region calculator that calculates a range seen from a viewpoint in the case where the viewpoint and one or a plurality of polygons are in an outermost polygon having the following configuration: a) an outermost visible regio n calculation section that finds a visible polygon being a range seen from the viewpoint inside the outermost polygon and calculates a first temporary visible polygon; b) a visible polygonal line calculation section that computes a visible polygonal line being a part seen from said viewpoint of the polygon regarding each polygon inside the outermost polygon; c) a visible polygonal line rearrangement section that arranges the visible polygonal lines in the order of the argument of a visible limit point, which has a smaller argument b etween a reference line that is a half line drawn from the viewpoint and the end points of the visible polygonal line; d) a temporary visible polygon update section that performs the following processing 1 and 2 regarding the visible polygonal line in an arrangement order: 1) the processing where, when both ends of the visible polygonal line are set as A and B, wherein A is set as the visible lim it point, in the case where A and B are inside the temporary vis ible polygon, hal f lines severally passing A and B are drawn f rom the viewpoint to the temporary visible polygon, A' and B ' that are inters ecting points bet ween the visible lines and the temporary visible polygon are computed, an area of the side from A' to B' of the temporary visible polygon is removed, and A' to A, A to B and B to B' are sequentially connected to form a new temporary visible polygon; and 2) the process ing where, in the case where A is outside the temporary visible polygon and B is inside, an intersecting point C between the visible polygo nal line and the temporary visible polygon is computed, the visible line being the half line passing B is drawn from the viewpoint, B' being the intersecting point with the temporary visible polygon is opted, an area of the side from C to B' of the temporary visible polygon is removed, and C to B, and B to B' are sequentially connected to form a new temporary visible polygon.

28. A visible region calculation program for calculating a range seen from a viewpoint in the case where the view point and one or a pluralit y of polygons are in an outermost polygon. wherein it allows a computer to execute the following steps: a) an outermost visible region calc ulation step wher e a visible polygon being a range seen from the viewpoint inside the outermost polygon is computed and a first temporary visible polygon is calculated; b) a visible polygonal line calculation step in which a visible polygonal line being an area seen from said viewpoint of the polygon is computed regarding each polygon inside the outermost polygon; c) a visible polygonal line rearrangement step where the visible polygonal lines are arranged in the order of the arguments of a visible limit point, which has a smaller argument between a reference line that is a half line drawn from the viewpoint and the end points of the visible polygonal line; d) a temporary visible polygon update step where the following processing 1 and 2 is performed regarding the visible polygonal line in an arrangement order: 1) the processing where, when both ends of the visible polygonal line are set as A and B, wherein A is set as the visible limit point, in the case where A and B are inside the temporary visible polygon visible lines that are half lines severally passing A and B are drawn from the viewpoint to the temporary polygon, A' and B' that are the intersecting points between the visible lines and the temporary polygon are computed, an area of the side from A' to B' of the temporary visible polygon is removed, and A' to A, A to B, and B to B' are sequentially con nected to form a new temper ary visible polyg on; and 2) the processing where, in the cas e where A is outs ide the temporary visible polygon and B is inside, an inters ecting point C be tween the visible polygonal line and the tem porary visible po lygon is computed, the vis ible line being t he half line pass ing B is drawn from the viewpoint, B' being the intersecting point with the temporary visible polygon is computed, an area of the side from C to B' of the temporary visi ble polygon is removed, and C to B and B to B' are sequentially connected to form a new temporary visible polygon.

29. A route infor mation generator, comprising: visi ble region calculation means that calculates a range seen from a user; route search means that searches a route from a point where the user is now or a starting point that the user enters to a destination that the user enters; mark extraction means that extracts a mark to be guided out of a visible region from a current position or a point where guidance is given; guidance map generation means that generates a map for the route guidance, on which said route, the mark extracted, the current position and the point where the guidance is given are displayed; and guidance sentence generation means that generates a guidance sentence of the route.

30. A route information generator according to claim 29, **characterized in that** it uses the visible region calculator according to claim 26 or claim 27 as the visible region calculation means.

31. A route guidance system, comprising: a route guidance apparatus having the route information generator according to claim 29 or claim 30 and position determination means that detects a current position of a terminal; a route information database that accumulates information regarding a route obtained; a terminal that displays route guidance information; a position detection apparatus that obtains current positinal information; a map database that accumulates map data; and a guidance sentence database to accumulate data for generating a guidance sentence.

32. A route leadi ng unit to allow a terminal to disp lay a mark on a map to lead a user, wherein it obtains a current position of the terminal at a predetermined time interval, and switches the map displayed on the terminal to a map on which the next mark in route data is displayed when it detects approach a mark that exists in the mute data.

33. A route guidance apparatus according to claim 11, wherein the position dete rmination means obtains the curren t position of the terminal at a predetermined time interval , and the guidance sentence generation means generates the guidance sentence of the route regarding the next mark to the terminal when it detects approach to a mark that exists in t he mute searched by the route search means.

34. A route guidance system, comprising: a route guidance apparatus having the route leading apparatus according to claim 32 and position determination means that detects a current position of a terminal; a route information database that accumulates information regarding a route obtained; a terminal that displays route guidance information; a position detection apparatus that obtains current positional information; a map database that accumulates map data ; and a guidance sentence database that accumulate data for generating a guidance sentence.

35. A route guidance system, comprising: a route guidance apparatus having the route information generator according to claim 29 or claim 30, the route leading unit according to claim 32, and position determination means that detects a current position of a terminal; a route information database that accumulates information regarding a route obtained; a terminal that displays route guidance information; a position detection apparatus that obtains current positional information; a map database that accumulates map data ; and a guidance sentence database that accumulate data for generating a guidance sentence.
